# EUROPEAN PATENT APPLICATION

(11) **EP 4 811 699 A1**
(43) Date of publication of application: **23.09.2026**
(21) Application number: 24890716.4
(22) Date of filing: 13.11.2024
(51) Int. Cl.: H04L 5/00

(54) **INFORMATION TRANSMISSION METHOD AND APPARATUS, AND DEVICE**

(30) Priority: 17.11.2023 CN 202311535104
(71) Applicant: Datang Mobile Communications Equipment Co., Ltd., Beijing 100085 (CN)
(72) Inventor: YE, Lingyun, Beijing 100085 (CN); GAO, Qiubin, Beijing 100085 (CN); LI, Hui, Beijing 100085 (CN)
(74) Representative: Studio Torta S.p.A.
(86) International application number: PCT/CN2024/131768
(87) International publication number: WO 2025/103361

(57) **Abstract**

This application provides an information transmission method, an apparatus, and a device. The information transmission method includes: determining target configuration information according to a selected CSI-RS pattern; transmitting the target configuration information to a terminal; wherein a number of ports corresponding to the CSI-RS is greater than 32; the CSI-RS pattern is a pattern located in one or two slots in time domain and in one or two PRBs in frequency domain; the CSI-RS pattern is obtained by aggregating, through TDM and/or FDM, at least one CDM type pattern; the CDM type includes at least one of the following: a 16-port pattern type, a 32-port pattern type, an 8-port pattern type, a 4-port pattern type, and a 2-port pattern type; the target configuration information includes: the number of antenna ports, density information, CDM type information, CDM group frequency-domain position indication information, and CDM group time-domain position indication information; one CDM group corresponds to one CDM type.

## Description

### CROSS-REFERENCE TO RELATED APPLICATIONS

This application claims priority to Chinese Patent Application No. 202311535104.8 filed in China on November 17, 2023, entitled "INFORMATION TRANSMISSION METHOD, APPARATUS, AND DEVICE", the entire contents of which are incorporated herein by reference.

### TECHNICAL FIELD

The present disclosure relates to the field of communication technology, and in particular to an information transmission method, apparatus, and device.

### BACKGROUND

The performance of massive Multiple Input Multiple Output (MIMO) depends on the number of antennas, and a larger antenna array and more radio frequency links can bring better performance. At present, one Channel State Information-Reference Signal (CSI-RS) resource supports a maximum of only 32 antenna ports. With an increase of antenna sub-arrays in an antenna array, it will be required to support a CSI-RS resource greater than 32 ports for channel measurement. Considering extending the number of antenna ports of one CSI-RS resource to be greater than 32 ports will be beneficial to system performance.

However, a current New Radio (NR) system does not support a CSI-RS resource greater than 32 ports, and therefore, there is still no standardized solution for the following contents:

how to design a CSI-RS pattern greater than 32 ports, that is, distribution of Resource Elements (REs) occupied by the CSI-RS pattern in one or two slots and one or two physical resource blocks (PRBs).

Based on the above, in related technologies, transmission of related information corresponding to the CSI-RS pattern greater than 32 ports cannot be implemented.

### SUMMARY

The present disclosure is to provide an information transmission method, apparatus, and device, so as to solve a problem that, in related technologies, transmission of related information corresponding to a CSI-RS pattern greater than 32 ports cannot be implemented.

An embodiment of the present disclosure provides an information transmission method, applied to a network device, and including:
determining target configuration information according to a selected Channel State Information-Reference Signal (CSI-RS) pattern;
sending the target configuration information to a terminal;
wherein a number of ports corresponding to the CSI-RS is greater than 32;
the CSI-RS pattern is a pattern located within one or two slots in time domain and within one or two Physical Resource Blocks (PRBs) in frequency domain; the CSI-RS pattern is obtained by aggregating at least one Code Division Multiplexing (CDM) type pattern in a manner of Time Division Multiplexing (TDM) and/or Frequency Division Multiplexing (FDM); the CDM type includes at least one of the following:
   a 16-port pattern type, a 32-port pattern type, an 8-port pattern type, a 4-port pattern type, and a 2-port pattern type;
   the target configuration information includes: number of antenna ports, density information, CDM type information, CDM group frequency-domain position indication information, and CDM group time-domain position indication information; one CDM group corresponds to one CDM type.

An embodiment of the present disclosure further provides an information transmission method, applied to a terminal, and including:
receiving target configuration information sent by a network device;
determining a selected CSI-RS pattern according to the target configuration information;
wherein a number of ports corresponding to the CSI-RS is greater than 32;
the CSI-RS pattern is a pattern located within one or two slots in time domain and within one or two PRBs in frequency domain; the CSI-RS pattern is obtained by aggregating at least one CDM type pattern in a manner of TDM and/or FDM; the CDM type includes at least one of the following:
   a 16-port pattern type, a 32-port pattern type, an 8-port pattern type, a 4-port pattern type, and a 2-port pattern type;
   the target configuration information includes: number of antenna ports, density information, CDM type information, CDM group frequency-domain position indication information, and CDM group time-domain position indication information; one CDM group corresponds to one CDM type.

An embodiment of the present disclosure further provides an information transmission apparatus, wherein the information transmission apparatus is a network device, and includes a memory, a transceiver, and a processor:
the memory is configured to store a computer program; the transceiver is configured to receive and send data under control of the processor; and the processor is configured to read the computer program stored in the memory and perform the following operations:
determining target configuration information according to a selected Channel State Information-Reference Signal (CSI-RS) pattern;
sending the target configuration information to a terminal through the transceiver;
wherein a number of ports corresponding to the CSI-RS is greater than 32;
the CSI-RS pattern is a pattern located within one or two slots in time domain and within one or two Physical Resource Blocks (PRBs) in frequency domain; the CSI-RS pattern is obtained by aggregating at least one Code Division Multiplexing (CDM) type pattern in a manner of Time Division Multiplexing (TDM) and/or Frequency Division Multiplexing (FDM); the CDM type includes at least one of the following:
   a 16-port pattern type, a 32-port pattern type, an 8-port pattern type, a 4-port pattern type, and a 2-port pattern type;
   the target configuration information includes: number of antenna ports, density information, CDM type information, CDM group frequency-domain position indication information, and CDM group time-domain position indication information; one CDM group corresponds to one CDM type.

An embodiment of the present disclosure further provides an information transmission apparatus, wherein the information transmission apparatus is a terminal, and includes a memory, a transceiver, and a processor:
the memory is configured to store a computer program; the transceiver is configured to receive and send data under control of the processor; and the processor is configured to read the computer program stored in the memory and perform the following operations:
receiving, through the transceiver, target configuration information sent by a network device;
determining a selected CSI-RS pattern according to the target configuration information;
wherein a number of ports corresponding to the CSI-RS is greater than 32;
the CSI-RS pattern is a pattern located within one or two slots in time domain and within one or two PRBs in frequency domain; the CSI-RS pattern is obtained by aggregating at least one CDM type pattern in a manner of TDM and/or FDM; the CDM type includes at least one of the following:
   a 16-port pattern type, a 32-port pattern type, an 8-port pattern type, a 4-port pattern type, and a 2-port pattern type;
   the target configuration information includes: number of antenna ports, density information, CDM type information, CDM group frequency-domain position indication information, and CDM group time-domain position indication information; one CDM group corresponds to one CDM type.

An embodiment of the present disclosure further provides an information transmission apparatus, applied to a network device, and including:
a first determining unit, configured to determine target configuration information according to a selected Channel State Information-Reference Signal (CSI-RS) pattern;
a first sending unit, configured to send the target configuration information to a terminal;
wherein a number of ports corresponding to the CSI-RS is greater than 32;
the CSI-RS pattern is a pattern located within one or two slots in time domain and within one or two Physical Resource Blocks (PRBs) in frequency domain; the CSI-RS pattern is obtained by aggregating at least one Code Division Multiplexing (CDM) type pattern in a manner of Time Division Multiplexing (TDM) and/or Frequency Division Multiplexing (FDM); the CDM type includes at least one of the following:
   a 16-port pattern type, a 32-port pattern type, an 8-port pattern type, a 4-port pattern type, and a 2-port pattern type;
   the target configuration information includes: number of antenna ports, density information, CDM type information, CDM group frequency-domain position indication information, and CDM group time-domain position indication information; one CDM group corresponds to one CDM type.

An embodiment of the present disclosure further provides an information transmission apparatus, applied to a terminal, and including:
a first receiving unit, configured to receive target configuration information sent by a network device;
a second determining unit, configured to determine a selected CSI-RS pattern according to the target configuration information;
wherein a number of ports corresponding to the CSI-RS is greater than 32;
the CSI-RS pattern is a pattern located within one or two slots in time domain and within one or two PRBs in frequency domain; the CSI-RS pattern is obtained by aggregating at least one CDM type pattern in a manner of TDM and/or FDM; the CDM type includes at least one of the following:
   a 16-port pattern type, a 32-port pattern type, an 8-port pattern type, a 4-port pattern type, and a 2-port pattern type;
   the target configuration information includes: number of antenna ports, density information, CDM type information, CDM group frequency-domain position indication information, and CDM group time-domain position indication information; one CDM group corresponds to one CDM type.

An embodiment of the present disclosure further provides a non-transitory readable storage medium, wherein the non-transitory readable storage medium stores a computer program, and the computer program is configured to cause a processor to execute the foregoing method on a network device side or a terminal side.

Beneficial effects of the above technical solutions of the present disclosure are as follows:
in the above solutions, the information transmission method includes: determining target configuration information according to a selected Channel State Information-Reference Signal (CSI-RS) pattern; sending the target configuration information to a terminal; wherein a number of ports corresponding to the CSI-RS is greater than 32; the CSI-RS pattern is a pattern located within one or two slots in time domain and within one or two Physical Resource Blocks (PRBs) in frequency domain; the CSI-RS pattern is obtained by aggregating at least one Code Division Multiplexing (CDM) type pattern in a manner of Time Division Multiplexing (TDM) and/or Frequency Division Multiplexing (FDM); the CDM type includes at least one of the following: a 16-port pattern type, a 32-port pattern type, an 8-port pattern type, a 4-port pattern type, and a 2-port pattern type; the target configuration information includes: number of antenna ports, density information, CDM type information, CDM group frequency-domain position indication information, and CDM group time-domain position indication information; one CDM group corresponds to one CDM type; and related information transmission corresponding to a CSI-RS pattern greater than 32 ports can be supported and implemented.

### BRIEF DESCRIPTION OF THE DRAWINGS

FIG. 1 shows a schematic diagram of a wireless communication system architecture according to an embodiment of the present disclosure;
FIG. 2 shows a schematic diagram of a CDM pattern according to an embodiment of the present disclosure;
FIG. 3 shows a first schematic flow chart of an information transmission method according to an embodiment of the present disclosure;
FIG. 4 shows a second schematic flow chart of an information transmission method according to an embodiment of the present disclosure;
FIG. 5 shows a first schematic diagram of a CSI-RS pattern according to an embodiment of the present disclosure;
FIG. 6 shows a second schematic diagram of a CSI-RS pattern according to an embodiment of the present disclosure;
FIG. 7 shows a third schematic diagram of a CSI-RS pattern according to an embodiment of the present disclosure;
FIG. 8 shows a first schematic structural diagram of an information transmission device according to an embodiment of the present disclosure;
FIG. 9 shows a second schematic structural diagram of an information transmission device according to an embodiment of the present disclosure;
FIG. 10 shows a first schematic structural diagram of an information transmission apparatus according to an embodiment of the present disclosure;
FIG. 11 shows a second schematic structural diagram of an information transmission apparatus according to an embodiment of the present disclosure.

### DETAILED DESCRIPTION

The technical solutions in embodiments of the present disclosure will be clearly and completely described below with reference to the accompanying drawings in the embodiments of the present disclosure. Apparently, the described embodiments are merely a part of embodiments of the present disclosure, rather than all embodiments of the present disclosure. Based on the embodiments in the present disclosure, all other embodiments obtained by those of ordinary skill in the art without creative efforts shall fall within the protection scope of the present disclosure.

In the embodiments of the present disclosure, the term "and/or" describes an association relationship of associated objects, and indicates that three relationships may exist. For example, A and/or B may indicate: A exists alone, A and B exist simultaneously, and B exists alone. The character "/" generally indicates that associated objects before and after the character are in an "or" relationship.

In the embodiments of the present disclosure, the term "a plurality of" means two or more, and other quantifiers are similar thereto.

It should be noted herein that, the technical solutions provided in the embodiments of the present disclosure may be applied to various systems, especially a 5th-Generation (5G) system. For example, applicable systems may be a Global System of Mobile communication (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, and the like. These various systems each include a terminal device and a network device. The systems may further include a core network part, for example, an Evolved Packet System (EPS), a 5G System (5GS), and the like.

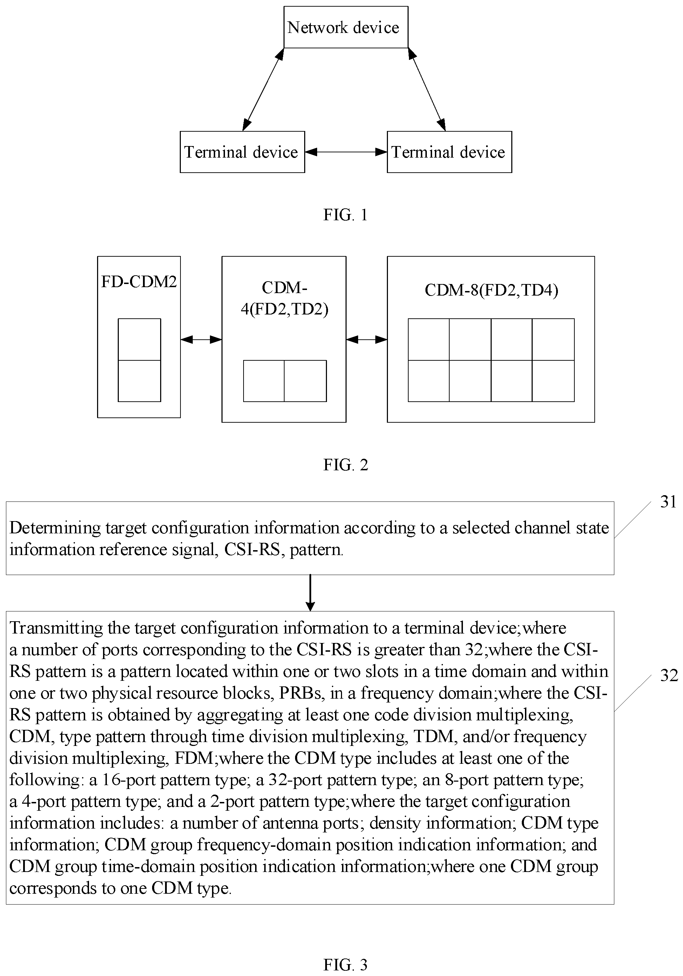

FIG. 1 shows a block diagram of a wireless communication system to which the embodiments of the present disclosure may be applied. The wireless communication system includes a terminal device (which may also be referred to as a terminal for short) and a network device.

The terminal device involved in the embodiments of the present disclosure may refer to a device providing voice and/or data connectivity for a user, a handheld device having a wireless connection function, or another processing device connected to a wireless modem, and the like. In different systems, the terminal device may have different names. For example, in a 5G system, the terminal device may be referred to as User Equipment (UE). The wireless terminal device may communicate with one or more Core Networks (CNs) through a Radio Access Network (RAN). The wireless terminal device may be a mobile terminal device, such as a mobile phone (or referred to as a "cellular" phone) and a computer having the mobile terminal device, for example, may be a portable, pocket-sized, handheld, computer-built-in, or vehicle-mounted mobile apparatus, which exchanges voice and/or data with the wireless access network. For example, the device may be a Personal Communication Service (PCS) phone, a cordless phone, a Session Initiated Protocol (SIP) phone, a Wireless Local Loop (WLL) station, a Personal Digital Assistant (PDA), and the like. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present disclosure.

The network device involved in the embodiments of the present disclosure may be a base station, and the base station may include a plurality of cells providing services for a terminal. According to different specific application scenarios, the base station may also be referred to as an access point, or may be a device in an access network communicating with a wireless terminal device through one or more sectors on an air interface, or may have other names. The network device may be configured to mutually convert a received air frame and an Internet Protocol (IP) packet, and serve as a router between the wireless terminal device and the rest of the access network, wherein the rest of the access network may include an Internet Protocol (IP) communication network. The network device may further coordinate management of attributes of the air interface. For example, the network device involved in the embodiments of the present disclosure may be a Base Transceiver Station (BTS) in a Global System for Mobile communications (GSM) or Code Division Multiple Access (CDMA), may also be a NodeB in Wide-band Code Division Multiple Access (WCDMA), may further be an evolutional Node B (eNB or e-NodeB) in a Long Term Evolution (LTE) system, a 5G base station (gNB) in a 5G network architecture (next generation system), and may also be a Home evolved Node B (HeNB), a relay node, a femto, a pico, and the like, which is not limited in the embodiments of the present disclosure. In some network architectures, the network device may include a centralized unit (CU) node and a distributed unit (DU) node, and the centralized unit and the distributed unit may also be geographically separately arranged.

The network device and the terminal device may each use one or more antennas for Multi Input Multi Output (MIMO) transmission, and the MIMO transmission may be Single User MIMO (SU-MIMO) or Multiple User MIMO (MU-MIMO). According to forms and numbers of antenna combinations, the MIMO transmission may be 2Dimension MIMO (2D-MIMO), 3Dimension MIMO (3D-MIMO), Full Dimension MIMO (FD-MIMO), or massive-MIMO, and may also be diversity transmission, precoding transmission, beamforming transmission, and the like.

The content involved in the solutions provided in the embodiments of the present disclosure will be introduced first below.

At present, the numbers of ports supported by an NR system are: 1, 2, 4, 8, 12, 16, 24, and 32.

Wherein, NR defines three CDM patterns, namely, Code Division Multiplexing (CDM)-2, CDM-4, and CDM-8. Specifically, as shown in FIG. 2, FD indicates frequency division; and TD indicates time division.

Specifically, Resource Elements (REs) occupied by one CDM pattern constitute one CDM group, and each CDM group may include 2, 4, or 8 ports. In this way, a plurality of ports of the CSI-RS may be distributed in a plurality of CDM groups with a same pattern, that is, port distribution of the CSI-RS may be determined through CDM group aggregation. NR supports a plurality of flexible aggregation schemes, and for a same port configuration, a plurality of CDM group aggregation schemes are supported. NR flexibly supports CSI-RSs with 2 to 32 ports by using CDM group aggregation of the three CDM patterns CDM-2, CDM-4, and CDM-8. The following table shows a configuration relationship between a number of CSI-RS ports and a CDM combination:

| Number of Ports (X) | Density [RE/RB/port] | N (Number of OFDM Symbols) | CDM |
|---|---|---|---|
| 1 | >1, 1, 1/2 | 1 | No CDM |
| 2 | 1, 1/2 | 1 | FD-CDM2 |
| 4 | 1 | 1 | FD-CDM2 |
| 4 | 1 | 2 | FD-CDM2 |
| 8 | 1 | 1 | FD-CDM2 |
| 8 | 1 | 2 | FD-CDM2, CDM4 (FD2,TD2) |
| 12 | 1 | 1 | FD-CDM2 |
| 12 | 1 | 2 | CDM4 (FD2,TD2) |
| 16 | 1, 1/2 | 2 | FD-CDM2, CDM4 (FD2,TD2) |
| 24 | 1, 1/2 | 4 | FD-CDM2, CDM4 (FD2, TD2), CDM8 (FD2, TD4) |
| 32 | 1, 1/2 | 4 | FD-CDM2, CDM4 (FD2, TD2), CDM8 (FD2, TD4) |

Wherein, RE/RB/port in the above table indicates that all occupied REs are divided by a number of RBs corresponding to all the REs, and then divided by a total number of ports port (that is, X).

Based on the above, the embodiments of the present disclosure provide an information transmission method, apparatus, and device, so as to solve a problem that, in related technologies, transmission of related information corresponding to a CSI-RS pattern greater than 32 ports cannot be implemented. Wherein, the method, the apparatus, and the device are based on a same inventive concept. Since principles of the method, the apparatus, and the device for solving problems are similar, implementations of the method, the apparatus, and the device may refer to each other, and repeated descriptions will not be repeated herein.

The information transmission method provided in the embodiments of the present disclosure is applied to a network device. As shown in FIG. 3, the method includes:
Step 31: determining target configuration information according to a selected Channel State Information-Reference Signal (CSI-RS) pattern;
Wherein, the selected CSI-RS pattern may be determined by the network device according to a number of antenna ports, CSI-RS transmission power requirement information, and resource occupation conditions of signals such as a Synchronization Signal Block (SSB) signal, a Demodulation Reference Signal (DMRS), and a Physical Downlink Control Channel (PDCCH) signal, but is not limited thereto. The target configuration information may include any information for assisting a terminal in determining the CSI-RS pattern, for example, a number of antenna ports, and the like.

Step 32: sending the target configuration information to a terminal; wherein a number of ports corresponding to the CSI-RS is greater than 32; the CSI-RS pattern is a pattern located within one or two slots in time domain and within one or two Physical Resource Blocks (PRBs) in frequency domain; the CSI-RS pattern is obtained by aggregating at least one Code Division Multiplexing (CDM) type pattern in a manner of Time Division Multiplexing (TDM) and/or Frequency Division Multiplexing (FDM); the CDM type includes at least one of the following: a 16-port pattern type, a 32-port pattern type, an 8-port pattern type, a 4-port pattern type, and a 2-port pattern type; the target configuration information includes: number of antenna ports, density information, CDM type information, CDM group frequency-domain position indication information, and CDM group time-domain position indication information; one CDM group corresponds to one CDM type.

Wherein, after Step 32, the network device may send the CSI-RS based on the selected CSI-RS pattern; and the terminal may perform CSI-RS reception measurement based on the CSI-RS pattern determined according to the target configuration information; but is not limited thereto. Regarding "sending the target configuration information to a terminal", the target configuration information may be sent periodically, semi-persistently, or aperiodically; sub-information included in the target configuration information is sent together; specifically, the density information may be 1 or 0.5, and the like; the CDM type information is configured to indicate at least one of a 16-port pattern type, a 32-port pattern type, an 8-port pattern type, a 4-port pattern type, and a 2-port pattern type; and Resource Elements (REs) occupied by a pattern of one CDM type constitute one CDM group.

The information transmission method provided in the embodiments of the present disclosure includes: determining target configuration information according to a selected Channel State Information-Reference Signal (CSI-RS) pattern; sending the target configuration information to a terminal; wherein a number of ports corresponding to the CSI-RS is greater than 32; the CSI-RS pattern is a pattern located within one or two slots in time domain and within one or two Physical Resource Blocks (PRBs) in frequency domain; the CSI-RS pattern is obtained by aggregating at least one Code Division Multiplexing (CDM) type pattern in a manner of Time Division Multiplexing (TDM) and/or Frequency Division Multiplexing (FDM); the CDM type includes at least one of the following: a 16-port pattern type, a 32-port pattern type, an 8-port pattern type, a 4-port pattern type, and a 2-port pattern type; the target configuration information includes: number of antenna ports, density information, CDM type information, CDM group frequency-domain position indication information, and CDM group time-domain position indication information; one CDM group corresponds to one CDM type; and related information transmission corresponding to a CSI-RS pattern greater than 32 ports can be supported and implemented.

Wherein, the determining target configuration information according to a selected Channel State Information-Reference Signal (CSI-RS) pattern includes: determining target configuration information according to pattern configuration information and the selected CSI-RS pattern; wherein the pattern configuration information includes: number of antenna ports, density information, CDM type information, CDM group frequency-domain position indication information, CDM group time-domain position indication information, a CDM group index, a frequency-domain index within a CDM group, and a time-domain index within a CDM group.

In this way, the target configuration information can be accurately obtained. Wherein, the target configuration information may be partial information of the pattern configuration information, and the pattern configuration information may be predefined, but is not limited thereto. The pattern configuration information may be presented in a form of a table; the CDM group frequency-domain position indication information may indicate a starting position in frequency domain of a resource occupied by a CDM group, and the like; the CDM group time-domain position indication information may indicate a starting position in time domain of a resource occupied by a CDM group, and the like; the CDM group index may refer to an index of a CDM group in all CDM groups corresponding to the CSI-RS pattern (that is, a CDM group set), and a numbering sequence of the index may correspond to a position numbering sequence in a position indication information combination (that is, a combination formed by the CDM group frequency-domain position indication information and the CDM group time-domain position indication information); the position numbering sequence in the position indication information combination may be performed in a manner that numbering in frequency domain is increased first and then numbering in time domain is increased, specifically referring to (*k̅,l̅*) in Table 1 below, wherein the CDM group index *j* corresponds to (*k̅,l̅*); for example, a value 0 of the CDM group index *j* corresponds to (k₀,l₀) in (*k̅,l̅*); the frequency-domain index within a CDM group refers to a frequency-domain index within the CDM group corresponding to each element in one CDM group, and the time-domain index within a CDM group refers to a time-domain index within the CDM group corresponding to each element in one CDM group.

In the embodiments of the present disclosure, the 16-port pattern type includes: a cdm16-FD4-TD4 pattern type and/or a cdm16-FD2-TD8 pattern type; and/or, the 32-port pattern type includes a cdm32-FD4-TD8 pattern type; and/or, the 8-port pattern type includes a cdm8-FD2-TD4 pattern type; and/or, the 4-port pattern type includes a cdm4-FD2-TD2 pattern type; and/or, the 2-port pattern type includes an fd-CDM2 pattern type; wherein, (1) the cdm16-FD4-TD4 pattern type indicates that the pattern occupies 4 consecutive Resource Elements (REs) in frequency domain and occupies 4 consecutive REs in time domain; each port occupies 16 REs, and each port corresponds to a different Orthogonal Cover Code (OCC); (2) the cdm16-FD2-TD8 pattern type indicates that the pattern occupies 2 consecutive REs in frequency domain and occupies 8 consecutive REs in time domain; each port occupies 16 REs, and each port corresponds to a different OCC; (3) the cdm32-FD4-TD8 pattern type indicates that the pattern occupies 4 consecutive REs in frequency domain and occupies 8 consecutive REs in time domain; each port occupies 32 REs, and each port corresponds to a different OCC; (4) the cdm8-FD2-TD4 pattern type indicates that the pattern occupies 2 consecutive REs in frequency domain and occupies 4 consecutive REs in time domain; each port occupies 8 REs, and each port corresponds to a different OCC; (5) the cdm4-FD2-TD2 pattern type indicates that the pattern occupies 2 consecutive REs in frequency domain and occupies 2 consecutive REs in time domain; each port occupies 4 REs, and each port corresponds to a different OCC; and (6) the fd-CDM2 pattern type indicates that the pattern occupies 2 consecutive REs in frequency domain and occupies 1 consecutive RE in time domain; each port occupies 2 REs, and each port corresponds to a different OCC.

In this way, specific information of each port pattern type can be clarified. The above port pattern types are merely examples, and are not limited thereto. For example, the 16-port pattern type may also include a cdm16-FD8-TD2 pattern type, and the like; and "different Orthogonal Cover Codes OCCs" means that at least part of content included in the OCCs is different.

Wherein, in a case that the CSI-RS pattern is obtained by aggregating patterns of a cdm16-FD4-TD4 pattern type and/or a cdm32-FD4-TD8 pattern type, positions, within one PRB, of CDM groups included in the CSI-RS pattern are indicated by a high-layer parameter through a 3-bit bitmap, the bitmap is composed of a set value b₂, a set value b₁, and a set value b₀, and a starting position in frequency domain of the CDM group is k₍ᵢ₋₁₎=4f(i), wherein f(i) is a subscript index x of bx whose i-th set value is 1 in the bitmap, and i∈{1,2,3}.

In this way, frequency-domain indication of the CSI-RS pattern under the above case can be specifically implemented. Specifically, for example, the 3-bit bitmap is 110, and counting starts from a least significant bit in the bitmap (that is, a rightmost 0), the 1st (i=1) set value being 1 is b₁(x=1), and therefore f(1)=x=1, and accordingly, when i=1, k₀=4×f(1)=4×1; similarly, when i=2, k₁=4 × f(2)=4 × 2. Wherein, the high-layer parameter may be Radio Resource Control (RRC) information, but is not limited thereto.

In the embodiments of the present disclosure, the CDM group frequency-domain position indication information is indicated by using at least one of the following manners: Manner one, one CSI-RS pattern corresponds to only one piece of CDM group frequency-domain position indication information, subcarrier positions occupied by the CSI-RS pattern within one PRB are indicated by a high-layer parameter through one group of bitmaps, and all PRBs occupied by the CSI-RS pattern have a same frequency-domain position; and Manner two, one CSI-RS pattern corresponds to two pieces of CDM group frequency-domain position indication information, the two pieces of CDM group frequency-domain position indication information are indicated by a high-layer parameter through two groups of bitmaps, and each group of bitmaps respectively indicates subcarrier positions occupied by the CSI-RS pattern within one PRB.

In this way, the CDM group frequency-domain position indication information may be indicated in multiple manners. Wherein, "the two pieces of CDM group frequency-domain position indication information are indicated by a high-layer parameter through two groups of bitmaps, and each group of bitmaps respectively indicates subcarrier positions occupied by the CSI-RS pattern within one PRB" in Manner two may be understood as: subcarrier positions occupied by the first pattern within two consecutive PRBs are indicated by a high-layer parameter through two groups of bitmaps, and different PRBs correspond to different bitmaps (for example, subcarrier positions occupied by the first pattern on PRB1 in frequency domain correspond to subcarrier indexes 0 to 11, and subcarrier positions occupied by the first pattern on PRB2 correspond to subcarrier indexes 0 to 3; then subcarrier indexes 0 to 11 of PRB1 may be indicated by bitmap 1 (for example, all values included therein are 1), and subcarrier indexes 0 to 3 of PRB2 may be indicated by bitmap 2 (for example, lower 4 bits among values included therein are all 1)), but is not limited thereto. Each piece of CDM group frequency-domain position indication information may include only one high-layer parameter. Wherein, the high-layer parameter may be Radio Resource Control (RRC) information, but is not limited thereto.

Wherein, Manner one corresponds to at least one of the following settings: (1) predefining that minimum frequency-domain resources occupied by all ports of one CSI-RS pattern are one or two consecutive PRBs; (2) configuring, through a high-layer parameter, a first newly-added parameter, configured to indicate that minimum frequency-domain resources occupied by all ports of the CSI-RS pattern are one or two PRBs; and (3) determining, according to a number *J* of groups of CDM groups corresponding to the target configuration information, a group size *L* of the CDM groups, and a number *X* of antenna ports, that minimum frequency-domain resources occupied by the CSI-RS pattern are *X*/(*J*×*L*) PRBs; the number *J* of groups of the CDM groups is obtained according to the CDM group frequency-domain position indication information and the CDM group time-domain position indication information included in the target configuration information, the group size *L* of the CDM groups is obtained according to the CDM type information included in the target configuration information, and in a case that *X*/ *(J*×*L)* is greater than 1, the *X*/ *(J*×*L)* PRBs are consecutive.

In this way, frequency-domain indication may be specifically implemented in combination with the above Manner one. For example, in the above Manner one, subcarrier positions occupied on a PRB in frequency domain correspond to subcarrier indexes 0 to 11. In combination with the above setting (1), if minimum frequency-domain resources are predefined as one PRB, subcarrier positions occupied by the CSI-RS pattern on PRB1 in frequency domain correspond to subcarrier indexes 0 to 11; and if minimum frequency-domain resources are predefined as two PRBs, subcarrier positions occupied by the CSI-RS pattern on PRB1 in frequency domain correspond to subcarrier indexes 0 to 11 and subcarrier positions occupied on PRB2 correspond to subcarrier indexes 0 to 11; the above setting (2) is similar. In addition, the above setting (3) may support implementing the solution in a case that the number *X* of antenna ports does not exist in the pattern configuration information. For example, a CSI-RS pattern with *X*=64 ports is configured on a network side (the pattern configuration information does not include configuration information of 64 ports), however, 32 ports may be placed in each corresponding PRB, and the 32 ports in each PRB are configured according to the pattern configuration information, which is not limited herein. Wherein, "the number *J* of groups of CDM groups, the group size *L* of the CDM groups, and the number *X* of antenna ports corresponding to the target configuration information" may specifically include: the number *J* of groups of CDM groups corresponding to the CDM group frequency-domain position indication information, the group size *L* of CDM groups corresponding to the CDM group type information, and the number *X* of antenna ports included in the target configuration information, but is not limited thereto.

In the embodiments of the present disclosure, the CDM group time-domain position indication information is indicated by using at least one of the following manners: Manner one, one CSI-RS pattern corresponds to only one set of CDM group time-domain position indication information, and all slots occupied by one CSI-RS pattern have a same time-domain position; and Manner two, one CSI-RS pattern corresponds to two sets of CDM group time-domain position indication information, and each set of CDM group time-domain position indication information respectively indicates Orthogonal Frequency Division Multiplexing (OFDM) symbol positions occupied by the CSI-RS pattern within one slot.

In this way, the CDM group time-domain position indication information may be indicated in multiple manners. Wherein, one set of CDM group time-domain position indication information may include 2 parameters, and each parameter represents one OFDM symbol position (for example, a starting position of an OFDM symbol occupied by a first pattern in slot 1 in time domain corresponds to OFDM symbol indexes 4 and 10, and a starting position of an OFDM symbol occupied in slot 2 corresponds to OFDM symbol indexes 2 and 8; then the OFDM symbol indexes in slot 1 may be indicated by l₀=4 and l₁=10, and the OFDM symbol indexes in slot 2 may be indicated by l₀'=2 and l₁'=8, but is not limited thereto). Wherein, the high-layer parameter may be Radio Resource Control (RRC) information, but is not limited thereto.

Wherein, the Manner one (under the CDM group time-domain position indication information) corresponds to at least one of the following settings: (1) predefining that minimum time-domain resources occupied by all ports of one CSI-RS pattern are one or two consecutive slots; (2) configuring, through a high-layer parameter, a second newly-added parameter, configured to indicate that minimum time-domain resources occupied by all ports of the CSI-RS pattern are one or two slots; and (3) determining, according to a number *J* of groups of CDM groups corresponding to the target configuration information, a group size *L* of the CDM groups, and a number *X* of antenna ports, that minimum time-domain resources occupied by the CSI-RS pattern are *X*/ (*J*×*L*) slots; the number *J* of groups of the CDM groups is obtained according to the CDM group frequency-domain position indication information and the CDM group time-domain position indication information included in the target configuration information, the group size *L* of the CDM groups is obtained according to the CDM type information included in the target configuration information, and in a case that *X*/(*J*×*L*) is greater than 1, the *X*/(*J*×*L*) slots are consecutive.

In this way, time-domain indication may be specifically implemented in combination with the corresponding Manner one. For example, the above Manner one (under the CDM group time-domain position indication information) indicates that starting positions of OFDM symbols occupied in time domain correspond to OFDM symbol indexes 4 and 10. In combination with the above setting (1), if minimum time-domain resources are predefined as one slot, a starting position of an OFDM symbol occupied by the CSI-RS pattern in slot 1 in time domain corresponds to OFDM symbol indexes 4 and 10 in slot 1; and if minimum time-domain resources are predefined as two slots, a starting position of an OFDM symbol occupied by the CSI-RS pattern in slot 1 in time domain corresponds to OFDM symbol indexes 4 and 10 in slot 1 and a starting position of an OFDM symbol occupied in slot 2 corresponds to OFDM symbol indexes 4 and 10 in slot 2; the above setting (2) is similar. In addition, the above setting (3) may support implementing the solution in a case that the number *X* of antenna ports does not exist in the pattern configuration information. For example, a CSI-RS pattern with *X*=64 ports is configured on a network side (the pattern configuration information does not include configuration information of 64 ports), however, 32 ports may be placed in each corresponding slot, and the 32 ports in each slot are configured according to the pattern configuration information, which is not limited herein. Wherein, "the number *J* of groups of CDM groups, the group size *L* of the CDM groups, and the number *X* of antenna ports corresponding to the target configuration information" may specifically include: the number *J* of groups of CDM groups corresponding to the CDM group time-domain position indication information, the group size *L* of CDM groups corresponding to the CDM group type information, and the number *X* of antenna ports included in the target configuration information, but is not limited thereto.

In the embodiments of the present disclosure, in a case that the number of ports corresponding to the CSI-RS is 48, the CSI-RS pattern is obtained by using at least one of the following manners: aggregating, through an FDM manner, 3 patterns of a cdm16-FD4-TD4 pattern type; aggregating, through an FDM manner, 3 patterns of a cdm16-FD2-TD8 pattern type; aggregating, through an FDM manner, two 24-port patterns of a cdm8-FD2-TD4 pattern type; aggregating, through a TDM manner, two 24-port patterns of a cdm8-FD2-TD4 pattern type; aggregating, through an FDM manner, two 24-port patterns of a cdm4-FD2-TD2 pattern type; aggregating, through a TDM manner, two 24-port patterns of a cdm4-FD2-TD2 pattern type; aggregating, through an FDM manner, two 24-port patterns of an fd-CDM2 pattern type; and aggregating, through a TDM manner, two 24-port patterns of an fd-CDM2 pattern type.

In this way, a manner of obtaining the CSI-RS pattern corresponding to 48 ports can be clarified. Wherein, for a case of "aggregating, through a TDM manner, two 24-port patterns of a cdm4-FD2-TD2 pattern type", in some embodiments, all OFDM symbols occupied in time domain are required to be consecutive; for a case of "aggregating, through a TDM manner, two 24-port patterns of an fd-CDM2 pattern type", in some embodiments, all OFDM symbols occupied in time domain are required to be consecutive, which is not limited herein. Wherein, the 24-port pattern of the cdm8-FD2-TD4 pattern type may specifically be obtained by aggregating, through an FDM manner, 3 patterns of a cdm8-FD2-TD4 pattern type; the 24-port pattern of the cdm4-FD2-TD2 pattern type may specifically be obtained by aggregating, through a TDM manner and/or an FDM manner, 6 patterns of a cdm4-FD2-TD2 pattern type; and the 24-port pattern of the fd-CDM2 pattern type may specifically be obtained by aggregating, through a TDM manner and/or an FDM manner, 12 patterns of an fd-CDM2 pattern type, but is not limited thereto.

Wherein, in a case that the number of ports corresponding to the CSI-RS is 64, the CSI-RS pattern is obtained by using at least one of the following manners: aggregating, through an FDM manner, 4 patterns of a cdm16-FD4-TD4 pattern type; aggregating, through an FDM manner, 4 patterns of a cdm16-FD2-TD8 pattern type; aggregating, through an FDM manner, 2 patterns of a cdm32-FD4-TD8 pattern type; aggregating, through a TDM manner, two 32-port patterns of a cdm8-FD2-TD4 pattern type; aggregating, through a TDM manner, two 32-port patterns of a cdm4-FD2-TD2 pattern type; and aggregating, through a TDM manner, two 32-port patterns of an fd-CDM2 pattern type.

In this way, a manner of obtaining the CSI-RS pattern corresponding to 64 ports can be clarified. Wherein, for a case of "aggregating, through a TDM manner, two 32-port patterns of a cdm4-FD2-TD2 pattern type", in some embodiments, all OFDM symbols occupied in time domain are required to be consecutive; for a case of "aggregating, through a TDM manner, two 32-port patterns of an fd-CDM2 pattern type", in some embodiments, all OFDM symbols occupied in time domain are required to be consecutive, which is not limited herein. Wherein, the 32-port pattern of the cdm8-FD2-TD4 pattern type may specifically be obtained by aggregating, through an FDM manner, 4 patterns of a cdm8-FD2-TD4 pattern type; the 32-port pattern of the cdm4-FD2-TD2 pattern type may specifically be obtained by aggregating, through a TDM manner and/or an FDM manner, 8 patterns of a cdm4-FD2-TD2 pattern type; and the 32-port pattern of the fd-CDM2 pattern type may specifically be obtained by aggregating, through a TDM manner and/or an FDM manner, 16 patterns of an fd-CDM2 pattern type, but is not limited thereto.

In the embodiments of the present disclosure, in a case that the number of ports corresponding to the CSI-RS is 96, the CSI-RS pattern is obtained by using at least one of the following manners: aggregating, through an FDM manner, 6 patterns of a cdm16-FD2-TD8 pattern type; aggregating, through an FDM manner, 6 patterns of a cdm16-FD4-TD4 pattern type; aggregating, through FDM and TDM manners, 6 patterns of a cdm16-FD4-TD4 pattern type; aggregating, through an FDM manner, 3 patterns of a cdm32-FD4-TD8 pattern type; aggregating, through an FDM or TDM manner, two 48-port patterns of a cdm8-FD2-TD4 pattern type; aggregating, through FDM and TDM manners, four 24-port patterns of a cdm8-FD2-TD4 pattern type; aggregating, through an FDM or TDM manner, two 48-port patterns of a cdm4-FD2-TD2 pattern type; aggregating, through FDM and TDM manners, four 24-port patterns of a cdm4-FD2-TD2 pattern type; aggregating, through an FDM or TDM manner, two 48-port patterns of an fd-CDM2 pattern type; and aggregating, through FDM and TDM manners, four 24-port patterns of an fd-CDM2 pattern type.

In this way, a manner of obtaining the CSI-RS pattern corresponding to 96 ports can be clarified. Wherein, for a case of "aggregating, through an FDM or TDM manner, two 48-port patterns of a cdm4-FD2-TD2 pattern type", and/or for a case of "aggregating, through FDM and TDM manners, four 24-port patterns of a cdm4-FD2-TD2 pattern type", and/or for a case of "aggregating, through an FDM or TDM manner, two 48-port patterns of an fd-CDM2 pattern type", and/or for a case of "aggregating, through FDM and TDM manners, four 24-port patterns of an fd-CDM2 pattern type", in some embodiments, all OFDM symbols occupied in time domain are required to be consecutive, which is not limited herein. Wherein, related information of the port patterns may refer to the above descriptions, and details are not described herein again.

Wherein, in a case that the number of ports corresponding to the CSI-RS is 128, the CSI-RS pattern is obtained by using at least one of the following manners: aggregating, through an FDM manner, 4 patterns of a cdm32-FD4-TD8 pattern type; aggregating, through FDM and TDM manners, 8 patterns of a cdm16-FD4-TD4 pattern type; aggregating, through FDM and TDM manners, four 32-port patterns of a cdm8-FD2-TD4 pattern type; and aggregating, through a TDM manner, four 32-port patterns of a cdm8-FD2-TD4 pattern type.

In this way, a manner of obtaining the CSI-RS pattern corresponding to 128 ports can be clarified. Wherein, "aggregating, through an FDM manner" may specifically be understood as multiplexing in frequency domain; "aggregating, through FDM and TDM manners" may specifically be understood as multiplexing in frequency domain and time domain; and "aggregating, through a TDM manner" may specifically be understood as multiplexing in time domain, but is not limited thereto.

In the embodiments of the present disclosure, for the cdm16-FD4-TD4 pattern type, the OCC includes FD-4OCC and TD-4OCC, and different OCC indexes correspond to different FD-4OCC and/or TD-4OCC; and/or, for the cdm16-FD2-TD8 pattern type, the OCC includes FD-2OCC and TD-8OCC, and different OCC indexes correspond to different FD-2OCC and/or TD-8OCC; and/or, for the cdm32-FD4-TD8 pattern type, the OCC includes FD-4OCC and TD-8OCC, and different OCC indexes correspond to different FD-4OCC and/or TD-8OCC.

In this way, specific information of the OCC can be clarified. Wherein, similarly, for the cdm8-FD2-TD4 pattern type, the OCC includes FD-2OCC and TD-4OCC, and different OCC indexes correspond to different FD-2OCC and/or TD-4OCC; and/or, for the cdm4-FD2-TD2 pattern type, the OCC includes FD-2OCC and TD-2OCC, and different OCC indexes correspond to different FD-2OCC and/or TD-2OCC; and/or, for the fd-CDM2 pattern type, the OCC includes FD-2OCC, and different OCC indexes correspond to different FD-2OCC; but is not limited thereto.

Wherein, a combination of the FD-4OCC and the TD-4OCC includes at least one of the following: (1) the FD-4OCC is [+1, +1, +1, +1], and the TD-4OCC is [+1, +1, +1, +1]; (2) the FD-4OCC is [+1, -1, +1, -1], and the TD-4OCC is [+1, +1, +1, +1]; (3) the FD-4OCC is [+1, +1, -1, -1], and the TD-4OCC is [+1, +1, +1, +1]; (4) the FD-4OCC is [+1, -1, - 1, +1], and the TD-4OCC is [+1, +1, +1, +1]; (5) the FD-4OCC is [+1, +1, +1, +1], and the TD-4OCC is [+1, -1, +1, -1]; (6) the FD-4OCC is [+1, -1, +1, -1], and the TD-4OCC is [+1, - 1, +1, -1]; (7) the FD-4OCC is [+1, +1, -1, -1], and the TD-4OCC is [+1, -1, +1, -1]; (8) the FD-4OCC is [+1, -1, -1, +1], and the TD-4OCC is [+1, -1, +1, -1]; (9) the FD-4OCC is [+1, +1, +1, +1], and the TD-4OCC is [+1, +1, -1, -1]; (10) the FD-4OCC is [+1, -1, +1, -1], and the TD-4OCC is [+1, +1, -1, -1]; (11) the FD-4OCC is [+1, +1, -1, -1], and the TD-4OCC is [+1, +1, -1, -1]; (12) the FD-4OCC is [+1, -1, -1, +1], and the TD-4OCC is [+1, +1, -1, -1]; (13) the FD-4OCC is [+1, +1, +1, +1], and the TD-4OCC is [+1, -1, -1, +1]; (14) the FD-4OCC is [+1, -1, +1, -1], and the TD-4OCC is [+1, -1, -1, +1]; (15) the FD-4OCC is [+1, +1, -1, -1], and the TD-4OCC is [+1, -1, -1, +1]; and (16) the FD-4OCC is [+1, -1, -1, +1], and the TD-4OCC is [+1, -1, -1, +1].

In this way, the combination of the FD-4OCC and the TD-4OCC can be clarified. Index number orders of the above combinations of the FD-4OCC and the TD-4OCC may be arranged arbitrarily, which is not limited herein. In addition, the above combinations of the FD-4OCC and the TD-4OCC are merely examples, and use of other Orthogonal Cover Codes having lengths of 4 and 4 is not excluded. For example, the FD-4OCC is [+1, +1, +1, +1], and the TD-4OCC is [-1, -1, -1, -1], and the like.

In the embodiments of the present disclosure, a combination of the FD-2OCC and the TD-8OCC includes at least one of the following: (1) the FD-2OCC is [+1, +1], and the TD-8OCC is [+1, +1, +1, +1, +1, +1, +1, +1]; (2) the FD-2OCC is [+1, -1], and the TD-8OCC is [+1, +1, +1, +1, +1, +1, +1, +1]; (3) the FD-2OCC is [+1, +1], and the TD-8OCC is [+1, -1, +1, -1, +1, -1, +1, -1]; (4) the FD-2OCC is [+1, -1], and the TD-8OCC is [+1, -1, +1, -1, +1, - 1, +1, -1]; (5) the FD-2OCC is [+1, +1], and the TD-8OCC is [+1, +1, -1, -1, +1, +1, -1, -1]; (6) the FD-2OCC is [+1, -1], and the TD-8OCC is [+1, +1, -1, -1, +1, +1, -1, -1]; (7) the FD-2OCC is [+1, +1], and the TD-8OCC is [+1, -1, -1, +1, +1, -1, -1, +1]; (8) the FD-2OCC is [+1, -1], and the TD-8OCC is [+1, -1, -1, +1, +1, -1, -1, +1]; (9) the FD-2OCC is [+1, +1], and the TD-8OCC is [+1, +1, +1, +1, -1, -1, -1, -1]; (10) the FD-2OCC is [+1, -1], and the TD-8OCC is [+1, +1, +1, +1, -1, -1, -1, -1]; (11) the FD-2OCC is [+1, +1], and the TD-8OCC is [+1, -1, +1, -1, -1, +1, -1, +1]; (12) the FD-2OCC is [+1, -1], and the TD-8OCC is [+1, -1, +1, -1, -1, +1, -1, +1]; (13) the FD-2OCC is [+1, +1], and the TD-8OCC is [+1, +1, -1, -1, -1, -1, +1, +1]; (14) the FD-2OCC is [+1, -1], and the TD-8OCC is [+1, +1, -1, -1, -1, -1, +1, +1]; (15) the FD-2OCC is [+1, +1], and the TD-8OCC is [+1, -1, -1, +1, -1, +1, +1, -1]; and (16) the FD-2OCC is [+1, -1], and the TD-8OCC is [+1, -1, -1, +1, -1, +1, +1, -1].

In this way, the combination of the FD-2OCC and the TD-8OCC can be clarified. Index number orders of the above combinations of the FD-2OCC and the TD-8OCC may be arranged arbitrarily, which is not limited herein. In addition, the above combinations of the FD-2OCC and the TD-8OCC are merely examples, and use of other Orthogonal Cover Codes having lengths of 2 and 8 is not excluded. For example, the FD-2OCC is [+1, +1], and the TD-8OCC is [-1, -1, -1, -1, -1, -1, -1, -1], and the like.

Wherein, a combination of the FD-4OCC and the TD-8OCC includes at least one of the following: (1) the FD-4OCC is [+1, +1, +1, +1], and the TD-8OCC is [+1, +1, +1, +1, +1, +1, +1, +1]; (2) the FD-4OCC is [+1, -1, +1, -1], and the TD-8OCC is [+1, +1, +1, +1, +1, +1, +1, +1]; (3) the FD-4OCC is [+1, +1, -1, -1], and the TD-8OCC is [+1, +1, +1, +1, +1, +1, +1, +1]; (4) the FD-4OCC is [+1, -1, -1, +1], and the TD-8OCC is [+1, +1, +1, +1, +1, +1, +1, +1]; (5) the FD-4OCC is [+1, +1, +1, +1], and the TD-8OCC is [+1, -1, +1, -1, +1, -1, +1, -1]; (6) the FD-4OCC is [+1, -1, +1, -1], and the TD-8OCC is [+1, -1, +1, -1, +1, -1, +1, -1]; (7) the FD-4OCC is [+1, +1, -1, -1], and the TD-8OCC is [+1, -1, +1, -1, +1, -1, +1, -1]; (8) the FD-4OCC is [+1, -1, -1, +1], and the TD-8OCC is [+1, -1, +1, -1, +1, -1, +1, -1]; (9) the FD-4OCC is [+1, +1, +1, +1], and the TD-8OCC is [+1, +1, -1, -1, +1, +1, -1, -1]; (10) the FD-4OCC is [+1, -1, +1, -1], and the TD-8OCC is [+1, +1, -1, -1, +1, +1, -1, -1]; (11) the FD-4OCC is [+1, +1, -1, -1], and the TD-8OCC is [+1, +1, -1, -1, +1, +1, -1, -1]; (12) the FD-4OCC is [+1, -1, -1, +1], and the TD-8OCC is [+1, +1, -1, -1, +1, +1, -1, -1]; (13) the FD-4OCC is [+1, +1, +1, +1], and the TD-8OCC is [+1, -1, -1, +1, +1, -1, -1, +1]; (14) the FD-4OCC is [+1, -1, +1, -1], and the TD-8OCC is [+1, -1, -1, +1, +1, -1, -1, +1]; (15) the FD-4OCC is [+1, +1, -1, -1], and the TD-8OCC is [+1, -1, -1, +1, +1, -1, -1, +1]; (16) the FD-4OCC is [+1, -1, -1, +1], and the TD-8OCC is [+1, -1, -1, +1, +1, -1, -1, +1]; (17) the FD-4OCC is [+1, +1, +1, +1], and the TD-8OCC is [+1, +1, +1, +1, -1, -1, -1, -1]; (18) the FD-4OCC is [+1, -1, +1, -1], and the TD-8OCC is [+1, +1, +1, +1, -1, -1, -1, -1]; (19) the FD-4OCC is [+1, +1, -1, -1], and the TD-8OCC is [+1, +1, +1, +1, -1, -1, -1, -1]; (20) the FD-4OCC is [+1, -1, -1, +1], and the TD-8OCC is [+1, +1, +1, +1, -1, -1, -1, -1]; (21) the FD-4OCC is [+1, +1, +1, +1], and the TD-8OCC is [+1, -1, +1, -1, -1, +1, -1, +1]; (22) the FD-4OCC is [+1, -1, +1, -1], and the TD-8OCC is [+1, -1, +1, -1, -1, +1, -1, +1]; (23) the FD-4OCC is [+1, +1, -1, -1], and the TD-8OCC is [+1, -1, +1, -1, -1, +1, -1, +1]; (24) the FD-4OCC is [+1, -1, -1, +1], and the TD-8OCC is [+1, -1, +1, -1, -1, +1, -1, +1]; (25) the FD-4OCC is [+1, +1, +1, +1], and the TD-8OCC is [+1, +1, -1, -1, -1, -1, +1, +1]; (26) the FD-4OCC is [+1, -1, +1, -1], and the TD-8OCC is [+1, +1, -1, -1, -1, -1, +1, +1]; (27) the FD-4OCC is [+1, +1, -1, -1], and the TD-8OCC is [+1, +1, -1, -1, -1, -1, +1, +1]; (28) the FD-4OCC is [+1, -1, -1, +1], and the TD-8OCC is [+1, +1, -1, -1, -1, -1, +1, +1]; (29) the FD-4OCC is [+1, +1, +1, +1], and the TD-8OCC is [+1, -1, -1, +1, -1, +1, +1, -1]; (30) the FD-4OCC is [+1, -1, +1, -1], and the TD-8OCC is [+1, -1, -1, +1, -1, +1, +1, -1]; (31) the FD-4OCC is [+1, +1, -1, -1], and the TD-8OCC is [+1, -1, -1, +1, -1, +1, +1, -1]; and (32) the FD-4OCC is [+1, -1, -1, +1], and the TD-8OCC is [+1, -1, -1, +1, -1, +1, +1, -1].

In this way, the combination of the FD-4OCC and the TD-8OCC can be clarified. Index number orders of the above combinations of the FD-4OCC and the TD-8OCC may be arranged arbitrarily, which is not limited herein. In addition, the above combinations of the FD-4OCC and the TD-8OCC are merely examples, and use of other Orthogonal Cover Codes having lengths of 4 and 8 is not excluded. For example, the FD-4OCC is [+1, +1, +1, +1], and the TD-8OCC is [-1, -1, -1, -1, -1, -1, -1, -1], and the like.

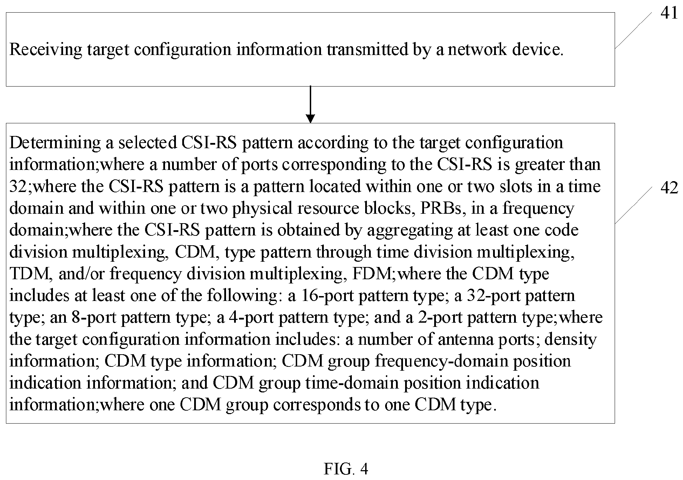

An embodiment of the present disclosure further provides an information transmission method, applied to a terminal. As shown in FIG. 4, the method includes:
Step 41: receiving target configuration information sent by a network device;
Step 42: determining a selected CSI-RS pattern according to the target configuration information; wherein a number of ports corresponding to the CSI-RS is greater than 32; the CSI-RS pattern is a pattern located within one or two slots in time domain and within one or two PRBs in frequency domain; the CSI-RS pattern is obtained by aggregating at least one CDM type pattern in a manner of TDM and/or FDM; the CDM type includes at least one of the following: a 16-port pattern type, a 32-port pattern type, an 8-port pattern type, a 4-port pattern type, and a 2-port pattern type; the target configuration information includes: number of antenna ports, density information, CDM type information, CDM group frequency-domain position indication information, and CDM group time-domain position indication information; one CDM group corresponds to one CDM type.

Wherein, the selected CSI-RS pattern may be determined by the network device according to a number of antenna ports, CSI-RS transmission power requirement information, and resource occupation conditions of signals such as a Synchronization Signal Block (SSB) signal, a Demodulation Reference Signal (DMRS), and a Physical Downlink Control Channel (PDCCH) signal, but is not limited thereto.

The information transmission method provided in the embodiments of the present disclosure includes: receiving target configuration information sent by a network device; determining a selected CSI-RS pattern according to the target configuration information; wherein a number of ports corresponding to the CSI-RS is greater than 32; the CSI-RS pattern is a pattern located within one or two slots in time domain and within one or two PRBs in frequency domain; the CSI-RS pattern is obtained by aggregating at least one CDM type pattern in a manner of TDM and/or FDM; the CDM type includes at least one of the following: a 16-port pattern type, a 32-port pattern type, an 8-port pattern type, a 4-port pattern type, and a 2-port pattern type; the target configuration information includes: number of antenna ports, density information, CDM type information, CDM group frequency-domain position indication information, and CDM group time-domain position indication information; one CDM group corresponds to one CDM type; and related information transmission corresponding to a CSI-RS pattern greater than 32 ports can be supported and implemented.

Wherein, the determining a selected CSI-RS pattern according to the target configuration information includes: determining the selected CSI-RS pattern according to pattern configuration information and the target configuration information; wherein the pattern configuration information includes: number of antenna ports, density information, CDM type information, CDM group frequency-domain position indication information, CDM group time-domain position indication information, a CDM group index, a frequency-domain index within a CDM group, and a time-domain index within a CDM group.

In this way, the target configuration information can be accurately obtained. Wherein, the target configuration information may be partial information of the pattern configuration information, and the pattern configuration information may be predefined, but is not limited thereto.

In the embodiments of the present disclosure, the 16-port pattern type includes: a cdm16-FD4-TD4 pattern type and/or a cdm16-FD2-TD8 pattern type; and/or, the 32-port pattern type includes a cdm32-FD4-TD8 pattern type; and/or, the 8-port pattern type includes a cdm8-FD2-TD4 pattern type; and/or, the 4-port pattern type includes a cdm4-FD2-TD2 pattern type; and/or, the 2-port pattern type includes an fd-CDM2 pattern type; wherein, (1) the cdm16-FD4-TD4 pattern type indicates that the pattern occupies 4 consecutive Resource Elements (REs) in frequency domain and occupies 4 consecutive REs in time domain; each port occupies 16 REs, and each port corresponds to a different Orthogonal Cover Code (OCC); (2) the cdm16-FD2-TD8 pattern type indicates that the pattern occupies 2 consecutive REs in frequency domain and occupies 8 consecutive REs in time domain; each port occupies 16 REs, and each port corresponds to a different OCC; (3) the cdm32-FD4-TD8 pattern type indicates that the pattern occupies 4 consecutive REs in frequency domain and occupies 8 consecutive REs in time domain; each port occupies 32 REs, and each port corresponds to a different OCC; (4) the cdm8-FD2-TD4 pattern type indicates that the pattern occupies 2 consecutive REs in frequency domain and occupies 4 consecutive REs in time domain; each port occupies 8 REs, and each port corresponds to a different OCC; (5) the cdm4-FD2-TD2 pattern type indicates that the pattern occupies 2 consecutive REs in frequency domain and occupies 2 consecutive REs in time domain; each port occupies 4 REs, and each port corresponds to a different OCC; and (6) the fd-CDM2 pattern type indicates that the pattern occupies 2 consecutive REs in frequency domain and occupies 1 consecutive RE in time domain; each port occupies 2 REs, and each port corresponds to a different OCC.

Wherein, in a case that the CSI-RS pattern is obtained by aggregating patterns of a cdm16-FD4-TD4 pattern type and/or a cdm32-FD4-TD8 pattern type, positions, within one PRB, of CDM groups included in the CSI-RS pattern are indicated by a high-layer parameter through a 3-bit bitmap, the bitmap is composed of a set value b₂, a set value b₁, and a set value b₀, and a starting position in frequency domain of the CDM group is kᵢ₋₁=4f(i), wherein f(i) is a subscript index x of bₓ whose i-th set value is 1 in the bitmap, and i∈{1,2,3}.

In this way, frequency-domain indication of the CSI-RS pattern under the above case can be specifically implemented. Specifically, for example, the 3-bit bitmap is 110, and counting starts from a least significant bit in the bitmap (that is, a rightmost 0), the 1st (i=1) set value being 1 is b₁(x=1), and therefore f(1)=x=1, and accordingly, when i=1, k₀=4×f(1)=4×1; similarly, when i=2, k₁=4×f(2)=4×2.

In the embodiments of the present disclosure, the CDM group frequency-domain position indication information is indicated by using at least one of the following manners: Manner one, one CSI-RS pattern corresponds to only one piece of CDM group frequency-domain position indication information, subcarrier positions occupied by the CSI-RS pattern within one PRB are indicated by a high-layer parameter through one group of bitmaps, and all PRBs occupied by the CSI-RS pattern have a same frequency-domain position; and Manner two, one CSI-RS pattern corresponds to two pieces of CDM group frequency-domain position indication information, the two pieces of CDM group frequency-domain position indication information are indicated by a high-layer parameter through two groups of bitmaps, and each group of bitmaps respectively indicates subcarrier positions occupied by the CSI-RS pattern within one PRB.

In this way, the CDM group frequency-domain position indication information may be indicated in multiple manners. Wherein, "the two pieces of CDM group frequency-domain position indication information are indicated by a high-layer parameter through two groups of bitmaps, and each group of bitmaps respectively indicates subcarrier positions occupied by the CSI-RS pattern within one PRB" in Manner two may be understood as: subcarrier positions occupied by the first pattern within two consecutive PRBs are indicated by a high-layer parameter through two groups of bitmaps, and different PRBs correspond to different bitmaps, but is not limited thereto. Each piece of CDM group frequency-domain position indication information may include only one high-layer parameter.

Wherein, Manner one corresponds to at least one of the following settings: (1) predefining that minimum frequency-domain resources occupied by all ports of one CSI-RS pattern are one or two consecutive PRBs; (2) configuring, through a high-layer parameter, a first newly-added parameter, configured to indicate that minimum frequency-domain resources occupied by all ports of the CSI-RS pattern are one or two PRBs; and (3) determining, according to a number *J* of groups of CDM groups corresponding to the target configuration information, a group size *L* of the CDM groups, and a number *X* of antenna ports, that minimum frequency-domain resources occupied by the CSI-RS pattern are *X*/*(J*×*L)* PRBs; the number *J* of groups of the CDM groups is obtained according to the CDM group frequency-domain position indication information and the CDM group time-domain position indication information included in the target configuration information, the group size *L* of the CDM groups is obtained according to the CDM type information included in the target configuration information, and in a case that *X*/*(J*×*L)* is greater than 1, the *X*/*(J*×*L)* PRBs are consecutive.

In this way, frequency-domain indication may be specifically implemented in combination with the above Manner one. The above setting (3) may support implementing the solution in a case that the number *X* of antenna ports does not exist in the pattern configuration information. For example, a CSI-RS pattern with *X*=64 ports is configured on a network side (the pattern configuration information does not include configuration information of 64 ports), however, 32 ports may be placed in each corresponding PRB, and the 32 ports in each PRB are configured according to the pattern configuration information, which is not limited herein. Wherein, "the number *J* of groups of CDM groups, the group size *L* of the CDM groups, and the number *X* of antenna ports corresponding to the target configuration information" may specifically include: the number *J* of groups of CDM groups corresponding to the CDM group frequency-domain position indication information, the group size *L* of CDM groups corresponding to the CDM group type information, and the number *X* of antenna ports included in the target configuration information, but is not limited thereto.

In the embodiments of the present disclosure, the CDM group time-domain position indication information is indicated by using at least one of the following manners: Manner one, one CSI-RS pattern corresponds to only one set of CDM group time-domain position indication information, and all slots occupied by one CSI-RS pattern have a same time-domain position; and Manner two, one CSI-RS pattern corresponds to two sets of CDM group time-domain position indication information, and each set of CDM group time-domain position indication information respectively indicates OFDM symbol positions occupied by the CSI-RS pattern within one slot.

In this way, the CDM group time-domain position indication information may be indicated in multiple manners. Wherein, one set of CDM group time-domain position indication information may include 2 parameters, and each parameter represents one OFDM symbol position, but is not limited thereto.

Wherein, Manner one corresponds to at least one of the following settings: (1) predefining that minimum time-domain resources occupied by all ports of one CSI-RS pattern are one or two consecutive slots; (2) configuring, through a high-layer parameter, a second newly-added parameter, configured to indicate that minimum time-domain resources occupied by all ports of the CSI-RS pattern are one or two slots; and (3) determining, according to a number *J* of groups of CDM groups corresponding to the target configuration information, a group size *L* of the CDM groups, and a number *X* of antenna ports, that minimum time-domain resources occupied by the CSI-RS pattern are *X*/*(J*×*L)* slots; the number *J* of groups of the CDM groups is obtained according to the CDM group frequency-domain position indication information and the CDM group time-domain position indication information included in the target configuration information, the group size *L* of the CDM groups is obtained according to the CDM type information included in the target configuration information, and in a case that *X*/*(J*×*L)* is greater than 1, the *X*/*(J*×*L)* slots are consecutive.

In this way, time-domain indication may be specifically implemented in combination with the corresponding Manner one. The above setting (3) may support implementing the solution in a case that the number *X* of antenna ports does not exist in the pattern configuration information. For example, a CSI-RS pattern with *X*=64 ports is configured on a network side (the pattern configuration information does not include configuration information of 64 ports), however, 32 ports may be placed in each corresponding slot, and the 32 ports in each slot are configured according to the pattern configuration information, which is not limited herein. Wherein, "the number *J* of groups of CDM groups, the group size *L* of the CDM groups, and the number *X* of antenna ports corresponding to the target configuration information" may specifically include: the number *J* of groups of CDM groups corresponding to the CDM group time-domain position indication information, the group size *L* of CDM groups corresponding to the CDM group type information, and the number *X* of antenna ports included in the target configuration information, but is not limited thereto.

In the embodiments of the present disclosure, in a case that the number of ports corresponding to the CSI-RS is 48, the CSI-RS pattern is obtained by using at least one of the following manners: aggregating, through an FDM manner, 3 patterns of a cdm16-FD4-TD4 pattern type; aggregating, through an FDM manner, 3 patterns of a cdm16-FD2-TD8 pattern type; aggregating, through an FDM manner, two 24-port patterns of a cdm8-FD2-TD4 pattern type; aggregating, through a TDM manner, two 24-port patterns of a cdm8-FD2-TD4 pattern type; aggregating, through an FDM manner, two 24-port patterns of a cdm4-FD2-TD2 pattern type; aggregating, through a TDM manner, two 24-port patterns of a cdm4-FD2-TD2 pattern type; aggregating, through an FDM manner, two 24-port patterns of an fd-CDM2 pattern type; and aggregating, through a TDM manner, two 24-port patterns of an fd-CDM2 pattern type.

In this way, a manner of obtaining the CSI-RS pattern corresponding to 48 ports can be clarified. Wherein, for a case of "aggregating, through a TDM manner, two 24-port patterns of a cdm4-FD2-TD2 pattern type", in some embodiments, all OFDM symbols occupied in time domain are required to be consecutive; for a case of "aggregating, through a TDM manner, two 24-port patterns of an fd-CDM2 pattern type", in some embodiments, all OFDM symbols occupied in time domain are required to be consecutive, which is not limited herein. Wherein, the 24-port pattern of the cdm8-FD2-TD4 pattern type may specifically be obtained by aggregating, through an FDM manner, 3 patterns of a cdm8-FD2-TD4 pattern type; the 24-port pattern of the cdm4-FD2-TD2 pattern type may specifically be obtained by aggregating, through a TDM manner and/or an FDM manner, 6 patterns of a cdm4-FD2-TD2 pattern type; and the 24-port pattern of the fd-CDM2 pattern type may specifically be obtained by aggregating, through a TDM manner and/or an FDM manner, 12 patterns of an fd-CDM2 pattern type, but is not limited thereto.

Wherein, in a case that the number of ports corresponding to the CSI-RS is 64, the CSI-RS pattern is obtained by using at least one of the following manners: aggregating, through an FDM manner, 4 patterns of a cdm16-FD4-TD4 pattern type; aggregating, through an FDM manner, 4 patterns of a cdm16-FD2-TD8 pattern type; aggregating, through an FDM manner, 2 patterns of a cdm32-FD4-TD8 pattern type; aggregating, through a TDM manner, two 32-port patterns of a cdm8-FD2-TD4 pattern type; aggregating, through a TDM manner, two 32-port patterns of a cdm4-FD2-TD2 pattern type; and aggregating, through a TDM manner, two 32-port patterns of an fd-CDM2 pattern type.

In this way, a manner of obtaining the CSI-RS pattern corresponding to 64 ports can be clarified. Wherein, for a case of "aggregating, through a TDM manner, two 32-port patterns of a cdm4-FD2-TD2 pattern type", in some embodiments, all OFDM symbols occupied in time domain are required to be consecutive; for a case of "aggregating, through a TDM manner, two 32-port patterns of an fd-CDM2 pattern type", in some embodiments, all OFDM symbols occupied in time domain are required to be consecutive, which is not limited herein. Wherein, the 32-port pattern of the cdm8-FD2-TD4 pattern type may specifically be obtained by aggregating, through an FDM manner, 4 patterns of a cdm8-FD2-TD4 pattern type; the 32-port pattern of the cdm4-FD2-TD2 pattern type may specifically be obtained by aggregating, through a TDM manner and/or an FDM manner, 8 patterns of a cdm4-FD2-TD2 pattern type; and the 32-port pattern of the fd-CDM2 pattern type may specifically be obtained by aggregating, through a TDM manner and/or an FDM manner, 16 patterns of an fd-CDM2 pattern type, but is not limited thereto.

In the embodiments of the present disclosure, in a case that the number of ports corresponding to the CSI-RS is 96, the CSI-RS pattern is obtained by using at least one of the following manners: aggregating, through an FDM manner, 6 patterns of a cdm16-FD2-TD8 pattern type; aggregating, through an FDM manner, 6 patterns of a cdm16-FD4-TD4 pattern type; aggregating, through FDM and TDM manners, 6 patterns of a cdm16-FD4-TD4 pattern type; aggregating, through an FDM manner, 3 patterns of a cdm32-FD4-TD8 pattern type; aggregating, through an FDM or TDM manner, two 48-port patterns of a cdm8-FD2-TD4 pattern type; aggregating, through FDM and TDM manners, four 24-port patterns of a cdm8-FD2-TD4 pattern type; aggregating, through an FDM or TDM manner, two 48-port patterns of a cdm4-FD2-TD2 pattern type; aggregating, through FDM and TDM manners, four 24-port patterns of a cdm4-FD2-TD2 pattern type; aggregating, through an FDM or TDM manner, two 48-port patterns of an fd-CDM2 pattern type; and aggregating, through FDM and TDM manners, four 24-port patterns of an fd-CDM2 pattern type.

In this way, a manner of obtaining the CSI-RS pattern corresponding to 96 ports can be clarified. Wherein, for a case of "aggregating, through an FDM or TDM manner, two 48-port patterns of a cdm4-FD2-TD2 pattern type", and/or for a case of "aggregating, through FDM and TDM manners, four 24-port patterns of a cdm4-FD2-TD2 pattern type", and/or for a case of "aggregating, through an FDM or TDM manner, two 48-port patterns of an fd-CDM2 pattern type", and/or for a case of "aggregating, through FDM and TDM manners, four 24-port patterns of an fd-CDM2 pattern type", in some embodiments, all OFDM symbols occupied in time domain are required to be consecutive, which is not limited herein.

Wherein, in a case that the number of ports corresponding to the CSI-RS is 128, the CSI-RS pattern is obtained by using at least one of the following manners: aggregating, through an FDM manner, 4 patterns of a cdm32-FD4-TD8 pattern type; aggregating, through FDM and TDM manners, 8 patterns of a cdm16-FD4-TD4 pattern type; aggregating, through FDM and TDM manners, four 32-port patterns of a cdm8-FD2-TD4 pattern type; and aggregating, through a TDM manner, four 32-port patterns of a cdm8-FD2-TD4 pattern type.

In this way, a manner of obtaining the CSI-RS pattern corresponding to 128 ports can be clarified. Wherein, "aggregating, through an FDM manner" may specifically be understood as multiplexing in frequency domain; "aggregating, through FDM and TDM manners" may specifically be understood as multiplexing in frequency domain and time domain; and "aggregating, through a TDM manner" may specifically be understood as multiplexing in time domain, but is not limited thereto.

In the embodiments of the present disclosure, for the cdm16-FD4-TD4 pattern type, the OCC includes FD-4OCC and TD-4OCC, and different OCC indexes correspond to different FD-4OCC and/or TD-4OCC; and/or, for the cdm16-FD2-TD8 pattern type, the OCC includes FD-2OCC and TD-8OCC, and different OCC indexes correspond to different FD-2OCC and/or TD-8OCC; and/or, for the cdm32-FD4-TD8 pattern type, the OCC includes FD-4OCC and TD-8OCC, and different OCC indexes correspond to different FD-4OCC and/or TD-8OCC.

In this way, specific information of the OCC can be clarified.

Wherein, a combination of the FD-4OCC and the TD-4OCC includes at least one of the following: (1) the FD-4OCC is [+1, +1, +1, +1], and the TD-4OCC is [+1, +1, +1, +1]; (2) the FD-4OCC is [+1, -1, +1, -1], and the TD-4OCC is [+1, +1, +1, +1]; (3) the FD-4OCC is [+1, +1, -1, -1], and the TD-4OCC is [+1, +1, +1, +1]; (4) the FD-4OCC is [+1, -1, - 1, +1], and the TD-4OCC is [+1, +1, +1, +1]; (5) the FD-4OCC is [+1, +1, +1, +1], and the TD-4OCC is [+1, -1, +1, -1]; (6) the FD-4OCC is [+1, -1, +1, -1], and the TD-4OCC is [+1, - 1, +1, -1]; (7) the FD-4OCC is [+1, +1, -1, -1], and the TD-4OCC is [+1, -1, +1, -1]; (8) the FD-4OCC is [+1, -1, -1, +1], and the TD-4OCC is [+1, -1, +1, -1]; (9) the FD-4OCC is [+1, +1, +1, +1], and the TD-4OCC is [+1, +1, -1, -1]; (10) the FD-4OCC is [+1, -1, +1, -1], and the TD-4OCC is [+1, +1, -1, -1]; (11) the FD-4OCC is [+1, +1, -1, -1], and the TD-4OCC is [+1, +1, -1, -1]; (12) the FD-4OCC is [+1, -1, -1, +1], and the TD-4OCC is [+1, +1, -1, -1]; (13) the FD-4OCC is [+1, +1, +1, +1], and the TD-4OCC is [+1, -1, -1, +1]; (14) the FD-4OCC is [+1, -1, +1, -1], and the TD-4OCC is [+1, -1, -1, +1]; (15) the FD-4OCC is [+1, +1, -1, -1], and the TD-4OCC is [+1, -1, -1, +1]; and (16) the FD-4OCC is [+1, -1, -1, +1], and the TD-4OCC is [+1, -1, -1, +1].

In this way, the combination of the FD-4OCC and the TD-4OCC can be clarified. Index number orders of the above combinations of the FD-4OCC and the TD-4OCC may be arranged arbitrarily, which is not limited herein.

In the embodiments of the present disclosure, a combination of the FD-2OCC and the TD-8OCC includes at least one of the following: (1) the FD-2OCC is [+1, +1], and the TD-8OCC is [+1, +1, +1, +1, +1, +1, +1, +1]; (2) the FD-2OCC is [+1, -1], and the TD-8OCC is [+1, +1, +1, +1, +1, +1, +1, +1]; (3) the FD-2OCC is [+1, +1], and the TD-8OCC is [+1, -1, +1, -1, +1, -1, +1, -1]; (4) the FD-2OCC is [+1, -1], and the TD-8OCC is [+1, -1, +1, -1, +1, - 1, +1, -1]; (5) the FD-2OCC is [+1, +1], and the TD-8OCC is [+1, +1, -1, -1, +1, +1, -1, -1]; (6) the FD-2OCC is [+1, -1], and the TD-8OCC is [+1, +1, -1, -1, +1, +1, -1, -1]; (7) the FD-2OCC is [+1, +1], and the TD-8OCC is [+1, -1, -1, +1, +1, -1, -1, +1]; (8) the FD-2OCC is [+1, -1], and the TD-8OCC is [+1, -1, -1, +1, +1, -1, -1, +1]; (9) the FD-2OCC is [+1, +1], and the TD-8OCC is [+1, +1, +1, +1, -1, -1, -1, -1]; (10) the FD-2OCC is [+1, -1], and the TD-8OCC is [+1, +1, +1, +1, -1, -1, -1, -1]; (11) the FD-2OCC is [+1, +1], and the TD-8OCC is [+1, -1, +1, -1, -1, +1, -1, +1]; (12) the FD-2OCC is [+1, -1], and the TD-8OCC is [+1, -1, +1, -1, -1, +1, -1, +1]; (13) the FD-2OCC is [+1, +1], and the TD-8OCC is [+1, +1, -1, -1, -1, -1, +1, +1]; (14) the FD-2OCC is [+1, -1], and the TD-8OCC is [+1, +1, -1, -1, -1, -1, +1, +1]; (15) the FD-2OCC is [+1, +1], and the TD-8OCC is [+1, -1, -1, +1, -1, +1, +1, -1]; and (16) the FD-2OCC is [+1, -1], and the TD-8OCC is [+1, -1, -1, +1, -1, +1, +1, -1].

In this way, the combination of the FD-2OCC and the TD-8OCC can be clarified. Index number orders of the above combinations of the FD-2OCC and the TD-8OCC may be arranged arbitrarily, which is not limited herein.

Wherein, a combination of the FD-4OCC and the TD-8OCC includes at least one of the following: (1) the FD-4OCC is [+1, +1, +1, +1], and the TD-8OCC is [+1, +1, +1, +1, +1, +1, +1, +1]; (2) the FD-4OCC is [+1, -1, +1, -1], and the TD-8OCC is [+1, +1, +1, +1, +1, +1, +1, +1]; (3) the FD-4OCC is [+1, +1, -1, -1], and the TD-8OCC is [+1, +1, +1, +1, +1, +1, +1, +1]; (4) the FD-4OCC is [+1, -1, -1, +1], and the TD-8OCC is [+1, +1, +1, +1, +1, +1, +1, +1]; (5) the FD-4OCC is [+1, +1, +1, +1], and the TD-8OCC is [+1, -1, +1, -1, +1, -1, +1, -1]; (6) the FD-4OCC is [+1, -1, +1, -1], and the TD-8OCC is [+1, -1, +1, -1, +1, -1, +1, -1]; (7) the FD-4OCC is [+1, +1, -1, -1], and the TD-8OCC is [+1, -1, +1, -1, +1, -1, +1, -1]; (8) the FD-4OCC is [+1, -1, -1, +1], and the TD-8OCC is [+1, -1, +1, -1, +1, -1, +1, -1]; (9) the FD-4OCC is [+1, +1, +1, +1], and the TD-8OCC is [+1, +1, -1, -1, +1, +1, -1, -1]; (10) the FD-4OCC is [+1, -1, +1, -1], and the TD-8OCC is [+1, +1, -1, -1, +1, +1, -1, -1]; (11) the FD-4OCC is [+1, +1, -1, -1], and the TD-8OCC is [+1, +1, -1, -1, +1, +1, -1, -1]; (12) the FD-4OCC is [+1, -1, -1, +1], and the TD-8OCC is [+1, +1, -1, -1, +1, +1, -1, -1]; (13) the FD-4OCC is [+1, +1, +1, +1], and the TD-8OCC is [+1, -1, -1, +1, +1, -1, -1, +1]; (14) the FD-4OCC is [+1, -1, +1, -1], and the TD-8OCC is [+1, -1, -1, +1, +1, -1, -1, +1]; (15) the FD-4OCC is [+1, +1, -1, -1], and the TD-8OCC is [+1, -1, -1, +1, +1, -1, -1, +1]; (16) the FD-4OCC is [+1, -1, -1, +1], and the TD-8OCC is [+1, -1, -1, +1, +1, -1, -1, +1]; (17) the FD-4OCC is [+1, +1, +1, +1], and the TD-8OCC is [+1, +1, +1, +1, -1, -1, -1, -1]; (18) the FD-4OCC is [+1, -1, +1, -1], and the TD-8OCC is [+1, +1, +1, +1, -1, -1, -1, -1]; (19) the FD-4OCC is [+1, +1, -1, -1], and the TD-8OCC is [+1, +1, +1, +1, -1, -1, -1, -1]; (20) the FD-4OCC is [+1, -1, -1, +1], and the TD-8OCC is [+1, +1, +1, +1, -1, -1, -1, -1]; (21) the FD-4OCC is [+1, +1, +1, +1], and the TD-8OCC is [+1, -1, +1, -1, -1, +1, -1, +1]; (22) the FD-4OCC is [+1, -1, +1, -1], and the TD-8OCC is [+1, -1, +1, -1, -1, +1, -1, +1]; (23) the FD-4OCC is [+1, +1, -1, -1], and the TD-8OCC is [+1, -1, +1, -1, -1, +1, -1, +1]; (24) the FD-4OCC is [+1, -1, -1, +1], and the TD-8OCC is [+1, -1, +1, -1, -1, +1, -1, +1]; (25) the FD-4OCC is [+1, +1, +1, +1], and the TD-8OCC is [+1, +1, -1, -1, -1, -1, +1, +1]; (26) the FD-4OCC is [+1, -1, +1, -1], and the TD-8OCC is [+1, +1, -1, -1, -1, -1, +1, +1]; (27) the FD-4OCC is [+1, +1, -1, -1], and the TD-8OCC is [+1, +1, -1, -1, -1, -1, +1, +1]; (28) the FD-4OCC is [+1, -1, -1, +1], and the TD-8OCC is [+1, +1, -1, -1, -1, -1, +1, +1]; (29) the FD-4OCC is [+1, +1, +1, +1], and the TD-8OCC is [+1, -1, -1, +1, -1, +1, +1, -1]; (30) the FD-4OCC is [+1, -1, +1, -1], and the TD-8OCC is [+1, -1, -1, +1, -1, +1, +1, -1]; (31) the FD-4OCC is [+1, +1, -1, -1], and the TD-8OCC is [+1, -1, -1, +1, -1, +1, +1, -1]; and (32) the FD-4OCC is [+1, -1, -1, +1], and the TD-8OCC is [+1, -1, -1, +1, -1, +1, +1, -1].

In this way, the combination of the FD-4OCC and the TD-8OCC can be clarified. Index number orders of the above combinations of the FD-4OCC and the TD-8OCC may be arranged arbitrarily, which is not limited herein.

It should be noted herein that, the above solutions on the network device side and the terminal side may refer to each other, and repeated descriptions will not be repeated herein.

The information transmission method provided in the embodiments of the present disclosure will be described below by way of examples.

For the above technical problem, an information transmission method is provided in the embodiments of the present disclosure, which may specifically be implemented as a transmission solution of CSI-RS, and includes:
selecting, by a network side, one CSI-RS pattern from a CSI-RS pattern set (corresponding to the above selected CSI-RS pattern). The network side sends configuration information of the selected CSI-RS pattern to a terminal side (corresponding to the above target configuration information).
receiving, by the terminal side, the configuration information of the CSI-RS pattern, and determining the CSI-RS pattern according to the configuration information (corresponding to the above receiving target configuration information sent by a network device; that is, determining, , the selected CSI-RS pattern according to the target configuration information).

Wherein, a CSI-RS pattern set greater than 32 ports and configuration information may be predefined, and content involved will be specifically introduced below in part.

Part one, a pattern, corresponding to CSI-RS greater than 32 ports, within one slot or two slots in time domain and within one PRB or two PRBs in frequency domain (corresponding to the above CSI-RS pattern being a pattern located within one or two slots in time domain and within one or two Physical Resource Blocks (PRBs) in frequency domain), is obtained by aggregating, through a TDM manner and/or an FDM manner, at least one fd-CDM2 pattern and/or cdm4-FD2-TD2 pattern and/or cdm8-FD2-TD4 pattern and/or cdm16-FD4-TD4 pattern and/or cdm16-FD2-TD8 pattern and/or cdm32-FD4-TD8 pattern (corresponding to the above CSI-RS pattern being obtained by aggregating at least one Code Division Multiplexing (CDM) type pattern in a manner of Time Division Multiplexing (TDM) and/or Frequency Division Multiplexing (FDM); and the CDM type including at least one of the following: a 16-port pattern type, a 32-port pattern type, an 8-port pattern type, a 4-port pattern type, and a 2-port pattern type). Wherein, different CDM types may be respectively applied to different scenarios. For example, FD2 may be selected for a scenario sensitive to frequency-domain selectivity, and TD4 may be selected for a scenario sensitive to time-domain selectivity, but is not limited thereto.

Wherein, each CDM type is explained as follows:
cdm16-FD4-TD4 indicates that 4 consecutive REs are occupied in frequency domain and 4 consecutive REs are occupied in time domain (corresponding to the above cdm16-FD4-TD4 pattern type indicating that the pattern occupies 4 consecutive Resource Elements (REs) in frequency domain and occupies 4 consecutive REs in time domain). 16 ports occupy same RE positions for transmission by using a CDM manner based on FD-4OCC+TD-4OCC, that is, each port occupies 16 REs, and the 16 ports are distinguished by different OCCs (corresponding to the above each port occupying 16 REs, and each port corresponding to a different Orthogonal Cover Code (OCC)).
cdm16-FD2-TD8 indicates that 2 consecutive REs are occupied in frequency domain and 8 consecutive REs are occupied in time domain (corresponding to the above cdm16-FD2-TD8 pattern type indicating that the pattern occupies 2 consecutive REs in frequency domain and occupies 8 consecutive REs in time domain). 16 ports occupy same RE positions for transmission by using a CDM manner based on FD-2OCC+TD-8OCC, that is, each port occupies 16 REs, and the 16 ports are distinguished by different OCCs (corresponding to the above each port occupying 16 REs, and each port corresponding to a different OCC).
cdm32-FD4-TD8 indicates that 4 consecutive REs are occupied in frequency domain and 8 consecutive REs are occupied in time domain (corresponding to the above cdm32-FD4-TD8 pattern type indicating that the pattern occupies 4 consecutive REs in frequency domain and occupies 8 consecutive REs in time domain). 32 ports occupy same RE positions for transmission by using a CDM manner based on FD-4OCC+TD-8OCC, that is, each port occupies 32 REs, and the 32 ports are distinguished by different OCCs (corresponding to the above each port occupying 32 REs, and each port corresponding to a different OCC).
cdm8-FD2-TD4 indicates that 2 consecutive REs are occupied in frequency domain and 4 consecutive REs are occupied in time domain (corresponding to the above cdm8-FD2-TD4 pattern type indicating that the pattern occupies 2 consecutive REs in frequency domain and occupies 4 consecutive REs in time domain). 8 ports occupy same RE positions for transmission by using a CDM manner based on FD-2OCC+TD-4OCC, that is, each port occupies 8 REs, and the 8 ports are distinguished by different OCCs (corresponding to the above each port occupying 8 REs, and each port corresponding to a different OCC).
cdm4-FD2-TD2 indicates that 2 consecutive REs are occupied in frequency domain and 2 consecutive REs are occupied in time domain (corresponding to the above cdm4-FD2-TD2 pattern type indicating that the pattern occupies 2 consecutive REs in frequency domain and occupies 2 consecutive REs in time domain). 4 ports occupy same RE positions for transmission by using a CDM manner based on FD-2OCC+TD-2OCC, that is, each port occupies 4 REs, and the 4 ports are distinguished by different OCCs (corresponding to the above each port occupying 4 REs, and each port corresponding to a different OCC).
fd-CDM2 indicates that 2 consecutive REs are occupied in frequency domain and 1 consecutive RE is occupied in time domain (corresponding to the above fd-CDM2 pattern type indicating that the pattern occupies 2 consecutive REs in frequency domain and occupies 1 consecutive RE in time domain). 2 ports occupy same RE positions for transmission by using a CDM manner based on FD-2OCC, that is, each port occupies 2 REs, and the 2 ports are distinguished by different OCCs (corresponding to the above each port occupying 2 REs, and each port corresponding to a different OCC).

Part two, frequency-domain position indication of a CSI-RS resource greater than 32 ports supports at least one of the following methods:
Option 1: in a case that a CSI-RS greater than 32 ports is obtained by aggregating cdm16-FD4-TD4 and/or cdm32-FD4-TD8, positions, within one PRB, of the CSI-RS pattern included CDM groups are indicated by a 3-bit bitmap [b₂ b₁ b₀] through a high-layer parameter (for example, Radio Resource Control (RRC)), wherein bitmap refers to a bit map. A starting position in frequency domain of a CDM group is kᵢ₋₁=4f(i), wherein f(i) is a subscript index x of bₓ whose i-th set value being 1 in the bitmap. i∈{1,2,3}. Specifically, for example, the bitmap is 110, and counting starts from a least significant bit in the bitmap (that is, a rightmost 0), the 1st (i=1) set value being 1 is b₁(x=1), and therefore f(1)=x=1, and accordingly, when i=1, k₀=4×f(1)=4×1; similarly, when i=2, k₁=4×f(2)=4×2. This Option corresponds to the above case that the CSI-RS pattern is obtained by aggregating patterns of a cdm16-FD4-TD4 pattern type and/or a cdm32-FD4-TD8 pattern type, wherein positions, within one PRB, of CDM groups included in the CSI-RS pattern are indicated by a high-layer parameter through a 3-bit bitmap, the bitmap is composed of a set value b₂, a set value b₁, and a set value b₀, and a starting position in frequency domain of the CDM group is kᵢ₋₁=4f(i), wherein f(i) is a subscript index x of bₓ whose i-th set value is 1 in the bitmap, and i∈{1,2,3}.
Option 2: one CSI-RS resource has only one frequency-domain position indication, and subcarrier positions occupied by the CSI-RS resource within one PRB are provided by one group of bitmaps through a high-layer parameter. All PRBs occupied by the CSI-RS resource have a same frequency-domain position. This Option corresponds to the above one CSI-RS pattern corresponding to only one piece of CDM group frequency-domain position indication information, wherein subcarrier positions occupied by the CSI-RS pattern within one PRB are indicated by a high-layer parameter through one group of bitmaps, and all PRBs occupied by the CSI-RS pattern have a same frequency-domain position.
   (1) Predefining that minimum frequency domain resources occupied by all ports of one CSI-RS resource are one or two consecutive PRBs, corresponding to the foregoing predefining that minimum frequency domain resources occupied by all ports of the CSI-RS pattern are one or two consecutive PRBs;
   (2) adding a parameter for indicating that minimum frequency domain resources occupied by all ports of the CSI-RS resource are F PRBs (F∈{1,2}), where the parameter is configured through a higher-layer parameter; corresponding to the foregoing configuring, through a higher-layer parameter, a first newly-added parameter for indicating that minimum frequency domain resources occupied by all ports of the CSI-RS pattern are one or two PRBs.
   (3) determining, according to the number *J* of CDM groups corresponding to frequency domain position indication, the CDM group size *L* corresponding to a CDM group type, and the number *X* of antenna ports, that minimum frequency domain resources occupied by the CSI-RS resource are *X*/*(J*×*L)* PRBs; in a case that the occupied minimum frequency domain resources are greater than one PRB, the multiple PRBs are required to be consecutive (corresponding to the foregoing determining, according to the number *J* of CDM groups, the CDM group size *L*, and the number *X* of antenna ports corresponding to the target configuration information, that minimum frequency domain resources occupied by the CSI-RS pattern are *X*/*(J*×*L)* PRBs; where the number *J* of CDM groups is obtained according to CDM group frequency domain position indication information and CDM group time domain position indication information included in the target configuration information, the CDM group size *L* is obtained according to CDM type information included in the target configuration information, and in a case that *X*/*(J*×*L)* is greater than 1, the *X*/*(J×L)* PRBs are consecutive). Corresponding cases are respectively fd-CDM2, cdm4-FD2-TD2, cdm8-FD2-TD4, cdm16-FD4-TD4 or cdm16-FD2-TD8, and cdm32-FD4-TD8.
Option 3: one CSI-RS resource corresponds to two frequency domain position indications, and the two frequency domain position indications are provided by two groups of bitmaps through higher-layer parameters, where each group of bitmaps respectively indicates subcarrier positions occupied within one PRB; corresponding to the foregoing that one CSI-RS pattern corresponds to two pieces of CDM group frequency domain position indication information, the two pieces of CDM group frequency domain position indication information are indicated, by higher-layer parameters, through two groups of bitmaps, and each group of bitmaps respectively indicates subcarrier positions occupied by the CSI-RS pattern within one PRB. When one CSI-RS resource uses only one frequency domain position indication, it indicates that minimum frequency domain resources occupied by all ports of one CSI-RS resource are one PRB; when one CSI-RS resource uses two frequency domain position indications, it indicates that minimum frequency domain resources occupied by all ports of one CSI-RS resource are two PRBs; the two frequency domain position indications respectively indicate frequency domain positions within each of the two PRBs; it may be understood that: in a case that a bitmap of one frequency domain position indication is all 0s, and a bitmap of the other frequency domain position indication has a bit with a value of 1, it indicates that minimum frequency domain resources occupied by all ports of one CSI-RS resource are one PRB. In a case that both bitmaps of the two frequency domain position indications each have a bit with a value of 1, it indicates that minimum frequency domain resources occupied by all ports of one CSI-RS resource are two PRBs.
Option 4:
   (1) Predefining that minimum frequency domain resources occupied by all ports of one CSI-RS resource are one PRB or a plurality of consecutive subcarriers within two PRBs, where a starting frequency domain index of the CSI-RS resource is configured through a higher-layer parameter;
   (2) predefining that minimum frequency domain resources occupied by all ports of one CSI-RS resource are one PRB or a plurality of consecutive subcarriers within two PRBs, where a starting position of the CSI-RS resource is a first subcarrier of a PRB having a smallest index value;
   (3) predefining that minimum frequency domain resources occupied by all ports of one CSI-RS resource are one PRB or all subcarriers of two PRBs.

Part III, time domain positions of one CSI-RS resource with greater than 32 ports are configured through higher-layer parameters, and at least one of the following methods is supported:
Option 1: one CSI-RS resource corresponds to only one set of time domain position indications. That is, l0 and/or l1 are used for indicating starting indexes of 2 groups of consecutive OFDM symbols occupied within one slot. All slots occupied by one CSI-RS resource have a same time domain position. This Option corresponds to the foregoing that one CSI-RS pattern corresponds to only one set of CDM group time domain position indication information, and all slots occupied by one CSI-RS pattern have a same time domain position.
   (1) Predefining that minimum time domain resources occupied by all ports of one CSI-RS resource are one or two consecutive slots, corresponding to the foregoing predefining that minimum time domain resources occupied by all ports of the CSI-RS pattern are one or two consecutive slots;
   (2) in some embodiments, adding a parameter for indicating that minimum time domain resources occupied by all ports of the CSI-RS resource are T slots (T∈{1,2}), where the parameter is configured through a higher-layer parameter; corresponding to the foregoing configuring, through a higher-layer parameter, a second newly-added parameter for indicating that minimum time domain resources occupied by all ports of the CSI-RS pattern are one or two slots.
   (3) determining, according to the number *J* of CDM groups corresponding to time domain position indication, the group size L of the CDM group corresponding to a CDM group type, and the number *X* of antenna ports, that minimum time domain resources occupied by the CSI-RS resource are *X*/*(J*×*L)* slots; in a case that the occupied minimum time domain resources are greater than one slot, the multiple slots are required to be consecutive (corresponding to the foregoing determining, according to the number *J* of CDM groups, the group size *L* of the CDM group, and the number *X* of antenna ports corresponding to the target configuration information, that minimum time domain resources occupied by the CSI-RS pattern are *X*/*(J*×*L)* slots; where the number *J* of CDM groups is obtained according to CDM group frequency domain position indication information and CDM group time domain position indication information included in the target configuration information, the group size *L* of the CDM group is obtained according to CDM type information included in the target configuration information, and in a case that *X*/*(J*×*L)* is greater than 1, the *X*/*(J*×*L)* slots are consecutive). Corresponding cases are respectively fd-CDM2, cdm4-FD2-TD2, cdm8-FD2-TD4, cdm16-FD4-TD4 or cdm16-FD2-TD8, and cdm32-FD4-TD8.
Option 2: one CSI-RS resource corresponds to two sets of time domain position indications, that is, l0 and/or l1 are used for indicating starting indexes of 2 groups of consecutive OFDM symbols occupied within one slot, and l2 and/or l3 are used for indicating starting indexes of 2 groups of consecutive OFDM symbols occupied within another consecutive slot; corresponding to the foregoing that one CSI-RS pattern corresponds to two sets of CDM group time domain position indication information, each set of CDM group time domain position indication information respectively indicates OFDM symbol positions occupied by the CSI-RS pattern within one slot. When one CSI-RS resource uses only one set of time domain position indications, it indicates that minimum time domain resources occupied by all ports of one CSI-RS resource are one slot; when one CSI-RS resource uses two sets of time domain position indications, it indicates that minimum time domain resources occupied by all ports of one CSI-RS resource are two slots; the two sets of time domain position indications respectively indicate frequency domain positions within each of the two slots; it may be understood that: if only one set of time domain position indications is a valid value, and the other set of time domain position indications is an invalid value, it indicates that minimum time domain resources occupied by all ports of one CSI-RS resource are one slot; if both sets of time domain position indications are valid values, it indicates that minimum time domain resources occupied by all ports of one CSI-RS resource are two slots.

Wherein, l₀ ∈ {0,1, ..., 13} and l₁ ∈ {2, 3, ..., 12} ; l₂ ∈ {0,1, ..., 13}andl₃ ∈ {2, 3, ..., 12}.

Part IV, for a same port number configuration, supporting multiple CDM+TDM+FDM aggregation patterns.
1. A 48-port CSI-RS pattern supports at least one of the following patterns:
   (1) being formed by aggregating 3 cdm16-FD4-TD4 groups through an FDM manner; corresponding to the foregoing that aggregation is performed, through an FDM manner, on 3 patterns of a cdml6-FD4-TD4 pattern type;
   (2) being formed by aggregating 3 cdm16-FD2-TD8 groups through an FDM manner; corresponding to the foregoing that aggregation is performed, through an FDM manner, on 3 patterns of a cdml6-FD2-TD8 pattern type;
   (3) being formed by aggregating, through an FDM manner, 24-port patterns of which a CDM type is cdm8-FD2-TD4; corresponding to the foregoing that aggregation is performed, through an FDM manner, on 2 24-port patterns of a cdm8-FD2-TD4 pattern type;
   (4) being formed by aggregating, through a TDM manner, 24-port patterns of which a CDM type is cdm8-FD2-TD4; corresponding to the foregoing that aggregation is performed, through a TDM manner, on 2 24-port patterns of a cdm8-FD2-TD4 pattern type;
   (5) being formed by aggregating, through an FDM manner, 24-port patterns of which a CDM type is cdm4-FD2-TD2; corresponding to the foregoing that aggregation is performed, through an FDM manner, on 2 24-port patterns of a cdm4-FD2-TD2 pattern type;
   (6) being formed by aggregating, through a TDM manner, 24-port patterns of which a CDM type is cdm4-FD2-TD2; corresponding to the foregoing that aggregation is performed, through a TDM manner, on 2 24-port patterns of a cdm4-FD2-TD2 pattern type;
      In some embodiments, all OFDM symbols occupied in time domain by the 24-port pattern of which the CDM type is cdm4-FD2-TD2 are required to be consecutive.
   (7) being formed by aggregating, through an FDM manner, 24-port patterns of which a CDM type is fd-CDM2; corresponding to the foregoing that aggregation is performed, through an FDM manner, on 2 24-port patterns of an fd-CDM2 pattern type;
   (8) being formed by aggregating, through a TDM manner, 24-port patterns of which a CDM type is fd-CDM2; corresponding to the foregoing that aggregation is performed, through a TDM manner, on 2 24-port patterns of an fd-CDM2 pattern type;

In some embodiments, all OFDM symbols occupied in time domain by the 24-port pattern of which the CDM type is fd-CDM2 are required to be consecutive.

Specifically, as shown in Table 1, one 48-port CSI-RS pattern supports at least one of the following configurations, where k̅ may include k₀, k₁, k₂, etc., l̅ may include l₀,l₁,l₂, etc., and a CDM group index *j* corresponds to (*k̅,l̅*):

**Table 1**

| Co nfi gu rat io n op tio n | Anten na ports | De nsit y | CDM Type | (*k̅,l̅*) ( k̅ indicates a frequency-domain start position of a CDM group; l̅ indicates a time-domain start position of a CDM group) | CDM Group Index *j* | *k'* (Frequen cy-Domain Index within a CDM Group) ) | *l'̅* (Time-Domain Index within a CDM Group) ) |
|---|---|---|---|---|---|---|---|
| 1 | 48 | 1, 0.5 | cdm16-FD4-TD4 | (k₀, l₀), (k ₁, l₀), (k₂, l₀) or predefining that a minimum occupied frequency-domain resource comprises all subcarriers within one PRB. | 0,1,2 | 0,1,2,3 | 0,1,2,3 |
| 2 | 48 | 1, 0.5 | cdm16-FD2-TD8 | (k₀, l₀), (k ₁, l₀),(k₂, l₀) | 0,1,2 | 0,1 | 0,1,2,3 , 4,5,6,7 |
| 3 | 48 | 1, 0.5 | cdm8-FD2-TD4 | (k₀, l₀) , (k₁, l₀) , (k₂, l₀) , (k₃, l₀), (k₄, l₀), (k₅, l₀) | 0,1,2, 3,4,5 | 0,1 | 0,1,2,3 |
| 4 | 48 | 1, 0.5 | cdm8-FD2-TD4 | (k₀, l₀), (k₁, l₀), (k₂, l₀), (k₀, l₁), (k₁, l₁), (k₂, l₁) | 0,1,2, 3,4,5 | 0,1 | 0,1,2,3 |
| 5 | 48 | 1, 0.5 | cdm4-FD2-TD2 | (k₀, l₀) , (k₁, l₀) , (k₂, l₀) , (k₃, l₀), (k₄, l₀), (k₅, l₀), (k₀, l₁) , (k₁, l₁) , (k₂, l₁) , (k₃, l₁), (k₄, l₁), (k₅, l₁) | 0,1,2, 3,4,5, 6,7,8, 9,10, 11 | 0,1 | 0,1 |
| 6 | 48 | 1, 0.5 | cdm4-FD2-TD2 | (k₀, l₀), (k₁, l₀), (k₂, l₀), (k₀, l₀ + 2) , (k₁, l₀ + 2) , (k₂, l₀ + 2) , (k₀, l₁), (k₁, l₁), (k₂, l₁), (k₀, l₁ + 2) , (k₁, l₁ + 2) , + 2) | 0,1,2, 3,4,5, 6,7,8, 9,10, 11 | 0,1 | 0,1 |
| 7 | 48 | 1, 0.5 | cdm4-FD2-TD2 | (k₀, l₀), (k₁, l₀), (k₂, l₀), (k₀, l₀ + 2) , (k₁, l₀ + 2) , (k₂, l₀ + 2) , (k₀, l₁), (k₁, l₁), (k₂, l₁), (k₀, l₂),(k₁, l₂), (k₂, l₂) | 0,1,2, 3,4,5, 6,7,8, 9,10, 11 | 0,1 | 0,1 |
| 8 | 48 | 1, 0.5 | cdm4-FD2-TD2 | (k₀, l₀) , (k₁, l₀) (k₂, l₀) , , (k₀, l₁), (k₁, l₁), (k₂, l₁), (k₀, l₂) , (k₁, l₂) (k₂, l₂) , (k₀, l₂ + 2) , (k₁, l₂ + 2), (k₂, l₂ + 2) | 0,1,2, 3,4,5, 6,7,8, 9,10, 11 | 0,1 | 0,1 |
| 9 | 48 | 1, 0.5 | cdm4-FD2-TD2 | (k₀, l₀) , (k₁, l₀) , (k₂, l₀) , , (k₀, l₁), (k₁, l₁), (k₂, l₁), (k₀, l₂), (k₁, l₂), (k₂, l₂), (k₀, l₃), (k₁, l₃), (k₂, l₃) | 0,1,2, 3,4,5, 6,7,8, 9,10, 11 | 0,1 | 0,1 |
| 10 | 48 | 1, 0.5 | fd-CDM2 | (k₀, l₀) , (k₁, l₀) , (k₂, l₀) , (k₃, l₀ ) , (k₄, l₀), (k₅, l₀), (k₀, l₀ + 1), (k₁, l₀ + 1) , (k₂, l₀ + 1) , (k₃, l₀ + 1) , (k₄, l₀ + 1) , (k₅, l₀ + 1) , (k₀, l₁) , (k₁, l₁) , (k₂, l₁) , (k₃, l₁), (k₄, l₁), (k₅, l₁), (k₀, l₁ + 1), (k₁, l₁ + 1) , (k₂, l₁ + 1) , (k₃, l₁ + 1), (k₄, l₁ + 1) , (k₅, l₁ + 1) | 0,1,2, 3,4,5, 6,7,8, 9,10, 11 | 0,1 | 0,1 |
| 11 | 48 | 1, 0.5 | fd-CDM2 | (k₀, l₀) , (k₁, l₀) (k₂, l₀) , (k₀, l₀ + 1) , (k₁, l₀ + 1) , (k₂, l₀ + 1) , (k₀, l₀ + 2) , (k₁, l₀ + 2) , (k₂, l₀ + 2) , (k₀, l₀+3). (k₁, l₀ + 3) , (k₂, l₀ + 3) , (k₀, l₁), (k₁, l₁), (k₂, l₁), (k₀, l₁ + 1) , (k₁, l₁ + 1), (k₂, l₁ + 1) , (k₀, l₁ + 2) , (k₁, l₁ + 2) , (k₂, l₁ + 2) , (k₀, l₁ + 3) , (k₁, l₁ + 3), (k₂, l₁ + 3), | 0,1,2, 3,4,5, 6,7,8, 9,10, 11,12,13, 14,15,16, 17,18,19, 20,21,22, 23 | 0,1 | 0 |

Contents under density in the above table, for example, (1,0.5), indicate that the pattern supports two densities, namely, 1 and 0.5. Table 1 above exemplarily shows 11 different configuration options.

2. A 64-port CSI-RS pattern supports at least one of the following patterns:
(1) being formed by aggregating 4 cdm16-FD4-TD4 groups through an FDM manner; corresponding to the foregoing that aggregation is performed, through an FDM manner, on 4 patterns of a cdml6-FD4-TD4 pattern type;
(2) being formed by aggregating 4 cdm16-FD2-TD8 groups through an FDM manner; corresponding to the foregoing that aggregation is performed, through an FDM manner, on 4 patterns of a cdml6-FD2-TD8 pattern type;
(3) being formed by aggregating 2 cdm32-FD4-TD8 groups through an FDM manner; corresponding to the foregoing that aggregation is performed, through an FDM manner, on 2 patterns of a cdm32-FD4-TD8 pattern type;
(4) being formed by aggregating, through a TDM manner, 32-port patterns of which a CDM type is cdm8-FD2-TD4; corresponding to the foregoing that aggregation is performed, through a TDM manner, on 2 32-port patterns of a cdm8-FD2-TD4 pattern type;
(5) being formed by aggregating, through a TDM manner, 32-port patterns of which a CDM type is cdm4-FD2-TD2; corresponding to the foregoing that aggregation is performed, through a TDM manner, on 2 32-port patterns of a cdm4-FD2-TD2 pattern type;
   In some embodiments, all OFDM symbols occupied in time domain by the 32-port pattern of which the CDM type is cdm4-FD2-TD2 are required to be consecutive;
(6) being formed by aggregating, through a TDM manner, 32-port patterns of which a CDM type is fd-CDM2; corresponding to the foregoing that aggregation is performed, through a TDM manner, on 2 32-port patterns of an fd-CDM2 pattern type;

In some embodiments, all OFDM symbols occupied in time domain by the 32-port pattern of which the CDM type is fd-CDM2 are required to be consecutive.

Specifically, as shown in Table 2, one 64-port CSI-RS pattern supports at least one of the following configurations, where content corresponding to 1^{st}pRB and 2^{nd}PRB described below indicates configuration for 2 PRBs, and content in which the two PRBs are not explicitly mentioned may be defaulted as configuration for 1 PRB, but is not limited thereto:

**Table 2**

| Con figu rati on Opt ion | Ant enn a Por ts | D e n si ty | CDM Type | (*k̅, l̅*) (k̅ indicates a frequency-domain start position of a CDM group; l̅ indicates a time-domain start position of a CDM group) | CDM Group Index *j* | *k'* | *l'* |
|---|---|---|---|---|---|---|---|
| 1 | 64 | 0. 5 | cdm16-FD4-TD4 | 1^{st}PRB:(k₀, l₀), (k₁, l₀),(k₂, l₀), 2^{nd}PRB: (k₀, l₀), (k₁, l₀), (k₂, l₀); or predefining that a minimum occupied frequency-domain resource comprises 16 consecutive subcarriers within two PRBs. | 0,1,2,3 | 0,1,2 ,3 | 0,1,2, 3 |
| 2 | 64 | 1, 0. 5 | cdm16-FD2-TD8 | (k₀, l₀), (k₁, l₀),(k₂, l₀), (k₃, l₀) | 0,1,2,3 | 0,1 | 0,1,2, 3,4,5, 6,7 |
| 3 | 64 | 1, 0. 5 | cdm32-FD4-TD8 | (k₀, l₀), (k₁, l₀) | 0,1 | 0,1,2 ,3 | 0,1,2, 3,4,5, 6,7 |
| 4 | 64 | 1, 0. 5 | cdm8-FD2-TD4 | (k₀, l₀) , (k₁, l₀) , (k₂, l₀) , (k₃, l₀), (k₀, l₁), (k₁, l₁), (k₂, l₁), (k₃, l₁) | 0,1,2,3,4, 5,6,7 | 0,1 | 0,1,2, 3 |
| 5 | 64 | 1, 0. 5 | cdm4-FD2-TD2 | (k₀, l₀) , (k₁,l₀) , (k₂, l₀) , (k₃, l₀) , (k₀, l₀ + 2) , (k₁, l₀ + 2) , (k₂, l₀ + 2) , (k₃, l₀ + 2) , (k₀, l₁), (k₁, l₁), (k₂, l₁),(k₃, l₁), (k₀, l₁ + 2) , (k₁, l₁ + 2) , (k₂, l₁ + 2), (k₃, l₁ + 2), | 0,1,2,3,4, 5,6,7,8,9, 10, 11,12, 13,14, 15 | 0,1 | 0,1 |
| 6 | 64 | 1, 0. 5 | cdm4-FD2-TD2 | (k₀, l₀) , (k₁, l₀) , (k₂, l₀) , (k₃, l₀) , (k₀, l₀ + 2) , (k₁, l₀ + 2) , (k₂, l₀ + 2) , (k₃, l₀ + 2) , (k₀, l₁), (k₁, l₁), (k₂, l₁),(k₃, l₁), (k₀, l₂),(k₁, l₂), (k₂, l₂), (k₃, l₂), | 0,1,2,3,4, 5,6,7,8,9, 10, 11,12, 13,14, 15 | 0,1 | 0,1 |
| 7 | 64 | 1, 0. 5 | cdm4-FD2-TD2 | (k₀, l₀), (k₁, l₀), (k₂, l₀), (k₃, l₀), (k₀, l₁) , (k₁, l₁) , (k₂, l₁) , (k₃, l₁) , (k₀, l₂) , (k₁, l₂) , (k₂, l₂), (k₃, l₂), (k₀, l₂ + 2) , (k₁, l₂ + 2) , (k₂, l₂ + 2), (k₃, l₂ + 2), | 0,1,2,3,4, 5,6,7,8,9, 10, 11,12, 13,14, 15 | 0,1 | 0,1 |
| 8 | 64 | 1, 0. 5 | cdm4-FD2-TD2 | (k₀, l₀), (k₁, l₀), (k₂, l₀), (k₃, l₀), (k₀, l₁) , (k₁, l₁) , (k₂, l₁) , (k₃, l₁ ) , (k₀, l₂), (k₁, l₂), (k₂, l₂), (k₃, l₂), (k₀, l₃),(k₁, l₃), (k₂, l₃), (k₃, l₃), | 0,1,2,3,4, 5,6,7,8,9, 10, 11,12, 13,14, 15 | 0,1 | 0,1 |
| 9 | 64 | 1, 0. 5 | fd-CDM2 | (k₀, l₀), (k₁, l₀), (k₂, l₀), (k₃, l₀), (k₀, l₀ + 1), (k₁, l₀ + 1), (k₂, l₀ + 1) , (k₃, l₀ + 1) , (k₀, l₀ + 2) , (k₁, l₀ + 2) , (k₂, l₀+2) , (k₃, l₀ + 2), (k₀, l₀ + 3), (k₁, l₀ + 3), (k₂, l₀ + 3), (k₃, l₀ + 3), (k₀, l₁) , (k₁, l₁) (k₂, l₁) , (k₃, l₁) , (k₀, l₁ + 1) , (k₁, l₁ + 1), (k₂, l₁ + 1), (k₃, l₁ + 1), (k₀, l₁ + 2), (k₁, l₁ + 2), (k₂, l₁ + 2), (k₃, l₁ + 2), (k₀, l₁ + 3), (k₁, l₁ + 3), (k₂, l₁ + 3), (k₃, l₁ + 3), | [Integers in a range [0,31] | 0,1 | 0 |

Wherein, l₁ + 2 indicates that a starting position of OFDM symbols occupied by the CDM group in time domain is l₁+2 OFDM symbols, and other cases are similar and are not repeated herein. Table 2 above exemplarily shows 9 different configuration options.

3. A 96-port CSI-RS pattern supports at least one of the following patterns:
(1) being formed by aggregating 6 cdm16-FD2-TD8 groups through an FDM manner; corresponding to the foregoing that aggregation is performed, through an FDM manner, on 6 patterns of a cdml6-FD2-TD8 pattern type;
(2) being formed by aggregating 6 cdm16-FD4-TD4 groups through an FDM manner; corresponding to the foregoing that aggregation is performed, through an FDM manner, on 6 patterns of a cdml6-FD4-TD4 pattern type;
(3) being formed by aggregating 6 cdm16-FD4-TD4 groups through FDM and TDM manners; corresponding to the foregoing that aggregation is performed, through FDM and TDM manners, on 6 patterns of a cdm16-FD4-TD4 pattern type;
(4) being formed by aggregating 3 cdm32-FD4-TD8 groups through an FDM manner; corresponding to the foregoing that aggregation is performed, through an FDM manner, on 3 patterns of a cdm32-FD4-TD8 pattern type;
(5) being formed by aggregating, through an FDM or TDM manner, 48-port patterns of which a CDM type is cdm8-FD2-TD4; corresponding to the foregoing that aggregation is performed, through an FDM or TDM manner, on 2 48-port patterns of a cdm8-FD2-TD4 pattern type;
(6) being formed by aggregating, through FDM and TDM manners, 24-port patterns of which a CDM type is cdm8-FD2-TD4; corresponding to the foregoing that aggregation is performed, through FDM and TDM manners, on 4 24-port patterns of a cdm8-FD2-TD4 pattern type;
(7) being formed by aggregating, through an FDM or TDM manner, 48-port patterns of which a CDM type is cdm4-FD2-TD2; corresponding to the foregoing that aggregation is performed, through an FDM or TDM manner, on 2 48-port patterns of a cdm4-FD2-TD2 pattern type;
(8) being formed by aggregating, through FDM and TDM manners, 24-port patterns of which a CDM type is cdm4-FD2-TD2; corresponding to the foregoing that aggregation is performed, through FDM and TDM manners, on 4 24-port patterns of a cdm4-FD2-TD2 pattern type;
   In some embodiments, all OFDM symbols occupied in time domain by the 24-port and/or 48-port patterns of which the CDM type is cdm4-FD2-TD2 are required to be consecutive;
(9) being formed by aggregating, through an FDM or TDM manner, 48-port patterns of which a CDM type is fd-CDM2; corresponding to the foregoing that aggregation is performed, through an FDM or TDM manner, on 2 48-port patterns of an fd-CDM2 pattern type;
(10) being formed by aggregating, through FDM and TDM manners, 24-port patterns of which a CDM type is fd-CDM2; corresponding to the foregoing that aggregation is performed, through FDM and TDM manners, on 4 24-port patterns of an fd-CDM2 pattern type;

In some embodiments, all OFDM symbols occupied in time domain by the 24-port and/or 48-port patterns of which the CDM type is fd-CDM2 are required to be consecutive.

Specifically, as shown in Table 3, one 96-port CSI-RS pattern supports at least one of the following configurations:

**Table 3**

| Configuration | Antenna | Density | CDM Type | (*k̅, l̅*) (k̅ indicates a frequency-domain start position of a CDM group; l̅ indicates a time-domain start position of a CDM group) | CDM Group Index *j* | *k'* | *l*' |
|---|---|---|---|---|---|---|---|
| Option | Ports | | | | | | |
| 1 | 96 | 1, 0.5 | cdm16-FD2-TD8 | (k₀, l₀),(k₁, l₀),(k₂, l₀), (k₃, l₀), (k₄, l₀), (k₅, l₀) | 0,1,2,3, 4,5 | 0,1 | 0,1,2, 3,4,5, 6,7 |
| 2 | 96 | 0.5 | cdm16-FD4-TD4 | 1^{st}PRB: (k₀, l₀),(k₁, l₀),(k₂, l₀), 2^{nd}PRB: (k₀, l₀),(k₁, l₀),(k₂, l₀); or predefining that a minimum occupied frequency-domain resource comprises all subcarriers within two PRBs. | 0,1,2,3,4,5 | 0,1,2,3 | 0,1,2,3 |
| 3 | 96 | 1, 0.5 | cdm16-FD4-TD8 | (k₀, l₀),(k₁, l₀),(k₂, l₀); or predefining that a minimum occupied frequency-domain resource comprises all subcarriers within one PRB. | 0,1,2 | 0,1,2,3 | 0,1,2,3,4,5, 6,7 |
| 4 | 96 | 1, | cdm16- | (k₀, l₀),(k₁, l₀),(k₂, l₀), (k₀, l₁), | 0,1,2,3, | 0,1,2 | 0,1,2, |
| | | 0. 5 | FD4-TD4 | (k₁, l₁),(k₂, l₁); or predefining that a minimum occupied frequency-domain resource comprises all subcarriers within one PRB. | 4,5 | ,3 | 3 |
| 5 | 96 | 1, 0.5 | cdm8-FD2-TD4 | (k₀, l₀),(k₁, l₀),(k₂, l₀), (k₃, l₀), (k₄, l₀) , (k₅, l₀) , (k₀, l₁) , (k₁, l₁) , (k₂, l₁) , (k₃, l₁), (k₄, l₁), (k₅, l₁) | 0,1,2,3, 4,5,6,7, 8,9, 10,11 | 0,1 | 0,1,2, 3 |
| 6 | 96 | 1, 0.5 | cdm4-FD2-TD2 | (k₀. l₀),(k₁, l₀),(k₂, l₀), (k₃, l₀), (k₄, l₀), (k₅, l₀), (k₀, l₀ + 2), (k₁, l₀ + 2) , (k₂, l₀ + 2) , (k₃,l₀ + 2) , (k₄, l₀ + 2) , (k₅, l₀ + 2) , (k₀, l₁),(k₁, l₁),(k₂, l₁), (k₃, l₁), (k₄, l₁), (k₅, l₁), (k₀, l₁ + 2),(k₁, l₁ + 2), (k₂, l₁ + 2) , (k₃, l₁ + 2) , (k₄, l₁ + 2), (k₅, l₁ + 2), | Integers in a range [0,23] | 0,1 | 0,1 |
| 7 | 96 | 1, 0. 5 | cdm4-FD2-TD2 | (k₀, l₀),(k₁, l₀),(k₂, l₀), (k₃, l₀), (k₄, l₀), (k₅, l₀), (k₀, l₀ + 2), (k₁, l₀ + 2) , (k₂, l₀ + 2) , (k₃,l₀ + 2) , (k₄, l₀ + 2) , (k₅, l₀ + 2) , (k₀, l₁),(k₁, l₁),(k₂, l₁), (k₃, l₁), (k₄, l₁) , (k₅, l₁) , (k₀, l₂),(k₁, l₂),(k₂, l₂), (k₃, l₂), (k₄, l₂), (k₅, l₂), | Integers in a range [0,23] | 0,1 | 0,1 |
| 8 | 96 | 1, 0. 5 | cdm4-FD2-TD2 | (k₀, l₀),(k₁, l₀),(k₂, l₀), (k₃, l₀), (k₄, l₀) , (k₅, l₀) , (k₀, l₁),(k₁, l₁),(k₂, l₁), (k₃, l₁), | Integers in a range [0,23] | 0,1 | 0,1 |
| | | | | (k₄, l₁) , (k₃, l₁) , (k₀, l₂),(k₁, l₂),(k₂, l₂), (k₃, l₂), (k₄, l₂) , (k₃, l₂) , (k₀, l₂ + 2) , (k₁, l₂ + 2) , (k₂, l₂ + 2) , (k₃, l₂ + 2) , (k₄, l₂ + 2) , (k₅, l₂ + 2), | | | |
| 9 | 96 | 1, 0. 5 | cdm4-FD2-TD2 | (k₀, l₀),(k₁, l₀),(k₂, l₀), (k₃, l₀), (k₄, l₀) , (k₅, l₀) , (k₀, l1),(k₁, l₁),(k₂,l₁), (k₃, l₁), (k₄, l₁) , (k₅, l₁) , (k₀, l₂),(k₁, l₂),(k₂,l₂), (k₃, l₂), (k₄, l₂) , (k₅, l₂) , (k₀, l₃),(k₁, l₃),(k₂, l₃), (k₃, l₃), (k₄, l₃), (k₅, l₃), | Integers in a range [0,23] | 0,1 | 0,1 |
| 10 | 96 | 1, 0. 5 | fd-CDM2 | (k₀, l₀),(k₁, l₀),(k₂, l₀), (k₃, l₀), (k₄, l₀), (k₅, l₀), (k₀, l₀ + 1), (k₁, l₀ + 1) , (k₂, l₀ + 1) , (k₃, l₀ + 1) , (k₄, l₀ + 1) , (k₅, l₀ + 1), (k₀, l₀ + 2),(k₁, l₀ + 2), (k₂, l₀ + 2) , (k₃, l₀ + 2) , (k₄, l₀ + 2) , (k₅, l₀ + 2) , (k₀, l₀ + 3), (k₁, l₀ + 3) , (k₂, l₀ + 3) , (k₃, l₀ + 3) , (k₄, l₀ + 3) , (k₅, l₀ + 3) , (k₀, l₁),(k₁, l₁),(k₂, l₁), (k₃, l₁), (k₄, l₁), (k₅, l₁), (k₀, l₁ + 1), (k₁, l₁ + 1) , (k₂, l₁ + 1) , (k₃, l₁ + 1) , (k₄, l₁ + 1) , (k₅, l₁ + 1), (k₀, l₁ + 2),(k₁, l₁ + 2), | Integers in a range [0,47] | 0,1 | 0 |
| | | | | (k₂, l₁ + 2) , (k₃, l₁ + 2) , (k₄, l₁ + 2) , (k₅, l₁ + 2) , (k₀, l₁ + 3), (k₁, l₁ + 3) , (k₂, l₁ + 3) , (k₃, l₁ + 3) , (k₄, l₁ + 3) , (k₅, l₁ + 3), | | | |

Table 3 above exemplarily shows 10 different configuration options.

4. A 128-port CSI-RS pattern supports at least one of the following patterns:
(1) being formed by aggregating 4 cdm32-FD4-TD8 groups through an FDM manner; corresponding to the foregoing that aggregation is performed, through an FDM manner, on 4 patterns of a cdm32-FD4-TD8 pattern type;
(2) being formed by aggregating 8 cdm16-FD4-TD4 groups through FDM and TDM manners; corresponding to the foregoing that aggregation is performed, through FDM and TDM manners, on 8 patterns of a cdm16-FD4-TD4 pattern type;
(3) being formed by aggregating, through FDM and TDM manners, 32-port patterns of which a CDM type is cdm8-FD2-TD4; corresponding to the foregoing that aggregation is performed, through FDM and TDM manners, on 4 32-port patterns of a cdm8-FD2-TD4 pattern type;
(4) being formed by aggregating, through a TDM manner, 32-port patterns of which a CDM type is cdm8-FD2-TD4; corresponding to the foregoing that aggregation is performed, through a TDM manner, on 4 32-port patterns of a cdm8-FD2-TD4 pattern type.

Specifically, as shown in Table 4, one 128-port CSI-RS pattern supports at least one of the following configurations:

**Table 4**

| Configuration | Antenna | Density | CDM Type | (*k̅, l̅)* (k̅ indicates a frequency-domain start position of a CDM group; l̅ indicates a time-domain start position of a CDM group) | CDM Group Index *j* | *k'* | *l*' |
|---|---|---|---|---|---|---|---|
| Option | Ports | | | | | | |
| | | | | | | | |
| 1 | 128 | 0.5 | cdm3 2-FD4-TD8 | 1^{st}PRB:(k₀, l₀),(k₁, l₀),(k₂, l₀), 2^{nd}PRB: (k₀, l₀),(k₁, l₀),(k₂, l₀); or predefining that a minimum occupied frequency-domain resource comprises 16 consecutive subcarriers within two PRBs. | 0,1,2,3 | 0, 1, 2, 3 | 0,1, 2,3, 4,5, 6,7 |
| 2 | 128 | 0.5 | cdm1 6-FD4-TD4 | 1) 1^{st}PRB:(k₀, l₀),(k₁, l₀),(k₂, l₀), 2^{nd} PRB:(k₀, l₀),(k₁, l₀),(k₂, l₀); 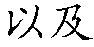 *,* 1^{st}PRB:(k₀, l₁),(k₁, l₁),(k₂, l₁), 2^{nd}PRB: (k₀, l₁),(k₁, l₁),(k₂, l₁); or 2) predefining that a minimum occupied frequency-domain resource comprises 16 consecutive subcarriers within two PRBs. | 0,1,2, 3,4,5, 6,7 | 0, 1, 2, 3 | 0,1, 2,3 |
| 3 | 128 | 1, 0.5 | cdm1 6-FD4-TD4 | (k₀, l₀),(k₁, l₀),(k₀, l₁), (k₁, l₁); (k₀, l₂),(k₁, l₂),(k₀, l₃), (k₁, l₃) | 0,1,2, 3,4,5, 6,7 | 0, 1, 2, 3 | 0,1, 2,3 |
| 4 | 128 | 0.5 | cdm8-FD2-TD4 | 1^{st}PRB: (k₀, l₀) , (k₁, l₀) , (k₂, l₀) , (k₃, l₀), (k₄, l₀), (k₅, l₀), 2^{nd} PRB:(k₀, l₀),(k₁, l₀); and, 1^{st}PRB: (k₀, l₁) , (k₁, l₁) , (k₂, l₁) , (k₃, l₁), (k₄, l₁), (k₅, l₁), 2^{nd} PRB:(k₀, l₁),(k₁, l₁); | 0,1,2, 3,4,5, 6,7,8, 9, 10,11, 12,13, 14,15 | 0, 1 | 0,1, 2,3 |
| 5 | 128 | 1, 0.5 | cdm8-FD2-TD4 | (k₀, l₀) , (k₁, l₀) , (k₂, l₀) , (k₃, l₀), (k₀, l₁),(k₁, l₁ ),(k₂, l₁), (k₃, l₁), (k₀, l₂),(k₁, l₂),(k₂, l₂), (k₃, l₂), (k₀, l₃),(k₁, l₃),(k₂, l₃), (k₃, l₃), | 0,1,2, 3,4,5, 6,7,8, 9, 10,11, | 0, 1 | 0,1, 2,3 |
| | | | | | 12,13, 14,15 | | |

The above tables may be referred to mutually, and repeated contents are not repeated herein; in addition, the above pattern configuration information may include contents of the above tables, but is not limited thereto.

Part V, regarding orthogonal cover codes used by ports;
1. Within one cdm16-FD4-TD4 group, 16 antenna ports occupy a same RE position for transmission by using a CDM manner based on FD-4OCC+TD-4OCC. Table 5 below provides one FD-4OCC and TD-4OCC, where each OCC index in the table corresponds to one CSI-RS port (corresponding to the foregoing that, for the cdm16-FD4-TD4 pattern type, the OCC includes frequency division FD-4OCC and time division TD-4OCC, and different OCC indexes correspond to different FD-4OCC and/or TD-4OCC). The present solution does not exclude using other orthogonal cover codes having a length of 4.

**Table 5**

| OCC Index | FD-4OCC [W_{f}(0) W_{f}(1) W_{f}(2) W_{f}(3)] | TD-4OCC [Wₜ(0) Wₜ(1) Wₜ(2) Wₜ(3) |
|---|---|---|
| 0 | [+1 +1 +1 +1] | [+1 +1 +1 +1] |
| 1 | [+1 -1 +1 -1] | [+1 +1+1 +1] |
| 2 | [+1 +1 -1 -1] | [+1 +1 +1 +1] |
| 3 | [+1 -1 -1 +1] | [+1 +1 +1 +1] |
| 4 | [+1 +1 +1 +1] | [+1 -1 +1 -1] |
| 5 | [+1 -1 +1 -1] | [+1 -1 +1 -1] |
| 6 | [+1 +1 -1 -1] | [+1 -1 +1 -1] |
| 7 | [+1 -1 -1 +1] | [+1 -1 +1 -1] |
| 8 | [+1 +1 +1 +1] | [+1 +1 -1 -1] |
| 9 | [+1 -1 +1 -1] | [+1 +1 -1 -1] |
| 10 | [+1 +1 -1 -1] | [+1 +1 -1 -1] |
| 11 | [+1 -1 -1 +1] | [+1 +1 -1 -1] |
| 12 | [+1 +1 +1 +1] | [+1 -1 -1 +1] |
| 13 | [+1 -1 +1 -1] | [+1 -1 -1 +1] |
| 14 | [+1 +1 -1 -1] | [+1 -1 -1 +1] |
| 15 | [+1 -1 -1 +1] | [+1 -1 -1 +1] |

Wherein, W_{f}(0) indicates a first OCC value under FD, and other cases are similar, for example, Wₜ(0) indicates a first OCC value under TD, which is not repeated herein.

2. Within one cdm16-FD2-TD8 group, 16 antenna ports occupy a same RE position for transmission by using a CDM manner based on FD-2OCC+TD-8OCC. Table 6 below provides one FD-2OCC and TD-8OCC, where each OCC index in the table corresponds to one CSI-RS port (corresponding to the foregoing that, for the cdm16-FD2-TD8 pattern type, the OCC includes FD-2OCC and TD-8OCC, and different OCC indexes correspond to different FD-2OCC and/or TD-8OCC). The present solution does not exclude using other orthogonal cover codes having lengths of 2 and 8.

**Table 6**

| OCC Index | FD-2OCC [W_{f}(0) W_{f}(1)] | TD-8OCC [Wₜ(0) Wₜ(1) Wₜ(2) Wₜ(3) Wₜ(4) Wₜ(5) Wₜ(6) Wₜ(7)] |
|---|---|---|
| 0 | [+1 +1] | [+1 +1 +1 +1 +1 +1 +1 +1] |
| 1 | [+1 -1] | [+1 +1 +1 +1 +1 +1 +1 +1] |
| 2 | [+1 +1] | [+1 -1 +1 -1 +1 -1 +1 -1] |
| 3 | [+1 -1] | [+1 -1 +1 -1 +1 -1 +1 -1] |
| 4 | [+1 +1] | [+1 +1 -1 -1 +1 +1 -1 -1] |
| 5 | [+1 -1] | [+1 +1 -1 -1 +1 +1 -1 -1] |
| 6 | [+1 +1] | [+1 -1 -1 +1 +1 -1 -1 +1] |
| 7 | [+1 -1] | [+1 -1 -1 +1 +1 -1 -1 +1] |
| 8 | [+1 +1] | [+1 +1 +1 +1 -1 -1 -1 -1] |
| 9 | [+1 -1] | [+1 +1 +1 +1 -1 -1 -1 -1] |
| 10 | [+1 +1] | [+1 -1 +1 -1 -1 +1 -1 +1] |
| 11 | [+1 -1] | [+1 -1 +1 -1 -1 +1 -1 +1] |
| 12 | [+1 +1] | [+1 +1 -1 -1 -1 -1 +1 +1] |
| 13 | [+1 -1] | [+1 +1 -1 -1 -1 -1 +1 +1] |
| 14 | [+1 +1] | [+1 -1 -1 +1 -1 +1 +1 -1] |
| 15 | [+1 -1] | [+1 -1 -1 +1 -1 +1 +1 -1] |

3. Within one cdm32-FD4-TD8 group, 32 antenna ports occupy a same RE position for transmission by using a CDM manner based on FD-4OCC+TD-8OCC. Table 7 below provides one FD-4OCC and TD-8OCC, where each OCC index in the table corresponds to one CSI-RS port (corresponding to the foregoing that, for the cdm32-FD4-TD8 pattern type, the OCC includes FD-4OCC and TD-8OCC, and different OCC indexes correspond to different FD-4OCC and/or TD-8OCC). The present solution does not exclude using other orthogonal cover codes having lengths of 4 and 8.

**Table 7**

| OCC Index | FD-4OCC [W_{f}(0) W_{f}(1) W_{f}(2) W_{f}(3)] | TD-8OCC [Wₜ(0) Wₜ(1) Wₜ(2) Wₜ(3) Wₜ(4) Wₜ(5) Wₜ(6) Wₜ(7)] |
|---|---|---|
| 0 | [+1 +1 +1 +1] | [+1 +1 +1 +1 +1 +1 +1 +1] |
| 1 | [+1 -1 +1 -1] | [+1 +1 +1 +1 +1 +1 +1 +1] |
| 2 | [+1 +1 -1 -1] | [+1 +1 +1 +1 +1 +1 +1 +1] |
| 3 | [+1 -1 -1 +1] | [+1 +1 +1 +1 +1 +1 +1 +1] |
| 4 | [+1 +1 +1 +1] | [+1 -1 +1 -1 +1 -1 +1 -1] |
| 5 | [+1 -1 +1 -1] | [+1 -1 +1 -1 +1 -1 +1 -1] |
| 6 | [+1 +1 -1 -1] | [+1 -1 +1 -1 +1 -1 +1 -1] |
| 7 | [+1 -1 -1 +1] | [+1 -1 +1 -1 +1 -1 +1 -1] |
| 8 | [+1 +1 +1 +1] | [+1 +1 -1 -1 +1 +1 -1 -1] |
| 9 | [+1 -1 +1 -1] | [+1 +1 -1 -1 +1 +1 -1 -1] |
| 10 | [+1 +1 -1 -1] | [+1 +1 -1 -1 +1 +1 -1 -1] |
| 11 | [+1 -1 -1 +1] | [+1 +1 -1 -1 +1 +1 -1 -1] |
| 12 | [+1 +1 +1 +1] | [+1 -1 -1 +1 +1 -1 -1 +1] |
| 13 | [+1 -1 +1 -1] | [+1 -1 -1 +1 +1 -1 -1 +1] |
| 14 | [+1 +1 -1 -1] | [+1 -1 -1 +1 +1 -1 -1 +1] |
| 15 | [+1 -1 -1 +1] | [+1 -1 -1 +1 +1 -1 -1 +1] |
| 16 | [+1 +1 +1 +1] | [+1 +1 +1 +1 -1 -1 -1 -1] |
| 17 | [+1 -1 +1 -1] | [+1 +1 +1 +1 -1 -1 -1 -1] |
| 18 | [+1 +1 -1 -1] | [+1 +1 +1 +1 -1 -1 -1 -1] |
| 19 | [+1 -1 -1 +1] | [+1 +1 +1 +1 -1 -1 -1 -1] |
| 20 | [+1 +1 +1 +1] | [+1 -1 +1 -1 -1 +1 -1 +1] |
| 21 | [+1 -1 +1 -1] | [+1 -1 +1 -1 -1 +1 -1 +1] |
| 22 | [+1 +1 -1 -1] | [+1 -1 +1 -1 -1 +1 -1 +1] |
| 23 | [+1 -1 -1 +1] | [+1 -1 +1 -1 -1 +1 -1 +1] |
| 24 | [+1 +1 +1 +1] | [+1 +1 -1 -1 -1 -1 +1 +1] |
| 25 | [+1 -1 +1 -1] | [+1 +1 -1 -1 -1 -1 +1 +1] |
| 26 | [+1 +1 -1 -1] | [+1 +1 -1 -1 -1 -1 +1 +1] |
| 27 | [+1 -1 -1 +1] | [+1 +1 -1 -1 -1 -1 +1 +1] |
| 28 | [+1 +1 +1 +1] | [+1 -1 -1 +1 -1 +1 +1 -1] |
| 29 | [+1 -1 +1 -1] | [+1 -1 -1 +1 -1 +1 +1 -1] |
| 30 | [+1 +1 -1 -1] | [+1 -1 -1 +1 -1 +1 +1 -1] |
| 31 | [+1 -1 -1 +1] | [+1 -1 -1 +1 -1 +1 +1 -1] |

The above Tables 5-7 may be referred to mutually, and repeated contents are not repeated herein.

The present solution is specifically described below with reference to examples.

### Embodiment 1:

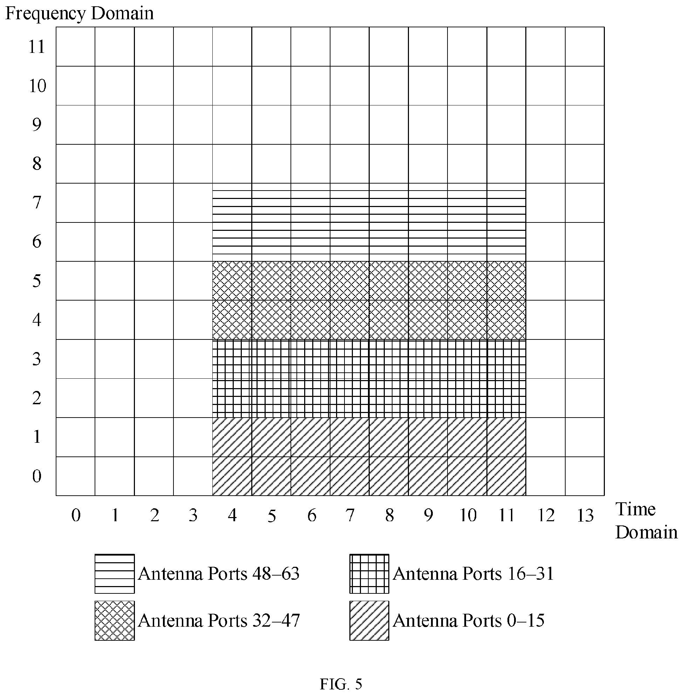

1) selecting, by a base station, one CSI-RS pattern from a CSI-RS configuration set.
   For example, configuration option 2 (parameter setting of this row) is selected from a predefined 64-port configuration set (Table 2), and for example: l₀=4, k₀=0, k₁=2, k₂=4, k₃=6, and density=1; the CSI-RS pattern can implement full power utilization, and has low overheads for time-frequency position indication.
2) transmitting, by the base station, configuration information of the selected CSI-RS pattern to a terminal; corresponding to the foregoing transmitting the target configuration information to the terminal. The configuration information includes the number of antenna ports (64), the CDM type (cdm16-FD2-TD8), the density (1), the time domain position indication (l0=4), and the frequency domain position indication (001111); corresponding to the foregoing that the target configuration information includes: the number of antenna ports, density information, CDM type information, CDM group frequency domain position indication information, and CDM group time domain position indication information.
3) transmitting, by the base station, the CSI-RS to the terminal according to the selected CSI-RS pattern.
   The selected CSI-RS pattern is formed by aggregating 4 cdm16-FD2-TD8 groups, as shown in FIG. 5; 16 antenna ports can perform orthogonal transmission within one cdm16-FD2-TD8 group, and each antenna port occupies all REs within one cdm16-FD2-TD8 group. The 16 antenna ports within one cdm16-FD2-TD8 group are distinguished by using different OCCs in Table 6.
4) receiving, by the terminal, the configuration information of the CSI-RS; corresponding to the foregoing receiving the target configuration information transmitted by the network device.
   According to the number of ports, the CDM type, the density, the time-domain position indication and the frequency-domain position indication in the configuration information and in combination with a predefined configuration set (see Tables 1 to 4 above), the terminal determines which row in the configuration set is used, where, in this embodiment, configuration 2 is determined. According to configuration 2, the terminal determines the pattern of the CSI-RS. Subsequently, according to the time-domain position indication and the frequency-domain position indication in the configuration information and in combination with the pattern of the CSI-RS, the terminal determines REs occupied by the CSI-RS in one PRB and one slot, where, in this embodiment, the REs may be: REs corresponding to OFDM symbol indexes 4 to 11 in time domain and subcarrier indexes 0 to 7 in frequency domain.
5) After parsing out the time-frequency position of the CSI-RS, the terminal receives the CSI-RS on corresponding time-frequency resources, and performs channel measurement.

### Embodiment 2:

1) The base station selects one CSI-RS pattern from a CSI-RS configuration set.

For example, configuration 1 is selected from a predefined 64-port configuration set (Table 2), and l₀=4 (k has no start-position limitation), and the frequency domain occupies continuous 16 subcarriers (starting from 0 or another position); the CSI-RS pattern can realize full power utilization.

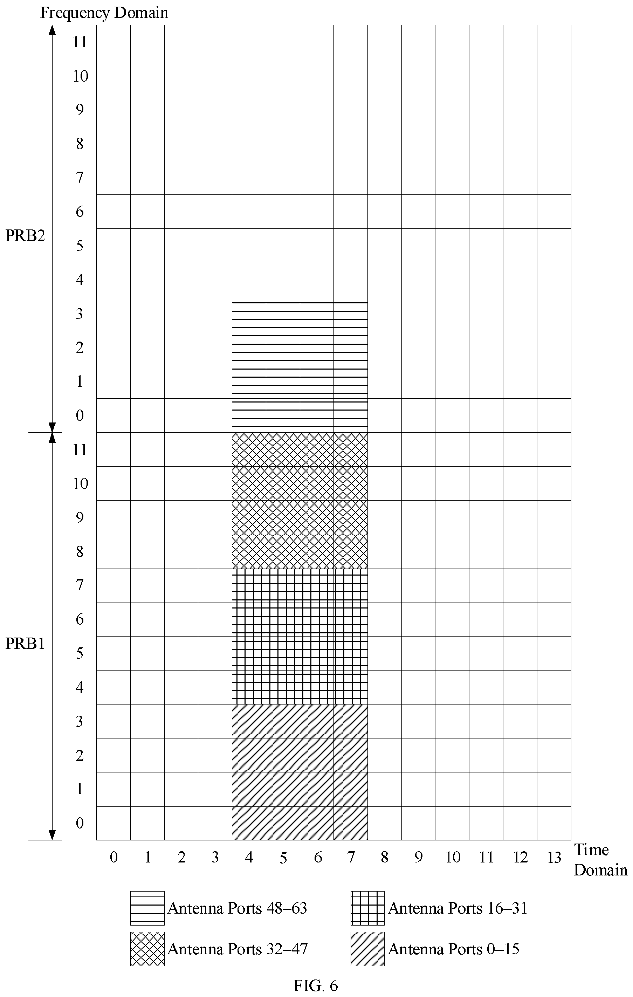

The selected CSI-RS pattern is formed by aggregating 4 CDM16-FD4-TD4 groups, as shown in FIG. 6; 16 antenna ports can be orthogonally transmitted within one cdm16-FD4-TD4 group, and each antenna port occupies all REs in one cdm16-FD4-TD4 group. The 16 antenna ports in one cdm16-FD4-TD4 group are distinguished by using different OCCs in Table 5.

2) The base station transmits configuration information of the selected CSI-RS pattern to the terminal; correspondingly, the target configuration information is transmitted to the terminal. The configuration information includes the number of ports (64), the CDM type (cdm16-FD4-TD4), the density (0.5), the time-domain position indication (l₀=4) and the frequency-domain position indication (it is predefined that a minimum frequency-domain resource occupied by all ports of one CSI-RS resource is a plurality of continuous subcarriers in two PRBs, and a start position of the CSI-RS resource is a first subcarrier of a PRB with a smallest index value); correspondingly, the target configuration information includes: the number of antenna ports, density information, CDM type information, CDM group frequency-domain position indication information and CDM group time-domain position indication information.

3) The base station transmits the CSI-RS to the terminal according to the selected CSI-RS pattern.

4) The terminal receives configuration information of the CSI-RS; correspondingly, the target configuration information transmitted by the network device is received.

According to the number of ports, the CDM type, the density, the time-domain position indication and the frequency-domain position indication in the configuration information and in combination with a predefined configuration set (see Tables 1 to 4 above), the terminal determines which row in the configuration set is used, where, in this embodiment, configuration 1 is determined. According to configuration 1, the terminal determines the pattern of the CSI-RS. Subsequently, according to the time-domain position indication and the frequency-domain position indication in the configuration information and in combination with the pattern of the CSI-RS, the terminal determines REs occupied by the CSI-RS in two adjacent PRBs and one slot, where, in this embodiment, the REs may be: REs corresponding to OFDM symbol indexes 4 to 7 in time domain, subcarrier indexes 0 to 11 of PRB1 in frequency domain and subcarrier indexes 0 to 3 of PRB2 in frequency domain.

5) After parsing out the time-frequency position of the CSI-RS, the terminal receives the CSI-RS on corresponding time-frequency resources, and performs channel measurement.

### Embodiment 3:

1) The base station selects one CSI-RS pattern from a CSI-RS configuration set.
   For example, configuration 4 is selected from a predefined 48-port configuration set (Table 1), and l₀=4, l₁=10, k₀=6, k₁=8, and k₂=10; the CSI-RS pattern can realize 1/2 full power utilization, overhead of time-frequency position indication is the same as that in Rel-15, and the density may be 1 or 0.5.
2) The base station transmits configuration information of the selected CSI-RS pattern to the terminal; correspondingly, the target configuration information is transmitted to the terminal. The configuration information includes the number of ports (48), the CDM type (cdm8-FD2-TD4), the density (1), the time-domain position indication (l₀=4, l₁=10) and the frequency-domain position indication (111000); correspondingly, the target configuration information includes: the number of antenna ports, density information, CDM type information, CDM group frequency-domain position indication information and CDM group time-domain position indication information.
3) The base station transmits the CSI-RS to the terminal according to the selected CSI-RS pattern.
4) The terminal receives configuration information of the CSI-RS; correspondingly, the target configuration information transmitted by the network device is received.
   According to the number of ports, the CDM type, the density, the time-domain position indication and the frequency-domain position indication in the configuration information and in combination with a predefined configuration set (see Tables 1 to 4 above), the terminal determines which row in the configuration set is used, where, in this embodiment, configuration 4 is determined. According to configuration 4, the terminal determines the pattern of the CSI-RS (specifically, the pattern of the CSI-RS may be obtained by aggregating, in a TDM manner, two 24-port patterns of a cdm8-FD2-TD4 pattern type). Subsequently, according to the time-domain position indication and the frequency-domain position indication in the configuration information and in combination with the pattern of the CSI-RS, the terminal determines REs occupied by the CSI-RS in one PRB and one slot, where, in this embodiment, the REs may be: REs corresponding to OFDM symbol indexes 4 to 7 and 10 to 13 in time domain, and subcarrier indexes 6 to 11 in frequency domain.
5) After parsing out the time-frequency position of the CSI-RS, the terminal receives the CSI-RS on corresponding time-frequency resources, and performs channel measurement.

### Embodiment 4:

1) The base station selects one CSI-RS pattern from a CSI-RS configuration set.
   For example, configuration 6 is selected from a predefined 96-port configuration set (Table 3), and l₀=4, l₁=10, k₀=0, k₁=2, k₂=4, k₃=6, k₄=8, and k₅=10; the CSI-RS pattern can realize 1/4 full power utilization, and overhead of time-frequency position indication is the same as that in Rel-15.
2) The base station transmits configuration information of the selected CSI-RS pattern to the terminal; correspondingly, the target configuration information is transmitted to the terminal. The configuration information includes the number of ports (96), the CDM type (cdm4-FD2-TD4), the density (1), the time-domain position indication (l₀=4, l₁=10) and the frequency-domain position indication (111111); correspondingly, the target configuration information includes: the number of antenna ports, density information, CDM type information, CDM group frequency-domain position indication information and CDM group time-domain position indication information.
3) The base station transmits the CSI-RS to the terminal according to the selected CSI-RS pattern.
4) The terminal receives configuration information of the CSI-RS; correspondingly, the target configuration information transmitted by the network device is received.
   According to the number of ports, the CDM type, the density, the time-domain position indication and the frequency-domain position indication in the configuration information and in combination with a predefined configuration set (see Tables 1 to 4 above), the terminal determines which row in the configuration set is used, where, in this embodiment, configuration 6 is determined. According to configuration 6, the terminal determines the pattern of the CSI-RS (specifically, the pattern of the CSI-RS may be obtained by aggregating, in an FDM manner, two 48-port patterns of a cdm8-FD2-TD4 pattern type). Subsequently, according to the time-domain position indication and the frequency-domain position indication in the configuration information and in combination with the pattern of the CSI-RS, the terminal determines REs occupied by the CSI-RS in one PRB and one slot, where, in this embodiment, the REs may be: REs corresponding to OFDM symbol indexes 4 to 7 and 10 to 13 in time domain, and subcarrier indexes 0 to 11 in frequency domain.
5) After parsing out the time-frequency position of the CSI-RS, the terminal receives the CSI-RS on corresponding time-frequency resources, and performs channel measurement.

### Embodiment 5:

1) The base station selects one CSI-RS pattern from a CSI-RS configuration set.

For example, configuration 1 is selected from a predefined 128-port configuration set (Table 4), and l₀=4, and the frequency domain occupies continuous 16 subcarriers; the CSI-RS pattern can realize full power utilization.

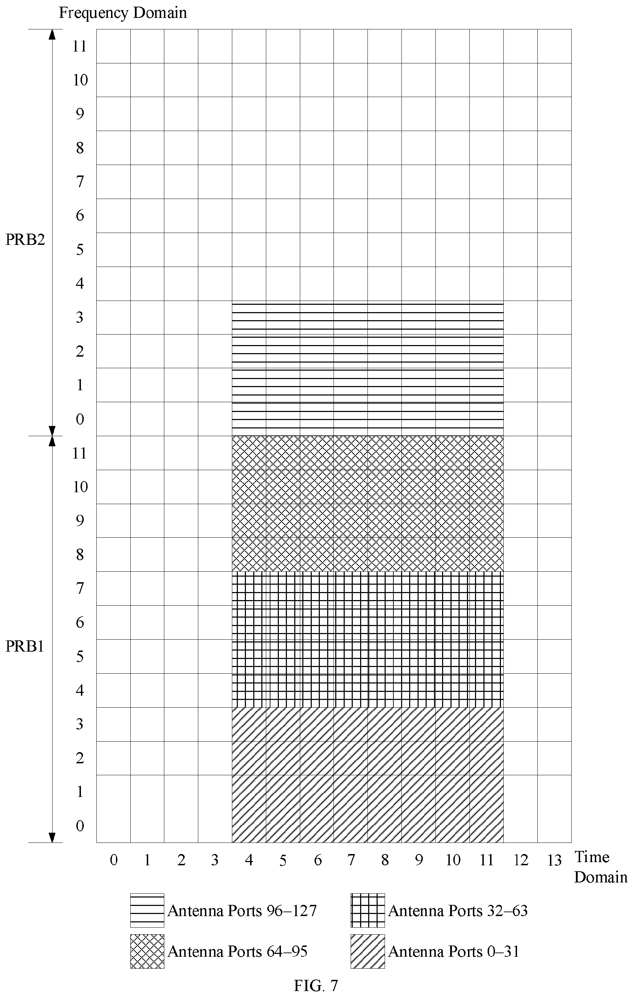

The selected CSI-RS pattern is formed by aggregating 4 cmd32-FD4-TD8 groups, as shown in FIG. 7; 32 antenna ports can be orthogonally transmitted within one cmd32-FD4-TD8 group, and each antenna port occupies all REs in one cmd32-FD4-TD8 group. The 32 antenna ports in one cmd32-FD4-TD8 group are distinguished by using different OCCs in Table 7.

2) The base station transmits configuration information of the selected CSI-RS pattern to the terminal; correspondingly, the target configuration information is transmitted to the terminal. The configuration information includes the number of ports (128), the CDM type (cdm32-FD4-TD8), the density (0.5), the time-domain position indication (l₀=4) and the frequency-domain position indication (it is predefined that a minimum frequency-domain resource occupied by all ports of one CSI-RS resource is a plurality of continuous subcarriers in two PRBs, and a start position is a first subcarrier of a PRB with a smallest index value); correspondingly, the target configuration information includes: the number of antenna ports, density information, CDM type information, CDM group frequency-domain position indication information and CDM group time-domain position indication information.

3) The base station transmits the CSI-RS to the terminal according to the selected CSI-RS pattern.

4) The terminal receives configuration information of the CSI-RS; correspondingly, the target configuration information transmitted by the network device is received.

According to the number of ports, the CDM type, the density, the time-domain position indication and the frequency-domain position indication in the configuration information and in combination with a predefined configuration set (see Tables 1 to 4 above), the terminal determines which row in the configuration set is used, where, in this embodiment, configuration 1 is determined. According to configuration 1, the terminal determines the pattern of the CSI-RS. Subsequently, according to the time-domain position indication and the frequency-domain position indication in the configuration information and in combination with the pattern of the CSI-RS, the terminal determines REs occupied by the CSI-RS in two continuous PRBs and one slot, where, in this embodiment, the REs may be: REs corresponding to OFDM symbol indexes 4 to 11 in time domain, subcarrier indexes 0 to 11 of PRB1 in frequency domain and subcarrier indexes 0 to 3 of PRB2 in frequency domain.

5) After parsing out the time-frequency position of the CSI-RS, the terminal receives the CSI-RS on corresponding time-frequency resources, and performs channel measurement.

From the above, the present solution provides a CSI-RS pattern with more than 32 ports; and the pattern solution of the present solution can support equal-power transmission of the CSI-RS without increasing additional CSI-RS resource indication overhead and without reducing the CSI-RS density, and can realize full power utilization of the CSI-RS.

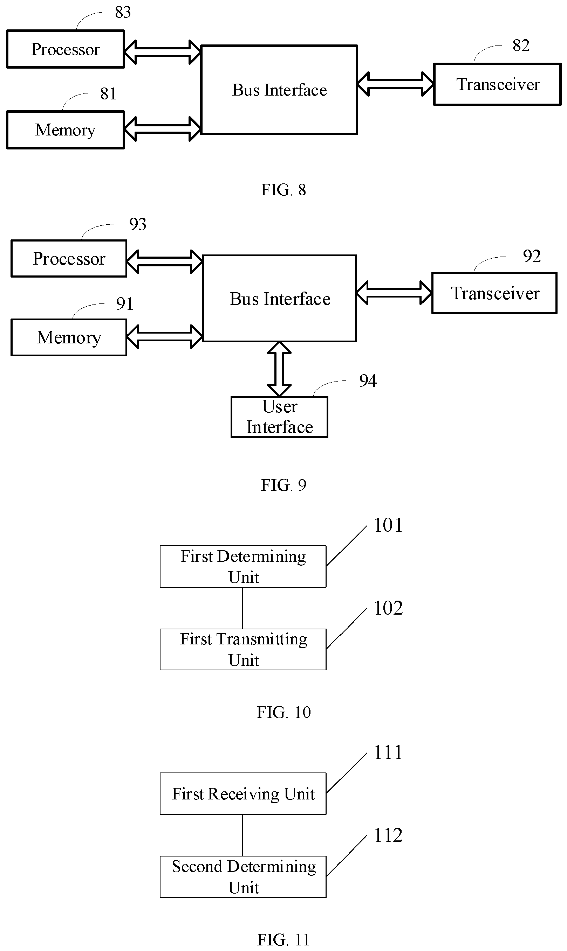

An embodiment of the present disclosure further provides an information transmission apparatus, where the information transmission apparatus is a network device. As shown in FIG. 8, the information transmission apparatus includes a memory 81, a transceiver 82, and a processor 83:
the memory 81 is configured to store a computer program; the transceiver 82 is configured to transmit and receive data under control of the processor 83; the processor 83 is configured to read the computer program in the memory 81 and perform the following operations:
determining target configuration information according to a selected channel state information reference signal (CSI-RS) pattern;
transmitting, through the transceiver 82, the target configuration information to a terminal;
where a number of ports corresponding to the CSI-RS is greater than 32;
the CSI-RS pattern is a pattern located in one or two slots in time domain and in one or two physical resource blocks (PRBs) in frequency domain; the CSI-RS pattern is obtained by aggregating, through time division multiplexing (TDM), and/or frequency division multiplexing (FDM) at least one code division multiplexing (CDM) type pattern; the CDM type includes at least one of the following:
   a 16-port pattern type, a 32-port pattern type, an 8-port pattern type, a 4-port pattern type, and a 2-port pattern type;
   the target configuration information includes: the number of antenna ports, density information, CDM type information, CDM group frequency-domain position indication information, and CDM group time-domain position indication information; one CDM group corresponds to one CDM type.

In the information transmission apparatus provided in the embodiments of the present disclosure, by determining target configuration information according to a selected channel state information reference signal (CSI-RS) pattern, and transmitting the target configuration information to a terminal, where a number of ports corresponding to the CSI-RS is greater than 32; the CSI-RS pattern is a pattern located in one or two slots in time domain and in one or two physical resource blocks (PRBs) in frequency domain; the CSI-RS pattern is obtained by aggregating, through time division multiplexing (TDM), and/or frequency division multiplexing (FDM) at least one code division multiplexing (CDM) type pattern; the CDM type includes at least one of the following: a 16-port pattern type, a 32-port pattern type, an 8-port pattern type, a 4-port pattern type, and a 2-port pattern type; the target configuration information includes: the number of antenna ports, density information, CDM type information, CDM group frequency-domain position indication information, and CDM group time-domain position indication information; and one CDM group corresponds to one CDM type; information transmission related to a CSI-RS pattern corresponding to more than 32 ports can be supported.

Specifically, the transceiver 82 is configured to receive and transmit data under control of the processor 83.

In FIG. 8, a bus architecture may include any number of interconnected buses and bridges, and specifically, various circuits of one or more processors represented by the processor 83 and a memory represented by the memory 81 are linked together. The bus architecture may further link together various other circuits, such as peripheral devices, voltage regulators, and power management circuits, which are well known in the art, and therefore, further description thereof is omitted herein. A bus interface provides an interface. The transceiver 82 may be a plurality of elements, that is, include a transmitter and a receiver, so as to provide units for communicating with various other apparatuses over transmission media, where the transmission media include wireless channels, wired channels, optical fibers and other transmission media. The processor 83 is responsible for managing the bus architecture and general processing, and the memory 81 may store data used by the processor 83 when performing operations.

The processor 83 may be a Central Processing Unit, CPU, an Application Specific Integrated Circuit, ASIC, a Field-Programmable Gate Array, FPGA, or a Complex Programmable Logic Device, CPLD, and the processor may also adopt a multi-core architecture.

For the information transmission apparatus provided in this embodiment, the content of the foregoing method embodiment on the network device side is used, corresponding technical features are the same, and details are not described herein again.

It should be noted that the above-mentioned apparatus provided in the embodiments of the present disclosure can implement all method steps implemented by the above-mentioned method embodiments on the network device side, and can achieve the same technical effects. Therefore, the parts and beneficial effects in this embodiment that are the same as those in the method embodiments will not be described in detail herein again.

An embodiment of the present disclosure further provides an information transmission apparatus, where the information transmission apparatus is a terminal. As shown in FIG. 9, the information transmission apparatus includes a memory 91, a transceiver 92, and a processor 93:
the memory 91 is configured to store a computer program; the transceiver 92 is configured to transmit and receive data under control of the processor 93; the processor 93 is configured to read the computer program in the memory 91 and perform the following operations:
receiving, through the transceiver 92, target configuration information transmitted by a network device;
determining a selected CSI-RS pattern according to the target configuration information;
where a number of ports corresponding to the CSI-RS is greater than 32;
the CSI-RS pattern is a pattern located in one or two slots in time domain and in one or two PRBs in frequency domain; the CSI-RS pattern is obtained by aggregating, through TDM and/or FDM, at least one CDM type pattern; the CDM type includes at least one of the following:
   a 16-port pattern type, a 32-port pattern type, an 8-port pattern type, a 4-port pattern type, and a 2-port pattern type;
   the target configuration information includes: the number of antenna ports, density information, CDM type information, CDM group frequency-domain position indication information, and CDM group time-domain position indication information; one CDM group corresponds to one CDM type.

In the information transmission apparatus provided in the embodiments of the present disclosure, by receiving target configuration information transmitted by a network device, and determining a selected CSI-RS pattern according to the target configuration information, where a number of ports corresponding to the CSI-RS is greater than 32; the CSI-RS pattern is a pattern located in one or two slots in time domain and in one or two PRBs in frequency domain; the CSI-RS pattern is obtained by aggregating, through TDM and/or FDM, at least one CDM type pattern; the CDM type includes at least one of the following: a 16-port pattern type, a 32-port pattern type, an 8-port pattern type, a 4-port pattern type, and a 2-port pattern type; the target configuration information includes: the number of antenna ports, density information, CDM type information, CDM group frequency-domain position indication information, and CDM group time-domain position indication information; and one CDM group corresponds to one CDM type; information transmission related to a CSI-RS pattern corresponding to more than 32 ports can be supported.

Specifically, the transceiver 92 is configured to receive and transmit data under control of the processor 93.

In FIG. 9, a bus architecture may include any number of interconnected buses and bridges, and specifically, various circuits of one or more processors represented by the processor 93 and a memory represented by the memory 91 are linked together. The bus architecture may further link together various other circuits, such as peripheral devices, voltage regulators, and power management circuits, which are well known in the art, and therefore, further description thereof is omitted herein. A bus interface provides an interface. The transceiver 92 may be a plurality of elements, that is, include a transmitter and a receiver, so as to provide units for communicating with various other apparatuses over transmission media, where the transmission media include wireless channels, wired channels, optical fibers and other transmission media. For different user equipment, the user interface 94 may further be an interface capable of externally or internally connecting required devices, and the connected devices include, but are not limited to, a keypad, a display, a speaker, a microphone, a joystick, and the like.

The processor 93 is responsible for managing the bus architecture and general processing, and the memory 91 may store data used by the processor 93 when performing operations.

In some embodiments, the processor 93 may be a Central Processing Unit, CPU, an Application Specific Integrated Circuit, ASIC, a Field-Programmable Gate Array, FPGA, or a Complex Programmable Logic Device, CPLD, and the processor may also adopt a multi-core architecture.

The processor is configured to invoke the computer program stored in the memory, so as to execute, according to obtained executable instructions, any one of the methods provided in the embodiments of the present disclosure. The processor and the memory may also be physically arranged separately.

For the information transmission apparatus provided in this embodiment, the content of the foregoing method embodiment on the terminal side is used, corresponding technical features are corresponding, and details are not described herein again.

It should be noted that the above-mentioned apparatus provided in the embodiments of the present disclosure can implement all method steps implemented by the above-mentioned method embodiments on the terminal side, and can achieve the same technical effects. Therefore, the parts and beneficial effects in this embodiment that are the same as those in the method embodiments will not be described in detail herein again.

An embodiment of the present disclosure further provides an information transmission apparatus, applied to a network device. As shown in FIG. 10, the information transmission apparatus includes:
a first determining unit 101, configured to determine target configuration information according to a selected channel state information reference signal (CSI-RS) pattern;
a first sending unit 102, configured to transmit the target configuration information to a terminal;
where a number of ports corresponding to the CSI-RS is greater than 32;
the CSI-RS pattern is a pattern located in one or two slots in time domain and in one or two physical resource blocks (PRBs) in frequency domain; the CSI-RS pattern is obtained by aggregating, through time division multiplexing (TDM), and/or frequency division multiplexing (FDM) at least one code division multiplexing (CDM) type pattern; the CDM type includes at least one of the following:
   a 16-port pattern type, a 32-port pattern type, an 8-port pattern type, a 4-port pattern type, and a 2-port pattern type;
   the target configuration information includes: the number of antenna ports, density information, CDM type information, CDM group frequency-domain position indication information, and CDM group time-domain position indication information; one CDM group corresponds to one CDM type.

In the information transmission apparatus provided in the embodiments of the present disclosure, by determining target configuration information according to a selected channel state information reference signal (CSI-RS) pattern, and transmitting the target configuration information to a terminal, where a number of ports corresponding to the CSI-RS is greater than 32; the CSI-RS pattern is a pattern located in one or two slots in time domain and in one or two physical resource blocks (PRBs) in frequency domain; the CSI-RS pattern is obtained by aggregating, through time division multiplexing (TDM), and/or frequency division multiplexing (FDM) at least one code division multiplexing (CDM) type pattern; the CDM type includes at least one of the following: a 16-port pattern type, a 32-port pattern type, an 8-port pattern type, a 4-port pattern type, and a 2-port pattern type; the target configuration information includes: the number of antenna ports, density information, CDM type information, CDM group frequency-domain position indication information, and CDM group time-domain position indication information; and one CDM group corresponds to one CDM type; information transmission related to a CSI-RS pattern corresponding to more than 32 ports can be supported.

For the information transmission apparatus provided in this embodiment, the content of the foregoing method embodiment on the network device side is used, corresponding technical features are corresponding, and details are not described herein again.

It should be noted that the above-mentioned apparatus provided in the embodiments of the present disclosure can implement all method steps implemented by the above-mentioned method embodiments on the network device side, and can achieve the same technical effects. Therefore, the parts and beneficial effects in this embodiment that are the same as those in the method embodiments will not be described in detail herein again.

An embodiment of the present disclosure further provides an information transmission apparatus, applied to a terminal. As shown in FIG. 11, the information transmission apparatus includes:
a first receiving unit 111, configured to receive target configuration information transmitted by a network device;
a second determining unit 112, configured to determine a selected CSI-RS pattern according to the target configuration information;
where a number of ports corresponding to the CSI-RS is greater than 32;
the CSI-RS pattern is a pattern located in one or two slots in time domain and in one or two PRBs in frequency domain; the CSI-RS pattern is obtained by aggregating, through TDM and/or FDM, at least one CDM type pattern; the CDM type includes at least one of the following:
   a 16-port pattern type, a 32-port pattern type, an 8-port pattern type, a 4-port pattern type, and a 2-port pattern type;
   the target configuration information includes: the number of antenna ports, density information, CDM type information, CDM group frequency-domain position indication information, and CDM group time-domain position indication information; one CDM group corresponds to one CDM type.

In the information transmission apparatus provided in the embodiments of the present disclosure, by receiving target configuration information transmitted by a network device, and determining a selected CSI-RS pattern according to the target configuration information, where a number of ports corresponding to the CSI-RS is greater than 32; the CSI-RS pattern is a pattern located in one or two slots in time domain and in one or two PRBs in frequency domain; the CSI-RS pattern is obtained by aggregating, through TDM and/or FDM, at least one CDM type pattern; the CDM type includes at least one of the following: a 16-port pattern type, a 32-port pattern type, an 8-port pattern type, a 4-port pattern type, and a 2-port pattern type; the target configuration information includes: the number of antenna ports, density information, CDM type information, CDM group frequency-domain position indication information, and CDM group time-domain position indication information; and one CDM group corresponds to one CDM type; information transmission related to a CSI-RS pattern corresponding to more than 32 ports can be supported.

For the information transmission apparatus provided in this embodiment, the content of the foregoing method embodiment on the terminal side is used, corresponding technical features are corresponding, and details are not described herein again.

It should be noted that the above-mentioned apparatus provided in the embodiments of the present disclosure can implement all method steps implemented by the above-mentioned method embodiments on the terminal side, and can achieve the same technical effects. Therefore, the parts and beneficial effects in this embodiment that are the same as those in the method embodiments will not be described in detail herein again.

It should be noted that the division of units in the embodiments of the present disclosure is schematic, and is merely one logical function division manner, and there may be other division manners in actual implementation. In addition, the functional units in the embodiments of the present disclosure may be integrated into one processing unit, may also physically exist independently, or two or more units may be integrated into one unit. The above integrated units may be implemented in a form of hardware, or may be implemented in a form of software functional units.

If the integrated units are implemented in a form of software functional units and are sold or used as an independent product, the integrated units may be stored in a processor-readable storage medium. Based on such understanding, the technical solution of the present disclosure, in essence, or a part making contributions to the related art, or all or part of the technical solution may be embodied in a form of a software product, and the computer software product is stored in a storage medium, and includes a plurality of instructions for enabling one computer device (which may be a personal computer, a server, a network device, or the like) or a processor (processor) to execute all or part of the steps of the methods described in the embodiments of the present disclosure. The foregoing storage medium includes: a USB flash disk, a removable hard disk, a Read-Only Memory (ROM), a Random Access Memory (RAM), a magnetic disk, an optical disk, and other media capable of storing program codes.

The embodiments of the present disclosure further provide a non-transitory readable storage medium, where the non-transitory readable storage medium stores a computer program, and the computer program is configured to cause a processor to execute the above method on the network device side or the terminal side.

The non-transitory readable storage medium may be any available medium or data storage device accessible by a processor, including but not limited to a magnetic memory (for example, a floppy disk, a hard disk, a magnetic tape, a Magneto Optical, MO, disk, or the like), an optical memory (for example, a Compact Disc, CD, a Digital Video Disc, DVD, a Blu-ray Disc, BD, a High-definition Versatile Disc, HVD, or the like), and a semiconductor memory (for example, a ROM, an Erasable Programmable Read-Only Memory, EPROM, an Electrically Erasable Programmable Read-Only Memory, EEPROM, a non-volatile memory, NAND FLASH, a Solid State Drive, SSD, or the like).

The implementation embodiments of the foregoing method on the network device side or the terminal side are all applicable to the embodiments of the non-transitory readable storage medium, and the same technical effects can be achieved.

Those skilled in the art should understand that the embodiments of the present disclosure may be provided as a method, a system, or a computer program product. Therefore, the present disclosure may take a form of a complete hardware embodiment, a complete software embodiment, or an embodiment combining software and hardware aspects. Moreover, the present disclosure may take a form of a computer program product implemented on one or more computer-usable storage media containing computer-usable program codes therein, including but not limited to a disk memory and an optical memory.

The present disclosure is described with reference to flowcharts and/or block diagrams of methods, apparatuses (systems), and computer program products according to the embodiments of the present disclosure. It should be understood that each process and/or block in the flowcharts and/or block diagrams, and a combination of processes and/or blocks in the flowcharts and/or block diagrams, may be implemented by computer-executable instructions. These computer-executable instructions may be provided to a processor of a general-purpose computer, a special-purpose computer, an embedded processor, or another programmable data processing device to produce a machine, such that instructions executed by the processor of the computer or other programmable data processing device produce an apparatus for implementing functions specified in one or more processes in the flowcharts and/or one or more blocks in the block diagrams.

These processor-executable instructions may also be stored in a processor-readable memory that can guide a computer or other programmable data processing device to work in a specific manner, such that instructions stored in the processor-readable memory produce an article of manufacture including an instruction apparatus, and the instruction apparatus implements functions specified in one or more processes in the flowcharts and/or one or more blocks in the block diagrams.

These processor-executable instructions may also be loaded onto a computer or other programmable data processing device, such that a series of operation steps are executed on the computer or other programmable device to produce computer-implemented processing, and therefore, instructions executed on the computer or other programmable device provide steps for implementing functions specified in one or more processes in the flowcharts and/or one or more blocks in the block diagrams.

In addition, it should be noted that, in the apparatus and method of the present disclosure, obviously, each component or each step may be decomposed and/or recombined. Such decomposition and/or recombination shall be regarded as equivalent solutions of the present disclosure. In addition, the steps for executing the foregoing series of processing may naturally be executed in chronological order according to a described sequence, but are not necessarily required to be executed in chronological order, and some steps may be executed in parallel or independently of each other. Those of ordinary skill in the art can understand that all or any steps or components of the method and apparatus of the present disclosure may be implemented, in any computing device (including a processor, a storage medium, and the like) or a network of computing devices, in hardware, firmware, software, or a combination thereof, which can be implemented by those of ordinary skill in the art by using their basic programming skills after reading the description of the present disclosure.

It should be noted that the division of the above modules is merely a division of logical functions, and in actual implementation, all or part of the modules may be integrated into one physical entity, or may be physically separated. In addition, all of the modules may be implemented in a form of software invoked by a processing element; all of the modules may also be implemented in a form of hardware; or part of the modules may be implemented in a form of software invoked by a processing element, and part of the modules may be implemented in a form of hardware. For example, a certain module may be a separately provided processing element, or may be integrated into one chip of the above apparatus for implementation. In addition, the certain module may also be stored in a memory of the above apparatus in a form of program code, and one processing element of the above apparatus invokes and executes the program code to implement the function of the above determining module. Implementations of other modules are similar thereto. In addition, all or part of the modules may be integrated together, or may be independently implemented. The processing element described herein may be an integrated circuit having a signal processing capability. In an implementation process, each step of the above method or each of the above modules may be completed by an integrated logic circuit of hardware in a processor element or by instructions in a form of software.

For example, each module, unit, subunit, or submodule may be one or more integrated circuits configured to implement the above method, for example: one or more Application Specific Integrated Circuits, ASICs, or one or more digital signal processors, DSPs, or one or more Field Programmable Gate Arrays, FPGAs, and the like. For another example, when one of the above modules is implemented in a form that a processing element invokes program code, the processing element may be a general-purpose processor, such as a Central Processing Unit, CPU, or another processor capable of invoking program code. For another example, these modules may be integrated together and implemented in a form of a System-On-a-Chip, SOC.

Terms such as "first" and "second" in the specification and claims of the present disclosure are used to distinguish between similar objects, and are not necessarily used to describe a particular order or sequence. It should be understood that data used in such a manner is interchangeable where appropriate, so that the embodiments of the present disclosure described herein can be implemented in sequences other than those illustrated or described herein. In addition, the terms "include" and "have" and any variations thereof are intended to cover non-exclusive inclusion, for example, a process, method, system, product, or apparatus including a series of steps or units is not necessarily limited to those steps or units clearly listed, but may include other steps or units that are not clearly listed or are inherent to the process, method, product, or apparatus. In addition, "and/or" used in the specification and claims indicates at least one of connected objects, for example, A and/or B and/or C indicates seven cases: A alone, B alone, C alone, both A and B, both B and C, both A and C, and A, B and C. Similarly, "at least one of A and B" used in the specification and claims should be understood as "A alone, B alone, or both A and B".

Apparently, those skilled in the art may make various modifications and variations to the present disclosure without departing from the spirit and scope of the present disclosure. Thus, provided that these modifications and variations of the present disclosure fall within the scope of the claims of the present disclosure and equivalent technologies thereof, the present disclosure is also intended to include these modifications and variations therein.

## Claims

1. An information transmission method, applied to a network device, comprising:
determining target configuration information according to a selected channel state information reference signal (CSI-RS) pattern;
transmitting the target configuration information to a terminal;
wherein a number of ports corresponding to the CSI-RS is greater than 32;
the CSI-RS pattern is a pattern located in one or two slots in time domain and in one or two physical resource blocks (PRBs) in frequency domain; the CSI-RS pattern is obtained by aggregating, through time division multiplexing (TDM), and/or frequency division multiplexing (FDM) at least one code division multiplexing (CDM) type pattern; the CDM type comprises at least one of the following:
a 16-port pattern type, a 32-port pattern type, an 8-port pattern type, a 4-port pattern type, and a 2-port pattern type;
the target configuration information comprises: the number of antenna ports, density information, CDM type information, CDM group frequency-domain position indication information, and CDM group time-domain position indication information; one CDM group corresponds to one CDM type.

2. The method according to claim 1, wherein the determining the target configuration information according to the selected channel state information reference signal (CSI-RS) pattern comprises:
determining the target configuration information according to pattern configuration information and the selected CSI-RS pattern;
wherein the pattern configuration information comprises: the number of antenna ports, density information, CDM type information, CDM group frequency-domain position indication information, CDM group time-domain position indication information, a CDM group index, a frequency-domain index inside a CDM group, and a time-domain index inside the CDM group.

3. The method according to claim 2, wherein the 16-port pattern type comprises: a cdm16-FD4-TD4 pattern type and/or a cdm16-FD2-TD8 pattern type; and/or the 32-port pattern type comprises a cdm32-FD4-TD8 pattern type; and/or the 8-port pattern type comprises a cdm8-FD2-TD4 pattern type; and/or the 4-port pattern type comprises a cdm4-FD2-TD2 pattern type; and/or the 2-port pattern type comprises an fd-CDM2 pattern type;
wherein the cdm16-FD4-TD4 pattern type indicates that a pattern occupies 4 consecutive resource elements (REs) in frequency domain and occupies 4 consecutive REs in time domain; each port occupies 16 REs, and different ports correspond to different orthogonal cover codes (OCCs);
the cdm16-FD2-TD8 pattern type indicates that a pattern occupies 2 consecutive REs in frequency domain and occupies 8 consecutive REs in time domain; each port occupies 16 REs, and different ports correspond to different OCCs;
the cdm32-FD4-TD8 pattern type indicates that a pattern occupies 4 consecutive REs in frequency domain and occupies 8 consecutive REs in time domain; each port occupies 32 REs, and different ports correspond to different OCCs;
the cdm8-FD2-TD4 pattern type indicates that a pattern occupies 2 consecutive REs in frequency domain and occupies 4 consecutive REs in time domain; each port occupies 8 REs, and different ports correspond to different OCCs;
the cdm4-FD2-TD2 pattern type indicates that a pattern occupies 2 consecutive REs in frequency domain and occupies 2 consecutive REs in time domain; each port occupies 4 REs, and different ports correspond to different OCCs;
the fd-CDM2 pattern type indicates that a pattern occupies 2 consecutive REs in frequency domain and occupies 1 consecutive RE in time domain; each port occupies 2 REs, and different ports correspond to different OCCs.

4. The method according to claim 3, wherein in a case that the CSI-RS pattern is obtained by aggregating patterns of a cdm16-FD4-TD4 pattern type and/or a cdm32-FD4-TD8 pattern type, a position, in one PRB, of a CDM group comprised in the CSI-RS pattern is indicated by a higher-layer parameter through a 3-bit bitmap, the bitmap is composed of a setting value b₂, a setting value b₁ and a setting value b₀, and a starting position of the CDM group in frequency domain is kᵢ₋₁=4f(i), where f(i) is a subscript index x of bₓ whose ith setting value in the bitmap is 1, and i∈{1,2,3}.

5. The method according to claim 3 or 4, wherein the CDM group frequency-domain position indication information is indicated in at least one of the following manners:
manner one, one CSI-RS pattern corresponds to one CDM group frequency-domain position indication information, subcarrier positions occupied by the CSI-RS pattern in one PRB are indicated by a higher-layer parameter through one group of bitmaps, and all PRBs occupied by the CSI-RS pattern have a same frequency-domain position;
manner two, one CSI-RS pattern corresponds to two pieces of CDM group frequency-domain position indication information, the two pieces of CDM group frequency-domain position indication information are indicated by a higher-layer parameter through two groups of bitmaps, and each group of bitmaps respectively indicates subcarrier positions occupied by the CSI-RS pattern in one PRB.

6. The method according to claim 5, wherein the manner one corresponds to at least one of the following settings:
predefining that a minimum frequency-domain resource occupied by all ports of the CSI-RS pattern is one or two consecutive PRBs;
configuring, through a higher-layer parameter, a first added parameter, used for indicating that the minimum frequency-domain resource occupied by all ports of the CSI-RS pattern is one or two PRBs;
determining, according to a number *J* of groups of CDM groups corresponding to the target configuration information, a group size *L* of the CDM groups and a number *X* of antenna ports, that a minimum frequency-domain resource occupied by the CSI-RS pattern is *X*/*(J*×*L)* PRBs; where the number *J* of groups of CDM groups is obtained according to the CDM group frequency-domain position indication information and the CDM group time-domain position indication information comprised in the target configuration information, the group size *L* of the CDM groups is obtained according to the CDM type information comprised in the target configuration information, and in a case that *X*/*(J*×*L)* is greater than 1, the *X*/*(J*×*L)* PRBs are consecutive.

7. The method according to claim 2 or 3, wherein the CDM group time-domain position indication information is indicated in at least one of the following manners:
manner one, one CSI-RS pattern corresponds to only one set of CDM group time-domain position indication information, and all slots occupied by one CSI-RS pattern have a same time-domain position;
manner two, one CSI-RS pattern corresponds to two sets of CDM group time-domain position indication information, and each set of CDM group time-domain position indication information respectively indicates orthogonal frequency division multiplexing (OFDM) symbol positions occupied by the CSI-RS pattern in one slot.

8. The method according to claim 7, wherein the manner one corresponds to at least one of the following settings:
predefining that a minimum time-domain resource occupied by all ports of the CSI-RS pattern is one or two consecutive slots;
configuring, through a higher-layer parameter, a second added parameter, used for indicating that the minimum time-domain resource occupied by all ports of the CSI-RS pattern is one or two slots;
determining, according to a number *J* of groups of CDM groups corresponding to the target configuration information, a group size *L* of the CDM groups and a number *X* of antenna ports, that a minimum time-domain resource occupied by the CSI-RS pattern is *X*/*(J*×*L)* slots; where the number *J* of groups of CDM groups is obtained according to the CDM group frequency-domain position indication information and the CDM group time-domain position indication information comprised in the target configuration information, the group size *L* of the CDM groups is obtained according to the CDM type information comprised in the target configuration information, and in a case that *X*/*(J*×*L)* is greater than 1, the *X*/*(J*×*L)* slots are consecutive.

9. The method according to claim 3, wherein in a case that the number of ports corresponding to the CSI-RS is 48, the CSI-RS pattern is obtained by using at least one of the following:
aggregating, through an FDM manner, 3 patterns of a cdm16-FD4-TD4 pattern type;
aggregating, through an FDM manner, 3 patterns of a cdm16-FD2-TD8 pattern type;
aggregating, through an FDM manner, two 24-port patterns of a cdm8-FD2-TD4 pattern type;
aggregating, through a TDM manner, two 24-port patterns of a cdm8-FD2-TD4 pattern type;
aggregating, through an FDM manner, two 24-port patterns of a cdm4-FD2-TD2 pattern type;
aggregating, through a TDM manner, two 24-port patterns of a cdm4-FD2-TD2 pattern type;
aggregating, through an FDM manner, two 24-port patterns of an fd-CDM2 pattern type;
aggregating, through a TDM manner, two 24-port patterns of an fd-CDM2 pattern type.

10. The method according to claim 3, wherein in a case that the number of ports corresponding to the CSI-RS is 64, the CSI-RS pattern is obtained by using at least one of the following:
aggregating, through an FDM manner, 4 patterns of a cdm16-FD4-TD4 pattern type;
aggregating, through an FDM manner, 4 patterns of a cdm16-FD2-TD8 pattern type;
aggregating, through an FDM manner, 2 patterns of a cdm32-FD4-TD8 pattern type;
aggregating, through a TDM manner, two 32-port patterns of a cdm8-FD2-TD4 pattern type;
aggregating, through a TDM manner, two 32-port patterns of a cdm4-FD2-TD2 pattern type;
aggregating, through a TDM manner, two 32-port patterns of an fd-CDM2 pattern type.

11. The method according to claim 3, wherein in a case that the number of ports corresponding to the CSI-RS is 96, the CSI-RS pattern is obtained by using at least one of the following:
aggregating, through an FDM manner, 6 patterns of a cdm16-FD2-TD8 pattern type;
aggregating, through an FDM manner, 6 patterns of a cdm16-FD4-TD4 pattern type;
aggregating, through FDM and TDM manners, 6 patterns of a cdm16-FD4-TD4 pattern type;
aggregating, through an FDM manner, 3 patterns of a cdm32-FD4-TD8 pattern type;
aggregating, through an FDM manner or a TDM manner, two 48-port patterns of a cdm8-FD2-TD4 pattern type;
aggregating, through FDM and TDM manners, 4 24-port patterns of a cdm8-FD2-TD4 pattern type;
aggregating, through an FDM manner or a TDM manner, two 48-port patterns of a cdm4-FD2-TD2 pattern type;
aggregating, through FDM and TDM manners, 4 24-port patterns of a cdm4-FD2-TD2 pattern type;
aggregating, through an FDM manner or a TDM manner, two 48-port patterns of an fd-CDM2 pattern type;
aggregating, through FDM and TDM manners, 4 24-port patterns of an fd-CDM2 pattern type.

12. The method according to claim 3, wherein in a case that the number of ports corresponding to the CSI-RS is 128, the CSI-RS pattern is obtained by using at least one of the following:
aggregating, through an FDM manner, 4 patterns of a cdm32-FD4-TD8 pattern type;
aggregating, through FDM and TDM manners, 8 patterns of a cdm16-FD4-TD4 pattern type;
aggregating, through FDM and TDM manners, 4 32-port patterns of a cdm8-FD2-TD4 pattern type;
aggregating, through a TDM manner, 4 32-port patterns of a cdm8-FD2-TD4 pattern type.

13. The method according to claim 3, wherein for the cdm16-FD4-TD4 pattern type, the OCC comprises a frequency-domain FD-4OCC and a time-domain TD-4OCC, and different OCC indexes correspond to different FD-4OCCs and/or TD-4OCCs;
and/or, for the cdm16-FD2-TD8 pattern type, the OCC comprises an FD-2OCC and a TD-8OCC, and different OCC indexes correspond to different FD-2OCCs and/or TD-8OCCs;
and/or, for the cdm32-FD4-TD8 pattern type, the OCC comprises an FD-4OCC and a TD-8OCC, and different OCC indexes correspond to different FD-4OCCs and/or TD-8OCCs.

14. The method according to claim 13, wherein combinations of the FD-4OCC and the TD-4OCC comprise at least one of the following:
the FD-4OCC is [+1, +1, +1, +1], and the TD-4OCC is [+1, +1, +1, +1];
the FD-4OCC is [+1, -1, +1, -1], and the TD-4OCC is [+1, +1, +1, +1];
the FD-4OCC is [+1, +1, -1, -1], and the TD-4OCC is [+1, +1, +1, +1];
the FD-4OCC is [+1, -1, -1, +1], and the TD-4OCC is [+1, +1, +1, +1];
the FD-4OCC is [+1, +1, +1, +1], and the TD-4OCC is [+1, -1, +1, -1];
the FD-4OCC is [+1, -1, +1, -1], and the TD-4OCC is [+1, -1, +1, -1];
the FD-4OCC is [+1, +1, -1, -1], and the TD-4OCC is [+1, -1, +1, -1];
the FD-4OCC is [+1, -1, -1, +1], and the TD-4OCC is [+1, -1, +1, -1];
the FD-4OCC is [+1, +1, +1, +1], and the TD-4OCC is [+1, +1, -1, -1];
the FD-4OCC is [+1, -1, +1, -1], and the TD-4OCC is [+1, +1, -1, -1];
the FD-4OCC is [+1, +1, -1, -1], and the TD-4OCC is [+1, +1, -1, -1];
the FD-4OCC is [+1, -1, -1, +1], and the TD-4OCC is [+1, +1, -1, -1];
the FD-4OCC is [+1, +1, +1, +1], and the TD-4OCC is [+1, -1, -1, +1];
the FD-4OCC is [+1, -1, +1, -1], and the TD-4OCC is [+1, -1, -1, +1];
the FD-4OCC is [+1, +1, -1, -1], and the TD-4OCC is [+1, -1, -1, +1];
the FD-4OCC is [+1, -1, -1, +1], and the TD-4OCC is [+1, -1, -1, +1].

15. The method according to claim 13, wherein combinations of the FD-2OCC and the TD-8OCC comprise at least one of the following:
the FD-2OCC is [+1, +1], and the TD-8OCC is [+1, +1, +1, +1, +1, +1, +1, +1];
the FD-2OCC is [+1, -1], and the TD-8OCC is [+1, +1, +1, +1, +1, +1, +1, +1];
the FD-2OCC is [+1, +1], and the TD-8OCC is [+1, -1, +1, -1, +1, -1, +1, -1];
the FD-2OCC is [+1, -1], and the TD-8OCC is [+1, -1, +1, -1, +1, -1, +1, -1];
the FD-2OCC is [+1, +1], and the TD-8OCC is [+1, +1, -1, -1, +1, +1, -1, -1];
the FD-2OCC is [+1, -1], and the TD-8OCC is [+1, +1, -1, -1, +1, +1, -1, -1];
the FD-2OCC is [+1, +1], and the TD-8OCC is [+1, -1, -1, +1, +1, -1, -1, +1];
the FD-2OCC is [+1, -1], and the TD-8OCC is [+1, -1, -1, +1, +1, -1, -1, +1];
the FD-2OCC is [+1, +1], and the TD-8OCC is [+1, +1, +1, +1, -1, -1, -1, -1];
the FD-2OCC is [+1, -1], and the TD-8OCC is [+1, +1, +1, +1, -1, -1, -1, -1];
the FD-2OCC is [+1, +1], and the TD-8OCC is [+1, -1, +1, -1, -1, +1, -1, +1];
the FD-2OCC is [+1, -1], and the TD-8OCC is [+1, -1, +1, -1, -1, +1, -1, +1];
the FD-2OCC is [+1, +1], and the TD-8OCC is [+1, +1, -1, -1, -1, -1, +1, +1];
the FD-2OCC is [+1, -1], and the TD-8OCC is [+1, +1, -1, -1, -1, -1, +1, +1];
the FD-2OCC is [+1, +1], and the TD-8OCC is [+1, -1, -1, +1, -1, +1, +1, -1];
the FD-2OCC is [+1, -1], and the TD-8OCC is [+1, -1, -1, +1, -1, +1, +1, -1].

16. The method according to claim 13, wherein combinations of the FD-4OCC and the TD-8OCC comprise at least one of the following:
the FD-4OCC is [+1, +1, +1, +1], and the TD-8OCC is [+1, +1, +1, +1, +1, +1, +1, +1];
the FD-4OCC is [+1, -1, +1, -1], and the TD-8OCC is [+1, +1, +1, +1, +1, +1, +1, +1];
the FD-4OCC is [+1, +1, -1, -1], and the TD-8OCC is [+1, +1, +1, +1, +1, +1, +1, +1];
the FD-4OCC is [+1, -1, -1, +1], and the TD-8OCC is [+1, +1, +1, +1, +1, +1, +1, +1];
the FD-4OCC is [+1, +1, +1, +1], and the TD-8OCC is [+1, -1, +1, -1, +1, -1, +1, -1];
the FD-4OCC is [+1, -1, +1, -1], and the TD-8OCC is [+1, -1, +1, -1, +1, -1, +1, -1];
the FD-4OCC is [+1, +1, -1, -1], and the TD-8OCC is [+1, -1, +1, -1, +1, -1, +1, -1];
the FD-4OCC is [+1, -1, -1, +1], and the TD-8OCC is [+1, -1, +1, -1, +1, -1, +1, -1];
the FD-4OCC is [+1, +1, +1, +1], and the TD-8OCC is [+1, +1, -1, -1, +1, +1, -1, -1];
the FD-4OCC is [+1, -1, +1, -1], and the TD-8OCC is [+1, +1, -1, -1, +1, +1, -1, -1];
the FD-4OCC is [+1, +1, -1, -1], and the TD-8OCC is [+1, +1, -1, -1, +1, +1, -1, -1];
the FD-4OCC is [+1, -1, -1, +1], and the TD-8OCC is [+1, +1, -1, -1, +1, +1, -1, -1];
the FD-4OCC is [+1, +1, +1, +1], and the TD-8OCC is [+1, -1, -1, +1, +1, -1, -1, +1];
the FD-4OCC is [+1, -1, +1, -1], and the TD-8OCC is [+1, -1, -1, +1, +1, -1, -1, +1];
the FD-4OCC is [+1, +1, -1, -1], and the TD-8OCC is [+1, -1, -1, +1, +1, -1, -1, +1];
the FD-4OCC is [+1, -1, -1, +1], and the TD-8OCC is [+1, -1, -1, +1, +1, -1, -1, +1];
the FD-4OCC is [+1, +1, +1, +1], and the TD-8OCC is [+1, +1, +1, +1, -1, -1, -1, -1];
the FD-4OCC is [+1, -1, +1, -1], and the TD-8OCC is [+1, +1, +1, +1, -1, -1, -1, -1];
the FD-4OCC is [+1, +1, -1, -1], and the TD-8OCC is [+1, +1, +1, +1, -1, -1, -1, -1];
the FD-4OCC is [+1, -1, -1, +1], and the TD-8OCC is [+1, +1, +1, +1, -1, -1, -1, -1];
the FD-4OCC is [+1, +1, +1, +1], and the TD-8OCC is [+1, -1, +1, -1, -1, +1, -1, +1];
the FD-4OCC is [+1, -1, +1, -1], and the TD-8OCC is [+1, -1, +1, -1, -1, +1, -1, +1];
the FD-4OCC is [+1, +1, -1, -1], and the TD-8OCC is [+1, -1, +1, -1, -1, +1, -1, +1];
the FD-4OCC is [+1, -1, -1, +1], and the TD-8OCC is [+1, -1, +1, -1, -1, +1, -1, +1];
the FD-4OCC is [+1, +1, +1, +1], and the TD-8OCC is [+1, +1, -1, -1, -1, -1, +1, +1];
the FD-4OCC is [+1, -1, +1, -1], and the TD-8OCC is [+1, +1, -1, -1, -1, -1, +1, +1];
the FD-4OCC is [+1, +1, -1, -1], and the TD-8OCC is [+1, +1, -1, -1, -1, -1, +1, +1];
the FD-4OCC is [+1, -1, -1, +1], and the TD-8OCC is [+1, +1, -1, -1, -1, -1, +1, +1];
the FD-4OCC is [+1, +1, +1, +1], and the TD-8OCC is [+1, -1, -1, +1, -1, +1, +1, -1];
the FD-4OCC is [+1, -1, +1, -1], and the TD-8OCC is [+1, -1, -1, +1, -1, +1, +1, -1];
the FD-4OCC is [+1, +1, -1, -1], and the TD-8OCC is [+1, -1, -1, +1, -1, +1, +1, -1];
the FD-4OCC is [+1, -1, -1, +1], and the TD-8OCC is [+1, -1, -1, +1, -1, +1, +1, -1].

17. An information transmission method, applied to a terminal, comprising:
receiving target configuration information transmitted by a network device;
determining a selected CSI-RS pattern according to the target configuration information;
wherein a number of ports corresponding to the CSI-RS is greater than 32;
the CSI-RS pattern is a pattern located in one or two slots in time domain and in one or two PRBs in frequency domain; the CSI-RS pattern is obtained by aggregating, through TDM and/or FDM, at least one CDM type pattern; the CDM type comprises at least one of the following:
a 16-port pattern type, a 32-port pattern type, an 8-port pattern type, a 4-port pattern type, and a 2-port pattern type;
the target configuration information comprises: the number of antenna ports, density information, CDM type information, CDM group frequency-domain position indication information, and CDM group time-domain position indication information; one CDM group corresponds to one CDM type.

18. The method according to claim 17, wherein the determining the selected CSI-RS pattern according to the target configuration information comprises:
determining the selected CSI-RS pattern according to pattern configuration information and the target configuration information;
wherein the pattern configuration information comprises: the number of antenna ports, density information, CDM type information, CDM group frequency-domain position indication information, CDM group time-domain position indication information, a CDM group index, a frequency-domain index inside a CDM group, and a time-domain index inside the CDM group.

19. The method according to claim 18, wherein the 16-port pattern type comprises: a cdm16-FD4-TD4 pattern type and/or a cdm16-FD2-TD8 pattern type; and/or the 32-port pattern type comprises a cdm32-FD4-TD8 pattern type; and/or the 8-port pattern type comprises a cdm8-FD2-TD4 pattern type; and/or the 4-port pattern type comprises a cdm4-FD2-TD2 pattern type; and/or the 2-port pattern type comprises an fd-CDM2 pattern type;
wherein the cdm16-FD4-TD4 pattern type indicates that a pattern occupies 4 consecutive resource elements (REs) in frequency domain and occupies 4 consecutive REs in time domain; each port occupies 16 REs, and different ports correspond to different orthogonal cover codes (OCCs);
the cdm16-FD2-TD8 pattern type indicates that a pattern occupies 2 consecutive REs in frequency domain and occupies 8 consecutive REs in time domain; each port occupies 16 REs, and different ports correspond to different OCCs;
the cdm32-FD4-TD8 pattern type indicates that a pattern occupies 4 consecutive REs in frequency domain and occupies 8 consecutive REs in time domain; each port occupies 32 REs, and different ports correspond to different OCCs;
the cdm8-FD2-TD4 pattern type indicates that a pattern occupies 2 consecutive REs in frequency domain and occupies 4 consecutive REs in time domain; each port occupies 8 REs, and different ports correspond to different OCCs;
the cdm4-FD2-TD2 pattern type indicates that a pattern occupies 2 consecutive REs in frequency domain and occupies 2 consecutive REs in time domain; each port occupies 4 REs, and different ports correspond to different OCCs;
the fd-CDM2 pattern type indicates that a pattern occupies 2 consecutive REs in frequency domain and occupies 1 consecutive RE in time domain; each port occupies 2 REs, and different ports correspond to different OCCs.

20. The method according to claim 19, wherein in a case that the CSI-RS pattern is obtained by aggregating patterns of a cdm16-FD4-TD4 pattern type and/or a cdm32-FD4-TD8 pattern type, a position, in one PRB, of a CDM group comprised in the CSI-RS pattern is indicated by a higher-layer parameter through a 3-bit bitmap, the bitmap is composed of a setting value b₂, a setting value b₁ and a setting value b₀, and a starting position of the CDM group in frequency domain is kᵢ₋₁=4f(i), wherein f(i) is a subscript index x of bₓ whose ith setting value in the bitmap is 1, and i∈{1,2,3}.

21. The method according to claim 19 or 20, wherein the CDM group frequency-domain position indication information is indicated in at least one of the following manners:
manner one, one CSI-RS pattern corresponds to one CDM group frequency-domain position indication information, subcarrier positions occupied by the CSI-RS pattern in one PRB are indicated by a higher-layer parameter through one group of bitmaps, and all PRBs occupied by the CSI-RS pattern have a same frequency-domain position;
manner two, one CSI-RS pattern corresponds to two pieces of CDM group frequency-domain position indication information, the two pieces of CDM group frequency-domain position indication information are indicated by a higher-layer parameter through two groups of bitmaps, and each group of bitmaps respectively indicates subcarrier positions occupied by the CSI-RS pattern in one PRB.

22. The method according to claim 21, wherein the manner one corresponds to at least one of the following settings:
predefining that a minimum frequency-domain resource occupied by all ports of the CSI-RS pattern is one or two consecutive PRBs;
configuring, through a higher-layer parameter, a first added parameter, used for indicating that the minimum frequency-domain resource occupied by all ports of the CSI-RS pattern is one or two PRBs;
determining, according to a number *J* of groups of CDM groups corresponding to the target configuration information, a group size *L* of the CDM groups and a number *X* of antenna ports, that a minimum frequency-domain resource occupied by the CSI-RS pattern is *X*/*(J*×*L)* PRBs; where the number *J* of groups of CDM groups is obtained according to the CDM group frequency-domain position indication information and the CDM group time-domain position indication information comprised in the target configuration information, the group size *L* of the CDM groups is obtained according to the CDM type information comprised in the target configuration information, and in a case that *X*/*(J*×*L)* is greater than 1, the *X*/*(J*×*L)* PRBs are consecutive.

23. The method according to claim 18 or 19, wherein the CDM group time-domain position indication information is indicated in at least one of the following manners:
manner one, one CSI-RS pattern corresponds to only one set of CDM group time-domain position indication information, and all slots occupied by one CSI-RS pattern have a same time-domain position;
manner two, one CSI-RS pattern corresponds to two sets of CDM group time-domain position indication information, and each set of CDM group time-domain position indication information respectively indicates orthogonal frequency division multiplexing (OFDM) symbol positions occupied by the CSI-RS pattern in one slot.

24. The method according to claim 23, wherein the manner one corresponds to at least one of the following settings:
predefining that a minimum time-domain resource occupied by all ports of the CSI-RS pattern is one or two consecutive slots;
configuring, through a higher-layer parameter, a second added parameter, used for indicating that the minimum time-domain resource occupied by all ports of the CSI-RS pattern is one or two slots;
determining, according to a number *J* of groups of CDM groups corresponding to the target configuration information, a group size *L* of the CDM groups and a number *X* of antenna ports, that a minimum time-domain resource occupied by the CSI-RS pattern is *X*/*(J*×*L)* slots; where the number *J* of groups of CDM groups is obtained according to the CDM group frequency-domain position indication information and the CDM group time-domain position indication information comprised in the target configuration information, the group size *L* of the CDM groups is obtained according to the CDM type information comprised in the target configuration information, and in a case that *X*/*(J*×*L)* is greater than 1, the *X*/*(J*×*L)* slots are consecutive.

25. The method according to claim 19, wherein in a case that the number of ports corresponding to the CSI-RS is 48, the CSI-RS pattern is obtained by using at least one of the following:
aggregating, through an FDM manner, 3 patterns of a cdm16-FD4-TD4 pattern type;
aggregating, through an FDM manner, 3 patterns of a cdm16-FD2-TD8 pattern type;
aggregating, through an FDM manner, two 24-port patterns of a cdm8-FD2-TD4 pattern type;
aggregating, through a TDM manner, two 24-port patterns of a cdm8-FD2-TD4 pattern type;
aggregating, through an FDM manner, two 24-port patterns of a cdm4-FD2-TD2 pattern type;
aggregating, through a TDM manner, two 24-port patterns of a cdm4-FD2-TD2 pattern type;
aggregating, through an FDM manner, two 24-port patterns of an fd-CDM2 pattern type;
aggregating, through a TDM manner, two 24-port patterns of an fd-CDM2 pattern type.

26. The method according to claim 19, wherein in a case that the number of ports corresponding to the CSI-RS is 64, the CSI-RS pattern is obtained by using at least one of the following:
aggregating, through an FDM manner, 4 patterns of a cdm16-FD4-TD4 pattern type;
aggregating, through an FDM manner, 4 patterns of a cdm16-FD2-TD8 pattern type;
aggregating, through an FDM manner, 2 patterns of a cdm32-FD4-TD8 pattern type;
aggregating, through a TDM manner, two 32-port patterns of a cdm8-FD2-TD4 pattern type;
aggregating, through a TDM manner, two 32-port patterns of a cdm4-FD2-TD2 pattern type;
aggregating, through a TDM manner, two 32-port patterns of an fd-CDM2 pattern type.

27. The method according to claim 19, wherein in a case that the number of ports corresponding to the CSI-RS is 96, the CSI-RS pattern is obtained by using at least one of the following:
aggregating, through an FDM manner, 6 patterns of a cdm16-FD2-TD8 pattern type;
aggregating, through an FDM manner, 6 patterns of a cdm16-FD4-TD4 pattern type;
aggregating, through FDM and TDM manners, 6 patterns of a cdm16-FD4-TD4 pattern type;
aggregating, through an FDM manner, 3 patterns of a cdm32-FD4-TD8 pattern type;
aggregating, through an FDM manner or a TDM manner, two 48-port patterns of a cdm8-FD2-TD4 pattern type;
aggregating, through FDM and TDM manners, 4 24-port patterns of a cdm8-FD2-TD4 pattern type;
aggregating, through an FDM manner or a TDM manner, two 48-port patterns of a cdm4-FD2-TD2 pattern type;
aggregating, through FDM and TDM manners, 4 24-port patterns of a cdm4-FD2-TD2 pattern type;
aggregating, through an FDM manner or a TDM manner, two 48-port patterns of an fd-CDM2 pattern type;
aggregating, through FDM and TDM manners, 4 24-port patterns of an fd-CDM2 pattern type.

28. The method according to claim 19, wherein in a case that the number of ports corresponding to the CSI-RS is 128, the CSI-RS pattern is obtained by using at least one of the following:
aggregating, through an FDM manner, 4 patterns of a cdm32-FD4-TD8 pattern type;
aggregating, through FDM and TDM manners, 8 patterns of a cdm16-FD4-TD4 pattern type;
aggregating, through FDM and TDM manners, 4 32-port patterns of a cdm8-FD2-TD4 pattern type;
aggregating, through a TDM manner, 4 32-port patterns of a cdm8-FD2-TD4 pattern type.

29. The method according to claim 19, wherein for the cdm16-FD4-TD4 pattern type, the OCC comprises a frequency-domain FD-4OCC and a time-domain TD-4OCC, and different OCC indexes correspond to different FD-4OCCs and/or TD-4OCCs;
and/or, for the cdm16-FD2-TD8 pattern type, the OCC comprises an FD-2OCC and a TD-8OCC, and different OCC indexes correspond to different FD-2OCCs and/or TD-8OCCs;
and/or, for the cdm32-FD4-TD8 pattern type, the OCC comprises an FD-4OCC and a TD-8OCC, and different OCC indexes correspond to different FD-4OCCs and/or TD-8OCCs.

30. The method according to claim 29, wherein combinations of the FD-4OCC and the TD-4OCC comprise at least one of the following:
the FD-4OCC is [+1, +1, +1, +1], and the TD-4OCC is [+1, +1, +1, +1];
the FD-4OCC is [+1, -1, +1, -1], and the TD-4OCC is [+1, +1, +1, +1];
the FD-4OCC is [+1, +1, -1, -1], and the TD-4OCC is [+1, +1, +1, +1];
the FD-4OCC is [+1, -1, -1, +1], and the TD-4OCC is [+1, +1, +1, +1];
the FD-4OCC is [+1, +1, +1, +1], and the TD-4OCC is [+1, -1, +1, -1];
the FD-4OCC is [+1, -1, +1, -1], and the TD-4OCC is [+1, -1, +1, -1];
the FD-4OCC is [+1, +1, -1, -1], and the TD-4OCC is [+1, -1, +1, -1];
the FD-4OCC is [+1, -1, -1, +1], and the TD-4OCC is [+1, -1, +1, -1];
the FD-4OCC is [+1, +1, +1, +1], and the TD-4OCC is [+1, +1, -1, -1];
the FD-4OCC is [+1, -1, +1, -1], and the TD-4OCC is [+1, +1, -1, -1];
the FD-4OCC is [+1, +1, -1, -1], and the TD-4OCC is [+1, +1, -1, -1];
the FD-4OCC is [+1, -1, -1, +1], and the TD-4OCC is [+1, +1, -1, -1];
the FD-4OCC is [+1, +1, +1, +1], and the TD-4OCC is [+1, -1, -1, +1];
the FD-4OCC is [+1, -1, +1, -1], and the TD-4OCC is [+1, -1, -1, +1];
the FD-4OCC is [+1, +1, -1, -1], and the TD-4OCC is [+1, -1, -1, +1];
the FD-4OCC is [+1, -1, -1, +1], and the TD-4OCC is [+1, -1, -1, +1].

31. The method according to claim 29, wherein combinations of the FD-2OCC and the TD-8OCC comprise at least one of the following:
the FD-2OCC is [+1, +1], and the TD-8OCC is [+1, +1, +1, +1, +1, +1, +1, +1];
the FD-2OCC is [+1, -1], and the TD-8OCC is [+1, +1, +1, +1, +1, +1, +1, +1];
the FD-2OCC is [+1, +1], and the TD-8OCC is [+1, -1, +1, -1, +1, -1, +1, -1];
the FD-2OCC is [+1, -1], and the TD-8OCC is [+1, -1, +1, -1, +1, -1, +1, -1];
the FD-2OCC is [+1, +1], and the TD-8OCC is [+1, +1, -1, -1, +1, +1, -1, -1];
the FD-2OCC is [+1, -1], and the TD-8OCC is [+1, +1, -1, -1, +1, +1, -1, -1];
the FD-2OCC is [+1, +1], and the TD-8OCC is [+1, -1, -1, +1, +1, -1, -1, +1];
the FD-2OCC is [+1, -1], and the TD-8OCC is [+1, -1, -1, +1, +1, -1, -1, +1];
the FD-2OCC is [+1, +1], and the TD-8OCC is [+1, +1, +1, +1, -1, -1, -1, -1];
the FD-2OCC is [+1, -1], and the TD-8OCC is [+1, +1, +1, +1, -1, -1, -1, -1];
the FD-2OCC is [+1, +1], and the TD-8OCC is [+1, -1, +1, -1, -1, +1, -1, +1];
the FD-2OCC is [+1, -1], and the TD-8OCC is [+1, -1, +1, -1, -1, +1, -1, +1];
the FD-2OCC is [+1, +1], and the TD-8OCC is [+1, +1, -1, -1, -1, -1, +1, +1];
the FD-2OCC is [+1, -1], and the TD-8OCC is [+1, +1, -1, -1, -1, -1, +1, +1];
the FD-2OCC is [+1, +1], and the TD-8OCC is [+1, -1, -1, +1, -1, +1, +1, -1];
the FD-2OCC is [+1, -1], and the TD-8OCC is [+1, -1, -1, +1, -1, +1, +1, -1].

32. The method according to claim 29, wherein combinations of the FD-4OCC and the TD-8OCC comprise at least one of the following:
the FD-4OCC is [+1, +1, +1, +1], and the TD-8OCC is [+1, +1, +1, +1, +1, +1, +1, +1];
the FD-4OCC is [+1, -1, +1, -1], and the TD-8OCC is [+1, +1, +1, +1, +1, +1, +1, +1];
the FD-4OCC is [+1, +1, -1, -1], and the TD-8OCC is [+1, +1, +1, +1, +1, +1, +1, +1];
the FD-4OCC is [+1, -1, -1, +1], and the TD-8OCC is [+1, +1, +1, +1, +1, +1, +1, +1];
the FD-4OCC is [+1, +1, +1, +1], and the TD-8OCC is [+1, -1, +1, -1, +1, -1, +1, -1];
the FD-4OCC is [+1, -1, +1, -1], and the TD-8OCC is [+1, -1, +1, -1, +1, -1, +1, -1];
the FD-4OCC is [+1, +1, -1, -1], and the TD-8OCC is [+1, -1, +1, -1, +1, -1, +1, -1];
the FD-4OCC is [+1, -1, -1, +1], and the TD-8OCC is [+1, -1, +1, -1, +1, -1, +1, -1];
the FD-4OCC is [+1, +1, +1, +1], and the TD-8OCC is [+1, +1, -1, -1, +1, +1, -1, -1];
the FD-4OCC is [+1, -1, +1, -1], and the TD-8OCC is [+1, +1, -1, -1, +1, +1, -1, -1];
the FD-4OCC is [+1, +1, -1, -1], and the TD-8OCC is [+1, +1, -1, -1, +1, +1, -1, -1];
the FD-4OCC is [+1, -1, -1, +1], and the TD-8OCC is [+1, +1, -1, -1, +1, +1, -1, -1];
the FD-4OCC is [+1, +1, +1, +1], and the TD-8OCC is [+1, -1, -1, +1, +1, -1, -1, +1];
the FD-4OCC is [+1, -1, +1, -1], and the TD-8OCC is [+1, -1, -1, +1, +1, -1, -1, +1];
the FD-4OCC is [+1, +1, -1, -1], and the TD-8OCC is [+1, -1, -1, +1, +1, -1, -1, +1];
the FD-4OCC is [+1, -1, -1, +1], and the TD-8OCC is [+1, -1, -1, +1, +1, -1, -1, +1];
the FD-4OCC is [+1, +1, +1, +1], and the TD-8OCC is [+1, +1, +1, +1, -1, -1, -1, -1];
the FD-4OCC is [+1, -1, +1, -1], and the TD-8OCC is [+1, +1, +1, +1, -1, -1, -1, -1];
the FD-4OCC is [+1, +1, -1, -1], and the TD-8OCC is [+1, +1, +1, +1, -1, -1, -1, -1];
the FD-4OCC is [+1, -1, -1, +1], and the TD-8OCC is [+1, +1, +1, +1, -1, -1, -1, -1];
the FD-4OCC is [+1, +1, +1, +1], and the TD-8OCC is [+1, -1, +1, -1, -1, +1, -1, +1];
the FD-4OCC is [+1, -1, +1, -1], and the TD-8OCC is [+1, -1, +1, -1, -1, +1, -1, +1];
the FD-4OCC is [+1, +1, -1, -1], and the TD-8OCC is [+1, -1, +1, -1, -1, +1, -1, +1];
the FD-4OCC is [+1, -1, -1, +1], and the TD-8OCC is [+1, -1, +1, -1, -1, +1, -1, +1];
the FD-4OCC is [+1, +1, +1, +1], and the TD-8OCC is [+1, +1, -1, -1, -1, -1, +1, +1];
the FD-4OCC is [+1, -1, +1, -1], and the TD-8OCC is [+1, +1, -1, -1, -1, -1, +1, +1];
the FD-4OCC is [+1, +1, -1, -1], and the TD-8OCC is [+1, +1, -1, -1, -1, -1, +1, +1];
the FD-4OCC is [+1, -1, -1, +1], and the TD-8OCC is [+1, +1, -1, -1, -1, -1, +1, +1];
the FD-4OCC is [+1, +1, +1, +1], and the TD-8OCC is [+1, -1, -1, +1, -1, +1, +1, -1];
the FD-4OCC is [+1, -1, +1, -1], and the TD-8OCC is [+1, -1, -1, +1, -1, +1, +1, -1];
the FD-4OCC is [+1, +1, -1, -1], and the TD-8OCC is [+1, -1, -1, +1, -1, +1, +1, -1];
the FD-4OCC is [+1, -1, -1, +1], and the TD-8OCC is [+1, -1, -1, +1, -1, +1, +1, -1].

33. An information transmission device, wherein the information transmission device is a network device, and the information transmission device comprises: a memory, a transceiver, and a processor, wherein:
the memory is configured to store a computer program; the transceiver is configured to transmit and receive data under control of the processor; the processor is configured to read the computer program from the memory and perform the following operations:
determining target configuration information according to a selected channel state information reference signal (CSI-RS) pattern;
transmitting, through the transceiver, the target configuration information to a terminal;
wherein a number of ports corresponding to the CSI-RS is greater than 32;
the CSI-RS pattern is a pattern located in one or two slots in time domain and in one or two physical resource blocks (PRBs) in frequency domain; the CSI-RS pattern is obtained by aggregating, through time division multiplexing (TDM), and/or frequency division multiplexing (FDM) at least one code division multiplexing (CDM) type pattern; the CDM type comprises at least one of the following:
a 16-port pattern type, a 32-port pattern type, an 8-port pattern type, a 4-port pattern type, and a 2-port pattern type;
the target configuration information comprises: the number of antenna ports, density information, CDM type information, CDM group frequency-domain position indication information, and CDM group time-domain position indication information; one CDM group corresponds to one CDM type.

34. An information transmission device, wherein the information transmission device is a terminal, and the information transmission device comprises: a memory, a transceiver, and a processor, wherein:
the memory is configured to store a computer program; the transceiver is configured to transmit and receive data under control of the processor; the processor is configured to read the computer program from the memory and perform the following operations:
receiving, through the transceiver, target configuration information transmitted by a network device;
determining a selected CSI-RS pattern according to the target configuration information;
wherein a number of ports corresponding to the CSI-RS is greater than 32;
the CSI-RS pattern is a pattern located in one or two slots in time domain and in one or two PRBs in frequency domain; the CSI-RS pattern is obtained by aggregating, through TDM and/or FDM, at least one CDM type pattern; the CDM type comprises at least one of the following:
a 16-port pattern type, a 32-port pattern type, an 8-port pattern type, a 4-port pattern type, and a 2-port pattern type;
the target configuration information comprises: the number of antenna ports, density information, CDM type information, CDM group frequency-domain position indication information, and CDM group time-domain position indication information; one CDM group corresponds to one CDM type.

35. An information transmission apparatus, applied to a network device, comprising:
a first determining unit, configured to determine target configuration information according to a selected channel state information reference signal (CSI-RS) pattern;
a first sending unit, configured to transmit the target configuration information to a terminal;
wherein a number of ports corresponding to the CSI-RS is greater than 32;
the CSI-RS pattern is a pattern located in one or two slots in time domain and in one or two physical resource blocks (PRBs) in frequency domain; the CSI-RS pattern is obtained by aggregating, through time division multiplexing (TDM), and/or frequency division multiplexing (FDM) at least one code division multiplexing (CDM) type pattern; the CDM type comprises at least one of the following:
a 16-port pattern type, a 32-port pattern type, an 8-port pattern type, a 4-port pattern type, and a 2-port pattern type;
the target configuration information comprises: the number of antenna ports, density information, CDM type information, CDM group frequency-domain position indication information, and CDM group time-domain position indication information; one CDM group corresponds to one CDM type.

36. An information transmission apparatus, applied to a terminal, comprising:
a first receiving unit, configured to receive target configuration information transmitted by a network device;
a second determining unit, configured to determine a selected CSI-RS pattern according to the target configuration information;
wherein a number of ports corresponding to the CSI-RS is greater than 32;
the CSI-RS pattern is a pattern located in one or two slots in time domain and in one or two PRBs in frequency domain; the CSI-RS pattern is obtained by aggregating, through TDM and/or FDM, at least one CDM type pattern; the CDM type comprises at least one of the following:
a 16-port pattern type, a 32-port pattern type, an 8-port pattern type, a 4-port pattern type, and a 2-port pattern type;
the target configuration information comprises: the number of antenna ports, density information, CDM type information, CDM group frequency-domain position indication information, and CDM group time-domain position indication information; one CDM group corresponds to one CDM type.

37. A non-transitory readable storage medium, wherein the non-transitory readable storage medium stores a computer program, and the computer program is configured to cause a processor to execute the method according to any one of claims 1 to 32.
